(19) 

Europäisches
Patentamt
European
Patent Office
Office européen
des brevets

(11) **EP 4 485 833 A1**

(12) **EUROPEAN PATENT APPLICATION**
published in accordance with Art. 153(4) EPC

(43) Date of publication:
**01.01.2025 Bulletin 2025/01**

(21) Application number: **23777959.0**

(22) Date of filing: **22.03.2023**

(51) International Patent Classification (IPC):
**H04L 5/00** *(2006.01)*

(52) Cooperative Patent Classification (CPC):
**H04L 5/00**

(86) International application number:
**PCT/CN2023/083109**

(87) International publication number:
**WO 2023/185588 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 CN 202210336427**

(71) Applicant: **Huawei Technologies Co., Ltd.
Shenzhen, Guangdong 518129 (CN)**

(72) Inventors:
• **CAI, Shijie
Shenzhen, Guangdong 518129 (CN)**

• **LIU, Xianda
Shenzhen, Guangdong 518129 (CN)**
• **GAO, Xiang
Shenzhen, Guangdong 518129 (CN)**
• **ZHANG, Zhening
Shenzhen, Guangdong 518129 (CN)**
• **LIU, Kunpeng
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND COMMUNICATION APPARATUS**

(57)     Embodiments of this application disclose a communication method and a communication apparatus. The method includes: A terminal device sends an uplink reference signal to an access network device based on a sending pattern, where an uplink reference signal resource of the uplink reference signal includes N ports, the N ports in the sending pattern are carried on two or more OFDM symbols, or the N ports in the sending pattern are carried on two or more frequency domain combs and one OFDM symbol, and N is an integer greater than 4; and the terminal device receives precoding indication information from the access network device, where the precoding indication information indicates precoding for transmitting uplink data, the precoding indication information is obtained by the access network device based on the uplink reference signal, and rows of a matrix corresponding to the precoding are in one-to-one correspondence with the N ports. The N ports included in the same uplink reference signal resource are carried on the two or more OFDM symbols, and this can improve orthogonality between ports in the N ports.

FIG. 5

**Description**

This application claims priority to Chinese Patent Application No. 202210336427.3, filed with the China National Intellectual Property Administration on March 31, 2022 and entitled "COMMUNICATION METHOD AND COMMUNICATION APPARATUS", which is incorporated herein by reference in its entirety.

**TECHNICAL FIELD**

This application relates to the communication field, and in particular, to a communication method and a communication apparatus.

**BACKGROUND**

A channel sounding reference signal (sounding reference signal, SRS) is an uplink reference signal sent by a terminal device to an access network device (for example, a base station). The SRS is used by the access network device to obtain an uplink (uplink, UL) channel of the terminal device; or the SRS is used by the access network device to obtain a downlink (downlink, DL) channel of the terminal device based on channel reciprocity, to perform data scheduling on the terminal device based on channel information. Each SRS resource includes $N_{\mathrm{ap}}^{\mathrm{SRS}} \in \{1,2,4,8\}$ SRS ports, and each SRS port corresponds to a specific time-frequency-code resource. In an ideal case, the SRS ports are orthogonal, and each SRS port corresponds to a physical antenna or a virtual antenna of the terminal device. When orthogonality between SRS ports in one SRS resource is weak, and a terminal device sends an SRS that occupies the SRS resource, coherent transmission occurs between different antennas. As a result, quality of the sent SRS is poor. Therefore, to ensure signal quality of an SRS sent by a terminal device, a time-frequency mapping solution of an SRS resource that enables strong orthogonality between SRS ports needs to be studied.

**SUMMARY**

Embodiments of this application disclose a communication method and a communication apparatus.

According to a first aspect, an embodiment of this application provides a communication method. The method includes: A terminal device sends an uplink reference signal to an access network device based on a sending pattern, where an uplink reference signal resource of the uplink reference signal includes N ports, there are at least two groups of ports in the N ports in the sending pattern, each group of ports corresponds to a same time-frequency resource, different groups of ports correspond to different time-frequency resources, the N ports in the sending pattern are carried on two or more orthogonal frequency division multiplexing (orthogonal frequency division multiplexing, OFDM) symbols, or the N ports in the sending pattern are carried on two or more frequency domain combs and one OFDM symbol, and N is an integer greater than 4; and the terminal device receives precoding indication information from the access network device, where the precoding indication information indicates precoding for transmitting uplink data, and rows of a matrix corresponding to the precoding are in one-to-one correspondence with the N ports.

Optionally, the precoding indication information is obtained by the access network device based on the uplink reference signal.

Optionally, transmit antennas for transmitting the uplink data correspond to ports in a plurality of uplink reference signals. That a terminal device sends an uplink reference signal to an access network device based on a sending pattern may be replaced with that a terminal device sends an uplink reference signal based on configuration information and a sending pattern, where the configuration information indicates the terminal device to send the uplink reference signal based on the sending pattern. The configuration information may be configuration information of the uplink reference signal resource, for example, a channel sounding reference signal (sounding reference signal, SRS) resource. That the N ports in the sending pattern are carried on two or more OFDM symbols may be replaced with that the sending pattern indicates that the N ports are carried on two or more OFDM symbols. That the N ports in the sending pattern are carried on two or more frequency domain combs and one OFDM symbol may be replaced with that the sending pattern indicates that the N ports are carried on two or more frequency domain combs and one OFDM symbol.

In this embodiment of this application, the terminal device sends the uplink reference signal to the access network device based on the sending pattern, so that the N (greater than 4) ports included in the uplink reference signal resource of the uplink reference signal are carried on the two or more OFDM symbols. The N ports included in the same uplink reference signal resource are carried on the two or more OFDM symbols, and this can improve orthogonality between ports in the N ports. The terminal device sends the uplink reference signal to the access network device based on the sending pattern, so that the N (greater than 4) ports included in the uplink reference signal resource of the uplink reference signal are carried on the two or more frequency domain combs and the OFDM symbol. The precoding indication information indicates that the rows of the matrix corresponding to the precoding for transmitting the uplink data of the terminal device are in one-to-one correspondence with the N ports included in the uplink reference signal resource. This provides a solution of using the uplink reference signal resource including the N ports to carry the uplink reference signal.

In a possible implementation, the method further includes: The terminal device determines the sending pattern from two or more patterns based on a CS reference value indicator ($\boldsymbol{n}_{\mathrm{SRS}}^{\mathrm{cs}}$) that is of the uplink reference signal and that is included in configuration information of the uplink reference signal resource.

In this implementation, the terminal device determines the sending pattern from the two or more patterns based on the CS reference value indicator ($\boldsymbol{n}_{\mathrm{SRS}}^{\mathrm{cs}}$) of the uplink reference signal. This can quickly and accurately determine the sending pattern appropriate for sending the uplink reference signal by the terminal device.

In a possible implementation, the method further includes: The terminal device determines a CS value of each SRS port based on the CS reference value indicator and an index of each SRS port in the N ports, where the CS value of each port is used to generate a sending sequence of the ports.

In this implementation, a CS value of each SRS port can be quickly and accurately determined.

In a possible implementation, that the terminal device determines a CS value of each SRS port based on the CS reference value indicator and an index of each SRS port in the N ports includes: The terminal device determines $n_{\mathrm{SRS}}^{\mathrm{cs},i}$, where $n_{\mathrm{SRS}}^{\mathrm{cs},i} = (n_{\mathrm{SRS}}^{\mathrm{cs}} + p_i - 1000) \bmod n_{\mathrm{SRS}}^{\mathrm{cs,max}}$, $p_i$ represents an index (for example, 1001) of an $i^{\mathrm{th}}$ port in the N ports, $n_{\mathrm{SRS}}^{\mathrm{cs,max}}$ represents a maximum CS indicator, and $n_{\mathrm{SRS}}^{\mathrm{cs}}$ represents the CS reference value indicator; and the terminal device determines a CS value $\alpha_i$ of the $i^{\mathrm{th}}$ port in the N ports based on $n_{\mathrm{SRS}}^{\mathrm{cs},i}$, where $\alpha_i = 2\pi \dfrac{n_{\mathrm{SRS}}^{\mathrm{cs},i}}{n_{\mathrm{SRS}}^{\mathrm{cs,max}}}$.

In this implementation, when $p_i \in \{1000, 1001, 1003, 1004\}$, $n_{\mathrm{SRS}}^{\mathrm{cs},i} = (n_{\mathrm{SRS}}^{\mathrm{cs}} + p_i - 1000) \bmod n_{\mathrm{SRS}}^{\mathrm{cs,max}}$, or when $p_i \in \{1002, 1003, 1005, 1006\}$,

$$n_{\mathrm{SRS}}^{\mathrm{cs},i} = (n_{\mathrm{SRS}}^{\mathrm{cs}} + p_i - 1002) \bmod n_{\mathrm{SRS}}^{\mathrm{cs,max}}.$$

$$k_{\mathrm{TC}}^{(p_i)} = \begin{cases} \left(\overline{k}_{\mathrm{TC}} + K_{\mathrm{TC}}/2\right) \bmod K_{\mathrm{TC}} & \text{if } p_i \in \{1002, 1003, 1005, 1006\} \\ \overline{k}_{\mathrm{TC}} & \text{if } p_i \in \{1000, 1001, 1003, 1004\} \end{cases}$$

, so that CSs occupied by ports located in a same frequency domain comb are uneven, a large interval is ensured for remaining CSs, and the remaining CSs are reserved for occupation by another terminal device.

In a possible implementation, that the terminal device determines a CS value of each SRS port based on the CS reference value indicator and an index of each SRS port in the N ports includes: The terminal device determines $n_{\mathrm{SRS}}^{\mathrm{cs},i} = \left(n_{\mathrm{SRS}}^{\mathrm{cs}} + \dfrac{n_{\mathrm{SRS}}^{\mathrm{cs,max}} \lfloor (p_i - 1000)/K \rfloor}{N_{\mathrm{ap}}^{\mathrm{SRS}}/K}\right) \bmod n_{\mathrm{SRS}}^{\mathrm{cs,max}}$ based on the CS reference value indicator, the index of each SRS port in the N ports, $n_{\mathrm{SRS}}^{\mathrm{cs,max}}$, and $N_{\mathrm{ap}}^{\mathrm{SRS}}$ where $K \in \{1,2\}$, $n_{\mathrm{SRS}}^{\mathrm{cs,max}}$ represents a maximum CS indicator, $n_{\mathrm{SRS}}^{\mathrm{cs}}$ represents the CS reference value indicator, $p_i$ represents an index (for example, 1001) of an $i^{\mathrm{th}}$ port in the N ports, and $N_{\mathrm{ap}}^{\mathrm{SRS}}$ is 8; and the terminal device determines a CS value $\alpha_i$ of the $i^{\mathrm{th}}$ port in the N ports based on $n_{\mathrm{SRS}}^{\mathrm{cs},i}$, where $\alpha_i = 2\pi \dfrac{n_{\mathrm{SRS}}^{\mathrm{cs},i}}{n_{\mathrm{SRS}}^{\mathrm{cs,max}}}$.

In this manner, CS values that are equally spaced and spaced as large as possible can be assigned to ports located within a same time-frequency resource.

In a possible implementation, the method further includes: The terminal device determines the sending pattern from two or more patterns based on a CS reference value indicator, a maximum CS indicator, and a quantity of symbols that are included in configuration information of the uplink reference signal resource, where the two or more patterns include at least two of a first pattern, a second pattern, a third pattern, and a fourth pattern, and the quantity of symbols indicates a quantity of OFDM symbols that carry the N ports; in the first pattern, a comb corresponding to a first port set of the N ports is

$(\overline{k}_{TC} + K_{TC}/2)_{\text{mod}} K_{TC}$, a comb corresponding to a second port set of the N ports is $\overline{k}_{TC}$, an index of an OFDM symbol corresponding to two ports in the first port set is l, an OFDM index corresponding to the other two ports in the first port set is (l+n), an OFDM index corresponding to two ports in the second port set is l, an index of an OFDM symbol corresponding to the other two ports in the second port set is (l+n), n is an integer greater than or equal to 1, and l is an integer greater than or equal to 0; in the second pattern, a comb corresponding to a first port set and a second port set of the N ports is $\overline{k}_{TC}$, an index of an OFDM symbol corresponding to the first port set is l, an index of an OFDM symbol corresponding to the second port set is (l+n), and l and n are integers greater than or equal to 1; in the third pattern, a comb corresponding to a first port set of the N ports is $(\overline{k}_{TC} + K_{TC}/2)_{\text{mod}} K_{TC}$, a comb corresponding to a second port set of the N ports is $\overline{k}_{TC}$, an index of an OFDM symbol corresponding to the first port set and the second port set is l, and l is an integer greater than or equal to 1; in the fourth pattern, combs respectively corresponding to four port sets of the N ports are $(\overline{k}_{TC} + K_{TC}/2)_{\text{mod}} K_{TC}$, $(\overline{k}_{TC} + K_{TC}/4)_{\text{mod}} K_{TC}$, $(\overline{k}_{TC} + 3 * K_{TC}/4)_{\text{mod}} K_{TC}$, and $\overline{k}_{TC}$, an index of an OFDM symbol corresponding to the four port sets is l, and l is an integer greater than or equal to 1; and ports included in the first port set are different from ports included in the second port set.

In this implementation, the terminal device determines the sending pattern from the two or more patterns based on a CS reference value ($n_{SRS}^{cs}$), a maximum CS ($n_{SRS}^{cs,max}$), and the quantity of symbols that are of the uplink reference signal. This can quickly and accurately determine the sending pattern appropriate for sending the uplink reference signal by the terminal device.

In a possible implementation, the method further includes: The terminal device determines the sending pattern from two or more patterns based on a CS reference value indicator and a maximum CS indicator that are of the uplink reference signal and that are included in configuration information of the uplink reference signal resource.

In this implementation, the terminal device determines the sending pattern from the two or more patterns based on a CS reference value ($n_{SRS}^{cs}$) and a maximum CS ($n_{SRS}^{cs,max}$) that are of the uplink reference signal. This can quickly and accurately determine the sending pattern appropriate for sending the uplink reference signal by the terminal device.

According to a second aspect, an embodiment of this application provides another communication method. The method includes: An access network device receives an uplink reference signal sent by a terminal device, where an uplink reference signal resource of the uplink reference signal includes N ports, the N ports are carried on two or more orthogonal frequency division multiplexing OFDM symbols, or the N ports are carried on two or more frequency domain combs and one OFDM symbol, and N is an integer greater than 4; and the access network device sends precoding indication information to the terminal device, where the precoding indication information indicates precoding for transmitting uplink data of the terminal device, the precoding indication information is obtained by the access network device based on the uplink reference signal, and rows of a matrix corresponding to the precoding are in one-to-one correspondence with the N ports.

In this embodiment of this application, the access network device receives the uplink reference signal sent by the terminal device, where the uplink reference signal resource includes the N (greater than 4) ports; and sends the precoding indication information to the terminal device, where the precoding indication information indicates that the rows of the matrix corresponding to the precoding for transmitting the uplink data of the terminal device are in one-to-one correspondence with the N ports included in the uplink reference signal resource. This provides a solution of using the uplink reference signal resource including the N ports to carry the uplink reference signal.

According to a third aspect, an embodiment of this application provides another communication method. The method includes: A terminal device sends a plurality of uplink reference signals based on configuration information of a plurality of uplink reference signal resources; and the terminal device receives precoding and transport layer quantity indication information, where the precoding and transport layer quantity indication information indicates precoding and a quantity of transport layers for transmitting uplink data of the terminal device, the precoding and transport layer quantity indication information corresponds to the plurality of uplink reference signals, the quantity of transport layers is less than or equal to a sum of quantities of ports included in the plurality of uplink reference signals, a quantity of rows of a matrix corresponding to the precoding is the sum of quantities of ports included in the plurality of uplink reference signals, and the rows of the matrix are in one-to-one correspondence with the ports included in the plurality of uplink reference signals. The sum of quantities of ports included in the plurality of uplink reference signals may be understood as a sum of quantities of ports included in the plurality of uplink reference signal resources.

Optionally, the precoding and transport layer quantity indication information is obtained by an access network device based on the uplink reference signal.

Optionally, transmit antennas for transmitting the uplink data correspond to the ports in the plurality of uplink reference signals.

Optionally, the precoding and transport layer quantity indication information includes a plurality of pieces of first indication information, and the plurality of pieces of first indication information are in one-to-one correspondence with the plurality of uplink reference signal resources.

Optionally, the quantity of transport layers for the uplink data is a sum of quantities of transport layers indicated in the plurality of pieces of first indication information.

In this embodiment of this application, the uplink reference signals corresponding to codebook-based uplink data transmission are carried on the plurality of uplink reference signal resources. This method can support a flexible resource configuration of the uplink reference signals, and a corresponding precoding indication and a corresponding transport layer quantity indication.

According to a fourth aspect, an embodiment of this application provides another communication method. The method includes: An access network device receives a plurality of uplink reference signals from a terminal device; the access network device generates precoding and transport layer quantity indication information based on the plurality of pieces of uplink reference information; and the access network device sends the precoding and transport layer quantity indication information to the terminal device, where the precoding and transport layer quantity indication information indicates precoding and a quantity of transport layers for transmitting uplink data of the terminal device, the precoding and transport layer quantity indication information corresponds to the plurality of uplink reference signals, the quantity of transport layers is less than or equal to a sum of quantities of ports included in the plurality of uplink reference signals, a quantity of rows of a matrix corresponding to the precoding is the sum of quantities of ports included in the plurality of uplink reference signals, and the rows of the matrix are in one-to-one correspondence with the ports included in the plurality of uplink reference signals.

In this embodiment of this application, the access network device sends the precoding and transport layer quantity indication information to the terminal device, where the precoding and transport layer quantity indication information corresponds to the plurality of uplink reference signals, and there is no need to send one piece of precoding and transport layer quantity indication information for each uplink reference signal. This can reduce signaling overheads.

According to a fifth aspect, an embodiment of this application provides a terminal device. The terminal device has a function of implementing an operation in the method embodiment in the first aspect. The function may be implemented by hardware, or may be implemented by hardware executing corresponding software. The hardware or software includes one or more modules or units that correspond to the foregoing function. In a possible implementation, the terminal device includes a transceiver module and a processing module. The processing module is configured to control, based on a sending pattern, the transceiver module to send an uplink reference signal to an access network device, where an uplink reference signal resource of the uplink reference signal includes N ports, the N ports in the sending pattern correspond to different time-frequency resources, the N ports in the sending pattern are carried on two or more OFDM symbols, or the N ports in the sending pattern are carried on two or more frequency domain combs and one OFDM symbol, and N is an integer greater than 4. The transceiver module is further configured to receive precoding indication information from the access network device, where the precoding indication information indicates precoding for transmitting uplink data, the precoding indication information is obtained by the access network device based on the uplink reference signal, and rows of a matrix corresponding to the precoding are in one-to-one correspondence with the N ports. That the processing module is configured to control, based on a sending pattern, the transceiver module to send an uplink reference signal to an access network device may be replaced with that the processing module is configured to control, based on configuration information, the transceiver module to send an uplink reference signal based on a sending pattern, where the configuration information indicates the terminal device to send the uplink reference signal based on the sending pattern.

In a possible implementation of the first aspect or the fifth aspect, the uplink reference signal is an SRS, the uplink reference signal resource is an SRS resource, the uplink data is carried on a physical uplink shared channel (physical uplink shared channel, PUSCH) or a physical uplink control channel (physical uplink control channel, PUCCH), and N is 8; and the method further includes: The terminal device maps the uplink data to antenna ports based on the precoding, where a quantity of the antenna ports is the same as a quantity of ports in the SRS resource, and the antenna ports are in one-to-one correspondence with the ports in the SRS resource.

This implementation provides a resource mapping solution in which the SRS resource includes eight SRS ports, and supports SRS resource design in a scenario in which there is a large quantity of SRS ports.

In a possible implementation of the first aspect or the fifth aspect, N is 8, and the N ports in the sending pattern (indicated) are carried on two frequency domain combs whose frequency domain comb numbers are 2 and two OFDM symbols, and two ports located on a same frequency domain comb and OFDM symbol correspond to two different (cyclic shifts, CSs); the N ports in the sending pattern (indicated) are carried on one frequency domain comb whose frequency domain comb number is 2 and two OFDM symbols, and four ports located on a same frequency domain comb and OFDM symbol correspond to four different CS values; or the N ports in the sending pattern (indicated) are carried on two frequency domain combs whose frequency domain comb numbers are 2 and one OFDM symbol, and four ports located on a same frequency domain comb and OFDM symbol correspond to four different CS values.

In this implementation, a base station can flexibly configure the sending pattern based on a channel status of the terminal device. Specifically, when an uplink transmit power of the terminal device is limited, a sending pattern that occupies a plurality of OFDM symbols may be configured. However, when the base station has a high requirement on phase precision of the terminal device, a sending pattern that occupies one OFDM symbol may be configured.

In a possible implementation of the fifth aspect, the processing module is further configured to determine the sending pattern from two or more patterns based on a CS reference value indicator ($\boldsymbol{n}_{\text{SRS}}^{\text{cs}}$) that is of the uplink reference signal and that is included in configuration information of the uplink reference signal resource. In this implementation, the terminal device determines the sending pattern from the two or more patterns based on the CS reference value indicator ($\boldsymbol{n}_{\text{SRS}}^{\text{cs}}$) of the uplink reference signal, and switches the sending pattern based on redundant information in the CS reference value indicator. This can simplify configuration signaling design.

In a possible implementation of the fifth aspect, the processing module is further configured to determine a CS value of each SRS port based on the CS reference value indicator and an index of each SRS port in the N ports, where the CS value of each port is used to generate a sending sequence of the ports.

In a possible implementation of the fifth aspect, the processing module is specifically configured to: determine $n_{\text{SRS}}^{\text{cs},i}$, where $n_{\text{SRS}}^{\text{cs},i} = (n_{\text{SRS}}^{\text{cs}} + p_i - 1000) \bmod n_{\text{SRS}}^{\text{cs,max}}$, $p_i$ represents an index (for example, 1001) of an ith port in the N ports, $n_{\text{SRS}}^{\text{cs,max}}$ represents a maximum CS indicator, and $n_{\text{SRS}}^{\text{cs}}$ represents the CS reference value indicator; and determine a CS value $\alpha_i$ of the ith port in the N ports based on $n_{\text{SRS}}^{\text{cs},i}$, where $\alpha_i = 2\pi \frac{n_{\text{SRS}}^{\text{cs},i}}{n_{\text{SRS}}^{\text{cs,max}}}$.

In this implementation, $n_{\text{SRS}}^{\text{cs},i} = (n_{\text{SRS}}^{\text{cs}} + p_i - 1000) \bmod n_{\text{SRS}}^{\text{cs,max}}$, so that CSs occupied by ports located in a same frequency domain comb are uneven, a large interval is ensured for remaining CSs, and the remaining CSs are reserved for occupation by another terminal device.

In a possible implementation of the fifth aspect, the processing module is specifically configured to: determine $n_{\text{SRS}}^{\text{cs},i} = \left(n_{\text{SRS}}^{\text{cs}} + \frac{n_{\text{SRS}}^{\text{cs,max}}\lfloor(p_i-1000)/K\rfloor}{N_{\text{ap}}^{\text{SRS}}/K}\right) \bmod n_{\text{SRS}}^{\text{cs,max}}$ based on the CS reference value indicator, an index of each SRS port in the N ports, $n_{\text{SRS}}^{\text{cs,max}}$, and $N_{\text{ap}}^{\text{SRS}}$, where K $\in$ {1,2}, $n_{\text{SRS}}^{\text{cs,max}}$ represents a maximum CS indicator, $n_{\text{SRS}}^{\text{cs}}$ represents the CS reference value indicator, $p_i$ represents an index (for example, 1001) of an ith port in the N ports, and $N_{\text{ap}}^{\text{SRS}}$ is 8; and determine a CS value $\alpha_i$ of the ith port in the N ports based on $n_{\text{SRS}}^{\text{cs},i}$, where $\alpha_i = 2\pi \frac{n_{\text{SRS}}^{\text{cs},i}}{n_{\text{SRS}}^{\text{cs,max}}}$.

In a possible implementation of the first aspect or the fifth aspect, the configuration information further includes a comb location indicator $\overline{k}_{\text{TC}}$ and a frequency domain comb number $K_{\text{TC}}$ that are of the uplink reference signal, and the two or more patterns include at least two of a first pattern, a second pattern, and a third pattern; in the first pattern, a comb corresponding to a first port set of the N ports is $(\overline{k}_{\text{TC}} + K_{\text{TC}}/2)_{\bmod} K_{\text{TC}}$, a comb corresponding to a second port set of the N ports is $\overline{k}_{\text{TC}}$, an index of an OFDM symbol corresponding to two ports in the first port set is l, an OFDM index corresponding to the other two ports in the first port set is (l+n), an OFDM index corresponding to two ports in the second port set is l, an index of the OFDM symbol corresponding to the other two ports in the second port set is (l+n), n is an integer greater than or equal to 1, and l is an integer greater than or equal to 0; in the second pattern, an comb corresponding to a first port set and a second port set of the N ports is $\overline{k}_{\text{TC}}$, an index of an OFDM symbol corresponding to the first port set is l, an index of an OFDM symbol corresponding to the second port set is (l+n), n is an integer greater than or equal to 1, and l is an integer greater than or equal to 0; in the third pattern, a comb corresponding to a first port set of the N ports is $(\overline{k}_{\text{TC}} + K_{\text{TC}}/2)_{\bmod} K_{\text{TC}}$, a comb corresponding to a second port set of the N ports is $\overline{k}_{\text{TC}}$, an index of an OFDM symbol corresponding to the first port set and the second port set is l, and l is an integer greater than or equal to 0; and ports included in the first port set are different from ports included in the second port set.

In this implementation, the manners in which the N ports in the sending pattern are carried on the frequency domain combs and the OFDM symbols can enable strong orthogonality between the ports; and one SRS resource occupying a plurality of OFDM symbols can increase a power spectral density of each SRS port.

In a possible implementation of the first aspect or the fifth aspect, N is 8, and the N ports in the sending pattern are carried on two frequency domain combs whose frequency domain comb numbers are 4 and two OFDM symbols, and two ports located on a same frequency domain comb and OFDM symbol correspond to two different CS values; the N ports in the sending pattern are carried on one frequency domain comb whose frequency domain comb number is 4 and two OFDM symbols, and four ports located on a same frequency domain comb and OFDM symbol correspond to four different CS values; the N ports in the sending pattern are carried on two frequency domain combs whose frequency domain comb numbers are 4 and one OFDM symbol, and four ports located on a same frequency domain comb and OFDM symbol correspond to four different CS values; or the N ports in the sending pattern are carried on four frequency domain combs whose frequency domain comb numbers are 4 and one OFDM symbol, and two ports located on a same frequency domain comb and OFDM symbol correspond to two different CS values.

In this implementation, the manners in which the N ports in the sending pattern are carried on the frequency domain combs and the OFDM symbols can enable strong orthogonality between the ports.

In a possible implementation of the first aspect or the fifth aspect, the configuration information further includes a comb location indicator $\overline{k}_{TC}$ and a frequency domain comb number $K_{TC}$, and the two or more patterns include at least two of a first pattern, a second pattern, a third pattern, and a fourth pattern; in the first pattern, a comb corresponding to a first port set of the N ports is $(\overline{k}_{TC} + K_{TC}/2)_{\bmod} K_{TC}$, a comb corresponding to a second port set of the N ports is $\overline{k}_{TC}$, an index of an OFDM symbol corresponding to two ports in the first port set is l, an OFDM index corresponding to the other two ports in the first port set is (l+n), an OFDM index corresponding to two ports in the second port set is l, an index of an OFDM symbol corresponding to the other two ports in the second port set is (l+n), n is an integer greater than or equal to 1, and l is an integer greater than or equal to 0; in the second pattern, a comb corresponding to a first port set and a second port set of the N ports is $\overline{k}_{TC}$, an index of an OFDM symbol corresponding to the first port set is l, an index of an OFDM symbol corresponding to the second port set is (l+n), and l and n are integers greater than or equal to 1; in the third pattern, a comb corresponding to a first port set of the N ports is $(\overline{k}_{TC} + K_{TC}/2)_{\bmod} K_{TC}$, a comb corresponding to a second port set of the N ports is $\overline{k}_{TC}$, an index of an OFDM symbol corresponding to the first port set and the second port set is l, and l is an integer greater than or equal to 1; in the fourth pattern, combs respectively corresponding to four port sets of the N ports are $(\overline{k}_{TC} + K_{TC}/2)_{\bmod} K_{TC}$, $(\overline{k}_{TC} + K_{TC}/4)_{\bmod} K_{TC}$, $(\overline{k}_{TC} + 3 * K_{TC}/4)_{\bmod} K_{TC}$, and $\overline{k}_{TC}$, an index of an OFDM symbol corresponding to the four port sets is l, and l is an integer greater than or equal to 1; and ports included in the first port set are different from ports included in the second port set.

In this implementation, the manners in which the N ports in the sending pattern are carried on the frequency domain combs and the OFDM symbols can enable strong orthogonality between the ports; and one SRS resource occupying a plurality of OFDM symbols can increase a power spectral density of each SRS port.

In a possible implementation of the fifth aspect, the processing module is further configured to determine the sending pattern from two or more patterns based on a CS reference value indicator, a maximum CS indicator, and a quantity of symbols that are included in configuration information of the uplink reference signal resource, where the two or more patterns include at least two of a first pattern, a second pattern, a third pattern, and a fourth pattern, and the quantity of symbols indicates a quantity of OFDM symbols that carry the N ports; in the first pattern, a comb corresponding to a first port set of the N ports is $(\overline{k}_{TC} + K_{TC}/2)_{\bmod} K_{TC}$, a comb corresponding to a second port set of the N ports is $\overline{k}_{TC}$, an index of an OFDM symbol corresponding to two ports in the first port set is l, an OFDM index corresponding to the other two ports in the first port set is (l+n), an OFDM index corresponding to two ports in the second port set is l, an index of an OFDM symbol corresponding to the other two ports in the second port set is (l+n), n is an integer greater than or equal to 1, and l is an integer greater than or equal to 0; in the second pattern, a comb corresponding to a first port set and a second port set of the N ports is $\overline{k}_{TC}$, an index of an OFDM symbol corresponding to the first port set is l, an index of an OFDM symbol corresponding to the second port set is (l+n), and l and n are integers greater than or equal to 1; in the third pattern, a comb corresponding to a first port set of the N ports is $(\overline{k}_{TC} + K_{TC}/2)_{\bmod} K_{TC}$, a comb corresponding to a second port set of the N ports is $\overline{k}_{TC}$, an index of an OFDM symbol corresponding to the first port set and the second port set is l, and l is an integer greater than or equal to 1; in the fourth pattern, combs respectively corresponding to four port sets of the N ports are $(\overline{k}_{TC} + K_{TC}/2)_{\bmod} K_{TC}$, $(\overline{k}_{TC} + K_{TC}/4)_{\bmod} K_{TC}$, $(\overline{k}_{TC} + 3 * K_{TC}/4)_{\bmod} K_{TC}$, and $\overline{k}_{TC}$, an index of an OFDM symbol corresponding to the four port sets is l, and l is an integer greater than or equal to 1; and ports included in the first port set are different from ports included in the second port set.

In this implementation, the terminal device determines the sending pattern from the two or more patterns based on a CS reference value ( $\boldsymbol{n}_{\mathrm{SRS}}^{\mathrm{cs}}$ ), a maximum CS ( $\boldsymbol{n}_{\mathrm{SRS}}^{\mathrm{cs,max}}$ ), and the quantity of symbols that are of the uplink reference signal. This can quickly and accurately determine the sending pattern appropriate for sending the uplink reference signal by the terminal device.

In a possible implementation of the first aspect or the fifth aspect, N is 8, and the N ports in the sending pattern are carried on two frequency domain combs whose frequency domain comb numbers are 8 and two OFDM symbols, and two ports located on a same frequency domain comb and OFDM symbol correspond to two different CS values; the N ports in the sending pattern are carried on one frequency domain comb whose frequency domain comb number is 8 and two OFDM symbols, and four ports located on a same frequency domain comb and OFDM symbol correspond to four different CS values; the N ports in the sending pattern are carried on two frequency domain combs whose frequency domain comb numbers are 8 and one OFDM symbol, and four ports located on a same frequency domain comb and OFDM symbol correspond to four different CS values; or the N ports in the sending pattern are carried on four frequency domain combs whose frequency domain comb numbers are 8 and one OFDM symbol, and two ports located on a same frequency domain comb and OFDM symbol correspond to two different CS values.

In this implementation, the manners in which the N ports in the sending pattern are carried on the frequency domain combs and the OFDM symbols can enable strong orthogonality between the ports.

In a possible implementation of the first aspect or the fifth aspect, a transmit power of the uplink reference signal is determined based on the sending pattern; and when the sending pattern indicates that the N ports are carried on $N_{symb}^{SRS}$ OFDM symbols, a maximum transmit power of each port does not exceed $P_{\mathrm{CMAX}} \times N_{symb}^{SRS} / N_{\mathrm{ap}}^{\mathrm{SRS}}$, $P_{\mathrm{CMAX}}$ is a maximum transmit power configured for the terminal device, $N_{symb}^{SRS}$ is an integer greater than 1, and $N_{\mathrm{ap}}^{\mathrm{SRS}}$ is equal to N.

In this implementation, the N ports are carried on the $N_{symb}^{SRS}$ OFDM symbols, so that an actual transmit power of the SRS corresponding to the SRS resource is $N_{symb}^{SRS}$ times a total transmit power. This can improve channel measurement precision.

For technical effect of the possible implementations of the fifth aspect, refer to the descriptions of the technical effect of the first aspect or the possible implementations of the first aspect.

According to a sixth aspect, an embodiment of this application provides an access network device. The access network device has a function of implementing an operation in the method embodiment in the second aspect. The function may be implemented by hardware, or may be implemented by hardware executing corresponding software. The hardware or software includes one or more modules or units that correspond to the foregoing function. In a possible implementation, the access network device includes a transceiver module and a processing module. The transceiver module is configured to receive an uplink reference signal sent by a terminal device, where an uplink reference signal resource of the uplink reference signal includes N ports, the N ports are carried on two or more orthogonal frequency division multiplexing OFDM symbols, or the N ports are carried on two or more frequency domain combs and one OFDM symbol, and N is an integer greater than 4. The processing module is configured to perform processing based on the uplink reference signal to obtain precoding indication information. The transceiver module is further configured to send the precoding indication information to the terminal device, where the precoding indication information indicates precoding for transmitting uplink data of the terminal device, the precoding indication information is obtained by the access network device based on the uplink reference signal, and rows of a matrix corresponding to the precoding are in one-to-one correspondence with the N ports.

In a possible implementation of the second aspect or the sixth aspect, the uplink reference signal is an SRS, the uplink reference signal resource is an SRS resource, the uplink data is carried on a physical uplink shared channel PUSCH or a physical uplink control channel PUCCH, N is 8, the precoding is used by the terminal device to map the uplink data to antenna ports, a quantity of the antenna ports is the same as a quantity of ports in the SRS resource, and the antenna ports are in one-to-one correspondence with the ports in the SRS resource.

In this implementation, the precoding is used by the terminal device to map the uplink data to the antenna ports, and the antenna ports are in one-to-one correspondence with the ports in the SRS resource. This provides a resource mapping solution in which the SRS resource includes eight SRS ports.

In a possible implementation of the second aspect or the sixth aspect, N is 8, and the N ports are carried on two frequency domain combs whose frequency domain comb numbers are 2 and two OFDM symbols, and two ports located on a same frequency domain comb and OFDM symbol correspond to two different (cyclic shifts, CSs); the N ports are carried on one frequency domain comb whose frequency domain comb number is 2 and two OFDM symbols, and four ports located on a same frequency domain comb and OFDM symbol correspond to four different CS values; or the N ports are carried on two frequency domain combs whose frequency domain comb numbers are 2 and one OFDM symbol, and four ports located on a same frequency domain comb and OFDM symbol correspond to four different CS values.

In this implementation, the manners in which the N ports are carried on the frequency domain combs and the OFDM symbols can enable strong orthogonality between the ports.

In a possible implementation of the second aspect or the sixth aspect, N is 8, and the N ports are carried on two frequency domain combs whose frequency domain comb numbers are 4 and two OFDM symbols, and two ports located on a same frequency domain comb and OFDM symbol correspond to two different CS values; the N ports are carried on one frequency domain comb whose frequency domain comb number is 4 and two OFDM symbols, and four ports located on a same frequency domain comb and OFDM symbol correspond to four different CS values; the N ports are carried on two frequency domain combs whose frequency domain comb numbers are 4 and one OFDM symbol, and four ports located on a same frequency domain comb and OFDM symbol correspond to four different CS values; or the N ports are carried on four frequency domain combs whose frequency domain comb numbers are 4 and one OFDM symbol, and two ports located on a same frequency domain comb and OFDM symbol correspond to two different CS values.

In this implementation, the manners in which the N ports are carried on the frequency domain combs and the OFDM symbols can enable strong orthogonality between the ports.

In a possible implementation of the second aspect or the sixth aspect, the N ports are carried on two frequency domain combs whose frequency domain comb numbers are 8 and two OFDM symbols, and two ports located on a same frequency domain comb and OFDM symbol correspond to two different CS values; the N ports are carried on one frequency domain comb whose frequency domain comb number is 8 and two OFDM symbols, and four ports located on a same frequency domain comb and OFDM symbol correspond to four different CS values; the N ports are carried on two frequency domain combs whose frequency domain comb numbers are 8 and one OFDM symbol, and four ports located on a same frequency domain comb and OFDM symbol correspond to four different CS values; or the N ports are carried on four frequency domain combs whose frequency domain comb numbers are 8 and one OFDM symbol, and two ports located on a same frequency domain comb and OFDM symbol correspond to two different CS values.

In this implementation, the manners in which the N ports are carried on the frequency domain combs and the OFDM symbols can enable strong orthogonality between the ports.

In a possible implementation of the second aspect or the sixth aspect, a comb corresponding to a first port set of the N ports is $(\overline{k}_{TC} + K_{TC}/2)_{\text{mod}} K_{TC}$, a comb corresponding to a second port set of the N ports is $\overline{k}_{TC}$, an index of an OFDM symbols corresponding to two ports in the first port set is l, an OFDM index corresponding to the other two ports in the first port set is (l+n), an OFDM index corresponding to two ports in the second port set is l, an index of an OFDM symbol corresponding to the other two ports in the second port set is (l+n), n is an integer greater than or equal to 1, l is an integer greater than or equal to 0, $K_{TC}$ is a frequency domain comb number of the uplink reference signal, and $\overline{k}_{TC}$ is a comb location indicator of the uplink reference signal; and ports included in the first port set are different from ports included in the second port set.

In this implementation, the index of the OFDM symbol corresponding to the first port set is l, and the index of the OFDM symbol corresponding to the second port set is (l+n). This can improve orthogonality between the ports, and one SRS resource occupying a plurality of OFDM symbols can increase a power spectral density of each SRS port.

In a possible implementation of the second aspect or the sixth aspect, a comb corresponding to a first port set and a second port set of the N ports is $\overline{k}_{TC}$, an index of an OFDM symbol corresponding to the first port set is l, an index of an OFDM symbol corresponding to the second port set is (l+n), n is an integer greater than or equal to 1, l is an integer greater than or equal to 0, $K_{IC}$ is a frequency domain comb number of the uplink reference signal, and $\overline{k}_{TC}$ is a comb location indicator of the uplink reference signal; and ports included in the first port set are different from ports included in the second port set.

In this implementation, the index of the OFDM symbol corresponding to the first port set is l, and the index of the OFDM symbol corresponding to the second port set is (l+n). This can improve orthogonality between the ports, and one SRS resource occupying a plurality of OFDM symbols can increase a power spectral density of each SRS port.

In a possible implementation of the second aspect or the sixth aspect, a comb corresponding to a first port set of the N ports is $(\overline{k}_{TC} + K_{TC}/2)_{\text{mod}} K_{TC}$, a comb corresponding to a second port set of the N ports is $\overline{k}_{TC}$, an index of an OFDM symbol corresponding to the first port set and the second port set is l, l is an integer greater than or equal to 0, $K_{TC}$ is a frequency domain comb number of the uplink reference signal, and $\overline{k}_{TC}$ is a comb location indicator of the uplink reference signal; and ports included in the first port set are different from ports included in the second port set.

In this implementation, the index of the OFDM symbol corresponding to the first port set and the second port set is l. This can reduce overheads of the OFDM symbols. The comb corresponding to the first port set is $(\overline{k}_{TC} + K_{TC}/2)_{\text{mod}} K_{TC}$, and the comb corresponding to the second port set is $\overline{k}_{TC}$. This can enable strong orthogonality between the ports.

In a possible implementation of the second aspect or the sixth aspect, combs respectively corresponding to four port sets of the N ports are $(\overline{k}_{TC} + K_{TC}/2)_{\text{mod}} K_{TC}$, $(\overline{k}_{TC} + K_{TC}/4)_{\text{mod}} K_{TC}$, $(\overline{k}_{TC} + 3*K_{TC}/4)_{\text{mod}} K_{TC}$, and $\overline{k}_{TC}$, an index of an OFDM symbol corresponding to the four port sets is l, l is an integer greater than or equal to 1, the port sets in the four port set include different ports, $K_{TC}$ is a frequency domain comb number of the uplink reference signal, and $\overline{k}_{TC}$ is the comb location indicator of the uplink reference signal.

In this implementation, the combs respectively corresponding to the four port sets are $(\overline{k}_{TC} + K_{TC}/2)_{\text{mod}} K_{TC}$, $(\overline{k}_{TC} + K_{TC}/4)_{\text{mod}} K_{TC}$, $(\overline{k}_{TC} + 3*K_{TC}/4)_{\text{mod}} K_{TC}$, and $\overline{k}_{TC}$. This can enable strong orthogonality between the ports.

In a possible implementation of the second aspect or the sixth aspect, a transmit power of the uplink reference signal is determined by the terminal device based on the sending pattern; when the sending pattern indicates that the N ports are carried on $N_{symb}^{SRS}$ OFDM symbols, a maximum transmit power of each port does not exceed $P_{\text{CMAX}} \times N_{symb}^{SRS}/N_{ap}^{SRS}$, $P_{\text{CMAX}}$ is a maximum transmit power configured for the terminal device, $N_{symb}^{SRS}$ is an integer greater than 1, and $N_{ap}^{SRS}$ is equal to N.

In this implementation, the N ports are carried on the $N_{symb}^{SRS}$ OFDM symbols, so that an actual transmit power of the SRS corresponding to the SRS resource is $N_{symb}^{SRS}$ times a total transmit power. This can improve channel measurement precision.

For technical effect of the possible implementations of the sixth aspect, refer to the descriptions of the technical effect of the second aspect or the possible implementations of the second aspect.

According to a seventh aspect, an embodiment of this application provides another terminal device. The terminal device has a function of implementing an operation in the method embodiment in the third aspect. The function may be implemented by hardware, or may be implemented by hardware executing corresponding software. The hardware or software includes one or more modules or units that correspond to the foregoing function. In a possible implementation, the terminal device includes a transceiver module and a processing module. The processing module is configured to generate a plurality of uplink reference signals based on configuration information of a plurality of uplink reference signal resources. The transceiver module is configured to send the plurality of uplink reference signals. The transceiver module is further configured to receive precoding and transport layer quantity indication information, where the precoding and transport layer quantity indication information indicates precoding and a quantity of transport layers for transmitting uplink data of the terminal device, the precoding and transport layer quantity indication information corresponds to the plurality of uplink reference signals, the quantity of transport layers is less than or equal to a sum of quantities of ports included in the plurality of uplink reference signals, a quantity of rows of a matrix corresponding to the precoding is the sum of quantities of ports included in the plurality of uplink reference signals, and the rows of the matrix are in one-to-one correspondence with the ports included in the plurality of uplink reference signals. The sum of quantities of ports included in the plurality of uplink reference signals may be understood as a sum of quantities of ports included in the plurality of uplink reference signal resources.

In a possible implementation of the third aspect or the seventh aspect, the plurality of uplink reference signals are a plurality of SRSs, the plurality of uplink reference signal resources are a plurality of SRS resources, the plurality of uplink reference signal resources include two first SRS resources, and the first SRS resource includes four ports.

In this implementation, the plurality of uplink reference signal resources include two first SRS resources, the first SRS resource includes four ports, and the rows of the matrix corresponding to the precoding are in one-to-one correspondence with the ports included in the plurality of uplink reference signals. This can obtain, based on the precoding and transport layer quantity indication information, a time-frequency resource mapping manner of the ports (for example, eight ports) included in the plurality of uplink reference signals.

In a possible implementation of the third aspect or the seventh aspect, the two first SRS resources include an SRS resource 1 and an SRS resource 2, an antenna port corresponding to a port of the SRS resource 1 is in a first polarization direction, and an antenna port corresponding to a port of the SRS resource 2 is in a second polarization direction; or for an $i^{th}$ stream of uplink data transmission, precoding corresponding to a port of the SRS resource 1 is $v_i$, precoding corresponding to a port of the SRS resource 2 is $\varphi_i \times v_i$, $\varphi_i = e^{j\pi n/2}$, and n is an integer; and a quantity of elements in $v_i$ is 4, and i is a positive integer.

In another possible implementation, the precoding and transport layer quantity indication information includes two transport indication fields, the two transport indication fields are in one-to-one correspondence with two uplink reference signal resources, and the quantity of transport layers for the uplink data is a sum of quantities of transport layers indicated by the two transport indication fields; and the precoding and transport layer quantity indication information further includes phase indication information $\varphi_i$ indicating phase rotation between antennas corresponding to two uplink reference signal resources.

In another possible implementation, the precoding and transport layer quantity indication information includes one precoding beam indication field, one transport layer quantity indication field, and one piece of phase indication information $\varphi_i$. The precoding beam indication field indicates a transmit beam corresponding to each uplink reference signal resource, the transport layer quantity indication field indicates a quantity of transport layers for the uplink data, and the phase indication information $\varphi_i$ indicates phase rotation between antennas corresponding to two uplink reference signal resources.

This implementation can ensure that antenna ports in a same polarization direction are simultaneously used for transmission on a same SRS resource, so that beams in two polarization directions can be uniformly indicated. For each stream of data, only an inter-polarization phase deviation needs to be additionally indicated. This reduces DCI indication precoding overheads.

Optionally, in the foregoing implementation, a coherence capability of the terminal device is full coherence.

Optionally, in the foregoing implementation, the precoding is a full coherence codeword.

In a possible implementation of the third aspect or the seventh aspect, the plurality of uplink reference signals are a plurality of SRSs, and the plurality of uplink reference signal resources are a plurality of SRS resources; the plurality of uplink reference signal resources include two second SRS resources and one first SRS resource, the first SRS resource includes four ports, and the second SRS resource includes two ports; or the plurality of uplink reference signal resources include four second SRS resources, and the second SRS resource includes two ports.

In this implementation, the rows of the matrix corresponding to the precoding are in one-to-one correspondence with the ports included in the plurality of uplink reference signals. The terminal device can obtain, based on the precoding and transport layer quantity indication information, a time-frequency resource mapping manner of the ports (for example, eight ports) included in the plurality of uplink reference signals.

In a possible implementation of the third aspect or the seventh aspect, the uplink reference signal resources are SRS resources, a k$^{th}$ SRS resource in the plurality of SRS resources corresponds to an $(i_1^k, \ldots, i_{m_k}^k)^{th}$ layer of the uplink data, and a row in which a non-zero element in an $(i_1^k, \ldots, i_{m_k}^k)^{th}$ column of the precoding is located is in one-to-one correspondence with a port of the k$^{th}$ SRS resource, $m_k$ is a positive integer less than or equal to a quantity of ports in the k$^{th}$ SRS resource, and k is an integer greater than 0; any two of the plurality of SRS resources correspond to different layers of the uplink data; and the uplink data corresponds to a PUSCH or a PUCCH.

Optionally, in the foregoing implementation, the precoding is a partial coherence codeword.

Optionally, in the foregoing implementation, a coherence capability of the terminal device is partial coherence.

In this implementation, antenna ports that can be used for coherent transmission are located in a same SRS resource. This can ensure that the antenna ports for coherent transmission are simultaneously used for transmission, and improve channel measurement precision of a base station. In addition, during precoding design, phases need to be correspondingly indicated for ports in only one SRS resource. This simplifies the precoding design.

In a possible implementation of the third aspect or the seventh aspect, the precoding and transport layer quantity indication information includes a plurality of transport indication fields, and the plurality of transport indication fields are in one-to-one correspondence with the plurality of uplink reference signal resources; rows of the matrix corresponding to the precoding in the plurality of transport indication fields are in one-to-one correspondence with the ports in the corresponding uplink reference signal resources; and a quantity of transport layers of the uplink data is a sum of quantities of transport layers indicated by the plurality of transport indication fields.

In this implementation, the rows of the matrix corresponding to the precoding in the plurality of transport indication fields are in one-to-one correspondence with the ports in the corresponding uplink reference signal resources. The terminal device can obtain, based on the precoding and transport layer quantity indication information, related information of the plurality of SRS resources for transmitting the uplink data on a PUSCH or a PUCCH, and signaling overheads are low.

In a possible implementation of the third aspect or the seventh aspect, the plurality of uplink reference signal resources are a plurality of SRS resources, the precoding and transport layer quantity indication information is precoding indication information, the precoding and transport layer indication information includes a sounding reference signal resource indicator (SRS resource indicator, SRI), a transmission rank indicator (transmission rank indicator, TRI), and a transmission precoding matrix indicator (transmission precoding matrix indicator, TPMI), the SRI indicates two or more of the plurality of SRS resources, the TPMI indicates the precoding, and the TRI indicates a transport layer.

In this implementation, the SRI indicates the plurality of SRS resources, and a total quantity of ports included in the plurality of uplink reference signals in the rows of the precoding matrix. The terminal device can obtain, based on the precoding and transport layer quantity indication information, related information of the plurality of SRS resources for transmitting the uplink data on a PUSCH or a PUCCH, and signaling overheads are low.

In a possible implementation of the third aspect or the seventh aspect, each of the plurality of SRS resources indicated by the SRI independently corresponds to a data layer sent on the PUSCH or the PUCCH. In other words, the plurality of SRS resources indicated by the SRI correspond to independent layers and layer mappings.

In this implementation, the plurality of SRS resources indicated by the SRI independently correspond to a data stream sent on the PUSCH or the PUCCH, and an 8-port (that is, eight SRS ports) SRS resource can be split and sent on a plurality of OFDM symbols. This supports an increase of an SRS transmit power, and improves channel measurement precision.

For technical effect of the possible implementations of the seventh aspect, refer to the descriptions of the technical effect of the third aspect or the possible implementations of the third aspect.

According to an eighth aspect, an embodiment of this application provides another access network device. The access network device has a function of implementing an operation in the method embodiment in the fourth aspect. The function may be implemented by hardware, or may be implemented by hardware executing corresponding software. The hardware or software includes one or more modules or units that correspond to the foregoing function. In a possible implementation, the access network device includes a transceiver module and a processing module. The transceiver module is configured to receive a plurality of uplink reference signals from a terminal device. The processing module is configured to generate precoding and transport layer quantity indication information based on the plurality of pieces of uplink reference information. The transceiver module is further configured to send the precoding and transport layer quantity indication information to the terminal device, where the precoding and transport layer quantity indication information indicates precoding and a quantity of transport layers for transmitting uplink data of the terminal device, the precoding and transport layer quantity indication information corresponds to the plurality of uplink reference signals, the quantity of transport layers is less than or equal to a sum of quantities of ports included in the plurality of uplink reference signals, a quantity of rows of a matrix corresponding to the precoding is the sum of quantities of ports included in the plurality of uplink reference signals, and the rows of the matrix are in one-to-one correspondence with the ports included in the plurality of uplink reference signals.

In a possible implementation of the fourth aspect or the eighth aspect, the plurality of uplink reference signals are a plurality of SRSs, the plurality of uplink reference signal resources are a plurality of SRS resources, the plurality of uplink reference signal resources include two first SRS resources, and the first SRS resource includes four ports.

In this implementation, the plurality of uplink reference signal resources include two first SRS resources, the first SRS resource includes four ports, and the rows of the matrix corresponding to the precoding are in one-to-one correspondence with the ports included in the plurality of uplink reference signals. An 8-port (that is, eight SRS ports) SRS can be sent in a manner of supporting aggregation of the plurality of SRS resources.

In a possible implementation of the fourth aspect or the eighth aspect, the precoding is a full coherence codeword, the two first SRS resources include an SRS resource 1 and an SRS resource 2, an antenna port corresponding to a port of the SRS resource 1 is in a first polarization direction, and an antenna port corresponding to a port of the SRS resource 2 is in a second polarization direction; or for an $i^{\text{th}}$ stream, precoding corresponding to a port of the SRS resource 1 is $v_i$, precoding corresponding to a port of the SRS resource 2 is $\varphi_i \times v_i$, $\varphi_i = e^{j\pi n/2}$, and n is an integer; and a quantity of elements in $v_i$ is 4, and i is an integer.

This implementation can ensure that related transmission cannot be performed between antenna ports.

In a possible implementation of the fourth aspect or the eighth aspect, the plurality of uplink reference signals are a plurality of SRSs, and the plurality of uplink reference signal resources are a plurality of SRS resources; the plurality of uplink reference signal resources include two second SRS resources and one first SRS resource, the first SRS resource includes four ports, and the second SRS resource includes two ports; or the plurality of uplink reference signal resources include four second SRS resources, and the second SRS resource includes two ports.

In this implementation, the rows of the matrix corresponding to the precoding are in one-to-one correspondence with the ports included in the plurality of uplink reference signals. An 8-port (that is, eight SRS ports) SRS can be sent in a manner of supporting aggregation of the plurality of SRS resources. Because a time-frequency resource location of each SRS resource can be independently configured, the 8-port SRS can be split and sent on a plurality of OFDM symbols. This can support an increase of an SRS transmit power, and improve channel measurement precision. In addition, in this manner, design of 2-port SRS and 4-port SRS resources supported by an existing protocol and design of reusing an existing TPMI codebook to a maximum extent can be used.

In a possible implementation of the fourth aspect or the eighth aspect, the precoding is a partial coherence codeword, the uplink reference signal resources are SRS resources, a $k^{\text{th}}$ SRS resource in the plurality of SRS resources corresponds to an $(i_1^k, \ldots, i_{m_k}^k)^{\text{th}}$ layer of the uplink data, and a row in which a non-zero element in an $(i_1^k, \ldots, i_{m_k}^k)^{\text{th}}$ column of the precoding is located is in one-to-one correspondence with a port of the $k^{\text{th}}$ SRS resource, $m_k$ is a positive integer less than or equal to a quantity of ports in the $k^{\text{th}}$ SRS resource, and k is an integer greater than 0; any two of the plurality of SRS resources correspond to different layers of the uplink data; and the uplink data corresponds to a PUSCH or a PUCCH.

In a possible implementation of the fourth aspect or the eighth aspect, the precoding and transport layer quantity indication information includes a plurality of transport indication fields, and the plurality of transport indication fields are in one-to-one correspondence with the plurality of uplink reference signal resources; rows of the matrix corresponding to the precoding in the plurality of transport indication fields are in one-to-one correspondence with the ports in the corresponding uplink reference signal resources; and a quantity of transport layers of the uplink data is a sum of quantities of transport layers indicated by the plurality of transport indication fields.

In this implementation, the rows of the matrix corresponding to the precoding in the plurality of transport indication fields are in one-to-one correspondence with the ports in the corresponding uplink reference signal resources. The terminal device can obtain, based on the precoding and transport layer quantity indication information, related information of the plurality of SRS resources for transmitting the uplink data on a PUSCH or a PUCCH, and signaling overheads are low.

In a possible implementation of the fourth aspect or the eighth aspect, the plurality of uplink reference signal resources are a plurality of SRS resources, the precoding and transport layer quantity indication information is precoding indication information, the precoding and transport layer indication information includes an SRI, a TRI, and a TPMI, the SRI indicates two or more of the plurality of SRS resources, the TPMI indicates the precoding, and the TRI indicates a transport layer.

In this implementation, the SRI indicates the plurality of SRS resources, and a total quantity of ports included in the plurality of uplink reference signals in the rows of the precoding matrix. The terminal device can obtain, based on the precoding and transport layer quantity indication information, related information of the plurality of SRS resources for transmitting the uplink data on a PUSCH or a PUCCH, and signaling overheads are low.

In a possible implementation of the fourth aspect or the eighth aspect, each of the plurality of SRS resources indicated by the SRI independently corresponds to a data stream sent on the PUSCH or the PUCCH. In other words, the plurality of SRS resources indicated by the SRI correspond to independent streams and stream mappings.

In this implementation, the plurality of SRS resources indicated by the SRI independently correspond to a data stream sent on the PUSCH or the PUCCH, and an 8-port SRS can be split and sent on a plurality of OFDM symbols. This supports an increase of an SRS transmit power, and improves channel measurement precision.

In a possible implementation of the fourth aspect or the eighth aspect, F ports included in the SRS resources indicated by the SRI correspond to N consecutive rows of the matrix, and the SRS resources indicated by the SRI correspond to the rows in ascending order of indexes in the matrix.

This implementation can reuse existing 2-port and 4-port SRS resource design.

For technical effect of the possible implementations of the eighth aspect, refer to the descriptions of the technical effect of the fourth aspect or the possible implementations of the fourth aspect.

According to a ninth aspect, this application provides a communication apparatus. The communication apparatus includes a processor, and the processor may be configured to execute computer-executable instructions stored in a memory, so that the method according to any one of the first aspect or the possible implementations of the first aspect is performed, the method according to any one of the second aspect or the possible implementations of the second aspect is performed, the method according to any one of the third aspect or the possible implementations of the third aspect is performed, or the method according to any one of the fourth aspect or the possible implementations of the fourth aspect is performed.

In embodiments of this application, in a process of performing the foregoing methods, a process of sending information in the foregoing methods may be understood as a process of outputting information according to instructions of the processor. When the information is output, the processor outputs the information to a transceiver, so that the transceiver transmits the information. After the information is output by the processor, the information may further need other processing, and then reaches the transceiver. Similarly, when the processor receives input information, the transceiver receives the information, and inputs the information into the processor. Further, after the transceiver receives the information, other processing may need to be performed on the information before the information is input into the processor.

An operation like sending and/or receiving related to the processor may be generally understood as an instruction output based on the processor if there is no special description, or if the operation does not conflict with an actual function or internal logic of the operation in related descriptions.

In an implementation process, the processor may be a processor specially configured to perform these methods, or may be a processor, for example, a general-purpose processor that executes computer instructions in a memory to perform these methods. For example, the processor may be configured to execute a program stored in the memory. When the program is executed, the communication apparatus is enabled to perform the method according to any one of the first aspect or the possible implementations of the first aspect. In a possible implementation, the memory is located outside the communication apparatus. In a possible implementation, the memory is located inside the communication apparatus.

In embodiments of this application, the processor and the memory may alternatively be integrated into one component. In other words, the processor and the memory may alternatively be integrated together.

In a possible implementation, the communication apparatus further includes a transceiver. The transceiver is configured to receive a packet, send a packet, or the like.

According to a tenth aspect, this application provides another communication apparatus. The communication apparatus includes a processing circuit and an interface circuit. The interface circuit is configured to obtain data or output data. The processing circuit is configured to perform the corresponding method according to any one of the first aspect or the possible implementations of the first aspect, the processing circuit is configured to perform the corresponding method according to any one of the second aspect or the possible implementations of the second aspect, the processing circuit is configured to perform the corresponding method according to any one of the third aspect or the possible implementations of the third aspect, or the processing circuit is configured to perform the corresponding method according to any one of the fourth aspect or the possible implementations of the fourth aspect.

According to an eleventh aspect, this application provides a computer-readable storage medium. The computer-readable storage medium is configured to store a computer program. When the computer program is run on a computer, the method according to any one of the first aspect or the possible implementations of the first aspect is performed, the method according to any one of the second aspect or the possible implementations of the second aspect is performed, the method according to any one of the third aspect or the possible implementations of the third aspect is performed, or the method according to any one of the fourth aspect or the possible implementations of the fourth aspect is performed.

According to a twelfth aspect, this application provides a computer program product. The computer program product includes a computer program or computer code. When the computer program product runs on a computer, the method according to any one of the first aspect or the possible implementations of the first aspect is performed, the method according to any one of the second aspect or the possible implementations of the second aspect is performed, the method according to any one of the third aspect or the possible implementations of the third aspect is performed, or the method according to any one of the fourth aspect or the possible implementations of the fourth aspect is performed.

According to a thirteenth aspect, this application provides a communication system, including the terminal device according to any one of the fifth aspect or the possible implementations of the fifth aspect and the access network device according to any one of the sixth aspect or the possible implementations of the sixth aspect.

According to a fourteenth aspect, this application provides another communication system, including the terminal device according to any one of the seventh aspect or the possible implementations of the seventh aspect and the access network device according to any one of the eighth aspect or the possible implementations of the eighth aspect.

## BRIEF DESCRIPTION OF DRAWINGS

To describe technical solutions in embodiments of this application or in the background more clearly, the following describes the accompanying drawings for describing embodiments of this application or the background.

FIG. 1 shows examples of three combs with different comb numbers according to this application;
FIG. 2 shows examples of both a scanning bandwidth and a frequency modulation bandwidth according to this application;
FIG. 3 is a diagram of comparison between transmit powers according to an embodiment of this application;
FIG. 4 shows an example of a wireless communication system according to an embodiment of this application;
FIG. 5 is an interactive flowchart of a communication method according to an embodiment of this application;
FIG. 6 is an interactive flowchart of another communication method according to an embodiment of this application;
FIG. 7 shows examples of a first pattern, a second pattern, and a third pattern according to an embodiment of this application;
FIG. 8 is an interactive flowchart of another communication method according to an embodiment of this application;
FIG. 9 shows examples of a first pattern, a second pattern, a third pattern, and a fourth pattern according to an embodiment of this application;
FIG. 10 is an interactive flowchart of another communication method according to an embodiment of this application;
FIG. 11 shows examples of a first pattern, a second pattern, a third pattern, and a fourth pattern according to an embodiment of this application;
FIG. 12 is an interactive flowchart of another communication method according to an embodiment of this application;
FIG. 13 is an interactive flowchart of another communication method according to an embodiment of this application;
FIG. 14 is a diagram of an antenna architecture according to an embodiment of this application;
FIG. 15 is a diagram of another antenna architecture according to an embodiment of this application;
FIG. 16 is a diagram of another antenna architecture according to an embodiment of this application.
FIG. 17 is a diagram of a structure of a communication apparatus 1700;
FIG. 18 is a diagram of a structure of another communication apparatus 180 according to an embodiment of this application; and
FIG. 19 is a diagram of a structure of another communication apparatus 190 according to an embodiment of this application.

## DESCRIPTION OF EMBODIMENTS

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiment" mentioned in this specification means that specific features, structures, or characteristics described in combination with an embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that an embodiment described in this specification may be combined with another embodiment.

Terms used in the following embodiments of this application are merely intended to describe specific embodiments, but are not intended to limit this application. The terms "one", "a", "an", "the", and "this" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more.

First, some concepts in embodiments of this application are described.

1. SRS, SRS port, and SRS comb (comb)

An SRS is an uplink reference signal sent by a terminal device to an access network device (for example, a base station). The access network device obtains a UL channel of the terminal device based on the SRS sent by the terminal device; or the access network device obtains a DL channel of the terminal device based on channel reciprocity, to perform data scheduling on the UE based on channel information.

An SRS resource is semi-statically configured by a base station by using a higher-layer parameter, and includes:

$N_{\mathrm{ap}}^{\mathrm{SRS}} \in \{1,2,4\}$ SRS ports (antenna ports) $\{p_i\}_{i=0}^{N_{\mathrm{ap}}^{\mathrm{SRS}}-1}$, where $p_i = 1000 + i$. In existing design, only that each SRS resource includes only a maximum of four SRS ports is supported. Each SRS port corresponds to a specific time-frequency-code resource. In an ideal situation, each SRS port is orthogonal. Each SRS port corresponds to a physical antenna or a virtual antenna of UE. For codebook-based uplink transmission, ports of SRS resources are in one-to-one correspondence with physical antennas of a terminal device. $N_{\mathrm{symb}}^{\mathrm{SRS}} \in \{1,2,4,8,10,12,14\}$ consecutive OFDM symbols.

A symbol-level time domain start location in a slot is $l_0 \in \{0,1, ...,13\}$.

A start frequency domain location is $k_0$.

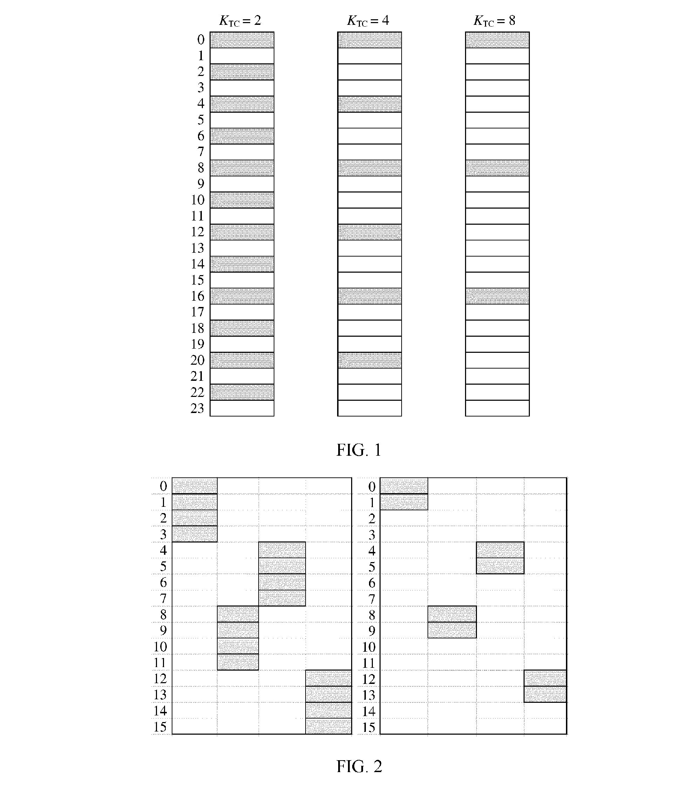

SRS comb (comb): Frequency domain subcarriers on a comb of an SRS are evenly spaced. A comb number $K_{\mathrm{TC}} \in \{2,4,8\}$ is semi-statically configured by a base station by using a higher-layer parameter, and determines a quantity of subcarriers between any two adjacent subcarriers on the comb. FIG. 1 shows examples of three combs (or referred to as frequency domain combs) with different comb numbers according to this application. In FIG. 1, each box represents one resource element (resource element, RE) in frequency domain, and a black box is an example of an RE location occupied by one comb at a different comb number.

2. SRS scanning bandwidth and frequency-hopping bandwidth

An SRS scanning bandwidth and frequency-hopping bandwidth, and a frequency-hopping periodicity are determined based on higher-layer parameters and a table predefined in a protocol. When a base station does not configure a frequency scaling factor $P_{\mathrm{F}}$, the SRS scanning bandwidth is a bandwidth range corresponding to a channel obtained by the base station based on an SRS; the SRS frequency-hopping bandwidth is a bandwidth range corresponding to a channel obtained by the base station after single SRS sending, where the frequency-hopping bandwidth is less than or equal to the scanning bandwidth; and the frequency-hopping periodicity is a quantity of SRS sending times needed when the base station obtains a channel corresponding to the scanning bandwidth. Alternatively, when the base station configures a frequency scaling factor $P_{\mathrm{F}}$ by using a higher-layer parameter, the SRS scanning bandwidth and frequency-hopping bandwidth and the frequency-hopping periodicity remain unchanged. However, because a bandwidth for single SRS sending changes to $1/P_{\mathrm{F}}$ of an original bandwidth, in this case, the scanning bandwidth is $P_{\mathrm{F}}$ times a bandwidth range corresponding to a channel obtained by the base station based on an SRS, and the SRS frequency-hopping bandwidth is $P_{\mathrm{F}}$ times the bandwidth range corresponding to the channel obtained by the base station after the single SRS sending. FIG. 2 shows examples of both a scanning bandwidth and a frequency-hopping bandwidth according to this application. In FIG. 2, each box represents one resource block (resource block, RB) in frequency domain, the SRS scanning bandwidth is 16 RBs, the frequency-hopping bandwidth is 4 RBs, and a frequency-hopping periodicity is 4. $P_{\mathrm{F}}$ is not configured in the left figure, and that $P_{\mathrm{F}}=2$ is configured in the right figure.

3. SRS cyclic shift (cyclic shift, CS)

Sequences $r_{u,v}^{(\alpha,\delta)}(n)$ used by LTE and NR SRSs are cyclic shifts of base sequences (base sequences) $\bar{r}_{u,v}$

(n):

$$r_{u,v}^{(\alpha,\delta)}(n) = e^{j\alpha n}\overline{r}_{u,v}(n), 0 < n \le M_{ZC}.$$

Herein, $\alpha$ is a cyclic shift value and is a real number; $\delta = \log_2(K_{TC})$ and is an integer; $u$ and $v$ are indexes of a base sequence in an SRS base sequence group and are integers; $j$ is an imaginary unit; $M_{ZC}$ is a length of an SRS sequence and is a positive integer; and $n$ is an index of an element in the SRS sequence and is an integer. Sequence elements are sequentially mapped, in ascending order of indexes, to subcarriers in ascending order of subcarrier indexes corresponding to an SRS resource.

A cyclic shift $\alpha_i$ corresponding to an SRS port $p_i$ is defined according to the following formulas:

$$\alpha_i = 2\pi \frac{n_{SRS}^{cs,i}}{n_{SRS}^{cs,max}} \quad (1);$$

and

$$n_{SRS}^{cs,i} = \begin{cases} \left(n_{SRS}^{cs} + \frac{n_{SRS}^{cs,max}\lfloor (p_i - 1000)/2 \rfloor}{N_{ap}^{SRS}/2}\right) \bmod n_{SRS}^{cs,max} & \text{if } N_{ap}^{SRS} = 4 \text{ and } n_{SRS}^{cs,max} = 6 \\ \left(n_{SRS}^{cs} + \frac{n_{SRS}^{cs,max}(p_i - 1000)}{N_{ap}^{SRS}}\right) \bmod n_{SRS}^{cs,max} & \text{otherwise} \end{cases} \quad (2).$$

Herein, $n_{SRS}^{cs,max}$ is a maximum cyclic shift value, and is separately defined based on a value of $K_{TC}$. Refer to Table 1.

**Table 1**

| $K_{TC}$ | $n_{SRS}^{cs,max}$ |
|---|---|
| 2 | 8 |
| 4 | 12 |
| 8 | 6 |

A meaning of $n_{SRS}^{cs,max}$ may be understood as equally dividing delay domain into $n_{SRS}^{cs,max}$ parts, or may be understood as equally dividing a phase value $2\pi$ into $n_{SRS}^{cs,max}$ parts, and each cyclic shift value corresponds to a start point of each part. $n_{SRS}^{cs} \in \{0, 1, \dots, n_{SRS}^{cs,max} - 1\}$ is a cyclic shift reference value, and is semi-statically configured by a base station by using a higher-layer parameter *transmissionComb*.

For a same base sequence, different SRS sequences may be obtained by using different cyclic shift values $\alpha$. When $\alpha_1$ and $\alpha_2$ meet $\alpha_1 \bmod 2\pi \neq \alpha_2 \bmod 2\pi$, a sequence obtained by using a base sequence $\overline{r}_{u,v}(n)$ and the cyclic shift $\alpha_1$ and a sequence obtained by using the base sequence $\overline{r}_{u,v}(n)$ and the cyclic shift $\alpha_2$ are orthogonal to each other, that is, a cross-correlation coefficient is zero. A cross-correlation coefficient of sequences $s_1(m)$ and $s_2(m)$, $m = 0,1,...,M-1$ whose lengths are $M$ is defined as $\left|\frac{1}{M}\sum_{m=0}^{M-1} s_1(m)s_2^*(m)\right|$. Because the sequences are orthogonal to each other, the base station may allocate the SRS sequences obtained by using the same base sequence and different cyclic shift values to different users, these users can send these SRS sequences on a same time-frequency resource. When channels between the users and the base station are flat within the length of the SRS sequence, these SRS sequences do not cause inter-user interference.

According to Formula (1) and Formula (2), when a quantity of SRS ports=2, and $n_{SRS}^{cs,max} = 8$, a difference between CSs corresponding to the two ports is 4. A specific occupied CS value is determined by a configuration of $n_{\text{SRS}}^{\text{cs}}$.

When a quantity of SRS ports=2, and $n_{\text{SRS}}^{\text{cs,max}} = $ 12, a difference between CSs corresponding to the two ports is 3. Except in a case of $N_{\text{ap}}^{\text{SRS}} = $ 4 and $n_{\text{SRS}}^{\text{cs,max}}=6$, this allocation manner enables an interval between CS values corresponding to two ports in one SRS resource to be as large as possible.

4. Comb allocation for an SRS port

A frequency domain start location $k_0^{(p_i)}$ of an SRS port $p_i$ is defined according to the following formula:

$$k_0^{(p_i)} = \bar{k}_0^{(p_i)} + n_{\text{offset}}^{\text{FH}} + n_{\text{offset}}^{\text{RPFS}} \quad (3).$$

Herein,

$$\bar{k}_0^{(p_i)} = n_{\text{shift}} N_{\text{sc}}^{\text{RB}} + \left( k_{\text{TC}}^{(p_i)} + k_{\text{offset}}^{l'} \right) \bmod K_{\text{TC}} \quad (4);$$

$$n_{\text{offset}}^{\text{FH}} = \sum_{b=0}^{B_{\text{SRS}}} m_{\text{SRS},b} N_{\text{sc}}^{\text{RB}} n_b \quad (5);$$

and

$$n_{\text{offset}}^{\text{RPFS}} = N_{\text{sc}}^{\text{RB}} m_{\text{SRS},B_{\text{SRS}}} \left( \left( k_{\text{F}} + k_{\text{hop}} \right) \bmod P_{\text{F}} \right) / P_{\text{F}} \quad (6).$$

Calculation formulas of a frequency-hopping offset $n_{\text{offset}}^{\text{FH}}$ and some probe offsets $n_{\text{offset}}^{\text{RPFS}}$, $n_{\text{shift}}$, and $k_{\text{offset}}^{l'}$ are weakly associated with this application, and details are not described herein.

A comb $k_{\text{TC}}^{(p_i)}$ occupied by an SRS port $p_i$ is defined according to the following formula:

$$k_{\text{TC}}^{(p_i)} =$$

$$\begin{cases} \left( \bar{k}_{\text{TC}} + K_{\text{TC}}/2 \right) \bmod K_{\text{TC}} & \text{if } N_{\text{ap}}^{\text{SRS}} = 4, p_i \in \{1001, 1003\}, \text{ and } n_{\text{SRS}}^{\text{cs,max}} = 6 \\ \left( \bar{k}_{\text{TC}} + K_{\text{TC}}/2 \right) \bmod K_{\text{TC}} & \text{if } N_{\text{ap}}^{\text{SRS}} = 4, p_i \in \{1001, 1003\}, \text{ and } n_{\text{SRS}}^{\text{cs}} \in \{ n_{\text{SRS}}^{\text{cs,max}}/2, ..., n_{\text{SRS}}^{\text{cs,max}} - 1 \} \\ \bar{k}_{\text{TC}} & \text{otherwise} \end{cases}$$

$$(7).$$

Herein, $\bar{k}_{\text{TC}} \{0, 1, ..., K_{\text{TC}} - 1\}$ is a comb offset and is configured by a base station by using a higher-layer parameter *transmissionComb.*

It can be learned from the foregoing Formula (7) that, when $N_{\text{ap}}^{\text{SRS}} = 4$ and $n_{\text{SRS}}^{\text{cs,max}} \neq$ 6, whether each port of one SRS resource occupies two combs or one comb may be indicated through configuring $n_{\text{SRS}}^{\text{cs}}$. For example, when $n_{\text{SRS}}^{\text{cs}} \in \{ n_{\text{SRS}}^{\text{cs,max}}/2, ..., n_{\text{SRS}}^{\text{cs,max}} - 1 \}$, combs occupied by ports 1001 and 1003 are different from combs occupied by ports 1000 and 1002. For another example, when $n_{\mathrm{SRS}}^{\mathrm{cs}} \in \left\{0, \ldots, n_{\mathrm{SRS}}^{\mathrm{cs,max}}/2 - 1\right\}$, combs occupied by ports 1001 and 1003 are the same as combs occupied by ports 1000 and 1002.

5. Codebook-based PUSCH transmission

In codebook-based PUSCH transmission, a phase (a TPMI) and a quantity of transport streams of each transmit antenna used by a terminal device to transmit a PUSCH need to be indicated. Each transmit antenna used by the terminal device to send the PUSCH is in one-to-one correspondence with each port of an SRS resource corresponding to the PUSCH. Precoding indication information for an access network device to schedule the PUSCH includes an SRI, a TRI, and the TPMI. The SRI indicates the SRS resource (used to determine a transmit antenna for sending the PUSCH) corresponding to the PUSCH, the TRI indicates a transport stream of the PUSCH, and the TPMI indicates a transmit phase of the transmit antenna corresponding to the PUSCH. A PUSCH sending manner defined in an existing protocol is as follows: y=[$y^{(0)}(i)y^{(1)}(i)...y^{(v-1)}(i)$]$^T$, where $i$=0, 1, ..., $M_{symb}^{layer} - 1$, $M_{symb}^{layer}$ represents a quantity of modulation symbols at a transport layer, v is a quantity of transport streams of the PUSCH, y is an $i^{th}$ modulation symbol mapped to a $k^{th}$ stream, and k=0, ..., v-1. y is mapped to the transmit antenna corresponding to the PUSCH ($\{p_0, p_1, ..., p_{\rho-1}\}$, where a physical meaning is each SRS port in the SRS resource corresponding to the PUSCH) based on a precoding matrix W, and data transmitted on each transmit antenna is z. A formula for mapping y to the transmit antenna corresponding to the PUSCH based on the precoding matrix W is as follows:

$$\begin{bmatrix} z^{(p_0)}(i) \\ z^{(p_1)}(i) \\ \vdots \\ z^{(p_{(\rho-1)})}(i) \end{bmatrix} = W \begin{bmatrix} y^{(0)}(i) \\ y^{(1)}(i) \\ \vdots \\ y^{(v-1)}(i) \end{bmatrix} \quad (8).$$

Herein, $z^{(p_0)}(i)$ indicates data transmitted on a transmit antenna $p_0$.

In the codebook-based PUSCH transmission, the SRI usually indicates one SRS resource, and a quantity of rows in the TPMI is a quantity of SRS ports in the SRS resource, and the rows are in one-to-one correspondence with the SRS ports.

The following describes a current solution of allocating a comb and a CS to each port of one SRS resource.

Currently, both the combs and the CSs allocated to the SRS ports in the SRS resource are for a case in which there are a maximum of four ports. For example, when $K_{TC}$ = 2 in a 4-port SRS resource (namely, an SRS resource including four ports), using $n_{\mathrm{SRS}}^{\mathrm{cs}}$ to indicate whether the four ports included in the SRS resource are located in one comb or two combs is supported. By flexibly allocating a quantity of combs occupied by one SRS resource, an access network device may select, based on a channel status of a terminal device, a quantity of combs occupied by one SRS resource. For example, when the terminal device is in a non-line-of-sight (non-line-of-sight, NLOS) scenario, and a channel delay spread (delay spread) is large, a CS interval of adjacent numbered ports (occupied CSs are also adjacent) may be increased as much as possible. A manner is to use the allocation policy of Formula (7), the ports 1000 and 1002 are classified into one comb, and a corresponding CS interval is $n_{\mathrm{SRS}}^{\mathrm{cs,max}} \times 2/4 - 1 = 3$. Ports 1001 and 1003 are classified into another comb, and a corresponding CS interval is also $n_{\mathrm{SRS}}^{\mathrm{cs,max}} \times 2/4 - 1 = 3$. A CS interval between two ports herein refers to a quantity of integers included between CS values respectively corresponding to the two ports. When the SRS resources occupy one comb, a CS interval between adjacent ports is $n_{\mathrm{SRS}}^{\mathrm{cs,max}}/4 - 1 = 1$. That is, in the 4-port SRS resource, there are two configurable CS intervals: 1 and 3.

When $K_{TC}$ = 2 in a 2-port SRS resource (namely, one SRS resource including two ports), a comb is occupied, and a CS interval between adjacent ports is $n_{\mathrm{SRS}}^{\mathrm{cs,max}}/2 - 1 = 3$.

It can be learned that when $K_{TC}$ = 2, both the 2-port SRS resource and the 4-port SRS resource support a maximum CS interval of 3. It is not enough to support only a CS interval of 1. It is assumed that a quantity of discrete Fourier transform (discrete Fourier transform, DFT) points in delay domain is N. If the CS interval is 3, it indicates that a DFT point quantity interval in delay domain is 3*8/N. If the CS interval is 1, it indicates that a DFT point quantity interval in delay domain is 8/N.

When $K_{TC}$ = 4 in a 4-port SRS resource, a CS interval between adjacent ports is $n_{\mathrm{SRS}}^{\mathrm{cs,max}}/4 - 1 = 2$ when one comb is occupied, and a CS interval between adjacent ports is $n_{\mathrm{SRS}}^{\mathrm{cs,max}} \times 2/4 - 1 = 5$ in a same comb when two combs are occupied.

When $K_{TC}$ = 4 in a 2-port SRS resource, one comb is occupied, and a CS interval between adjacent ports is $n_{\mathrm{SRS}}^{\mathrm{cs,max}}/2 - 1 = 5$.

It can be learned that when $K_{TC}$ = 4, both the 2-port SRS resource and the 4-port SRS resource support a maximum CS interval of 5. It is not enough to support only a CS interval of 2. It is assumed that a quantity of DFT points in delay domain is N. If the CS interval is 5, a DFT point quantity interval in delay domain is 5*12/N. If the CS interval is 2, a DFT point quantity interval in delay domain is 2*12/N.

When $K_{TC}$ = 8 in a 4-port SRS resource, only two combs may be occupied, and a CS interval between adjacent ports in a same comb is $n_{\mathrm{SRS}}^{\mathrm{cs,max}} \times 2/4 - 1 = 2$.

When $K_{TC}$ = 8 in a 2-port SRS resource, only one comb is occupied, and a CS interval between adjacent ports is $n_{\mathrm{SRS}}^{\mathrm{cs,max}}/2 - 1 = 2$.

It can be learned that when $K_{TC}$ = 8, both the 2-port SRS resource and the 4-port SRS resource support a maximum CS interval of 2. It is assumed that a quantity of DFT points in delay domain is N. If the CS interval is 2, it indicates that a DFT point quantity interval in delay domain is 2*6/N.

When $K_{TC}$ = 2 in an 8-port SRS resource, based on a currently used SRS comb structure, if eight ports are all placed in one comb, only mapping without a CS interval between adjacent ports is supported. In this case, orthogonal performance between the ports is lower than that of the existing 2-port SRS resource and 4-port SRS resource. Alternatively, if eight ports are evenly placed in two combs, a CS interval between adjacent ports in one comb is $n_{\mathrm{SRS}}^{\mathrm{cs,max}} \times 2/8 -$ 1 = 1, and orthogonality levels of the existing 2-port SRS resource and 4-port SRS resource cannot be reached. To ensure signal quality of an SRS sent by a terminal device, a time-frequency mapping solution of an SRS resource that enables strong orthogonality between SRS ports needs to be studied. This application provides a time-frequency mapping solution for an 8-port SRS resource, so that orthogonality between ports can reach the orthogonal levels of the existing 2-port SRS resource and 4-port SRS resource.

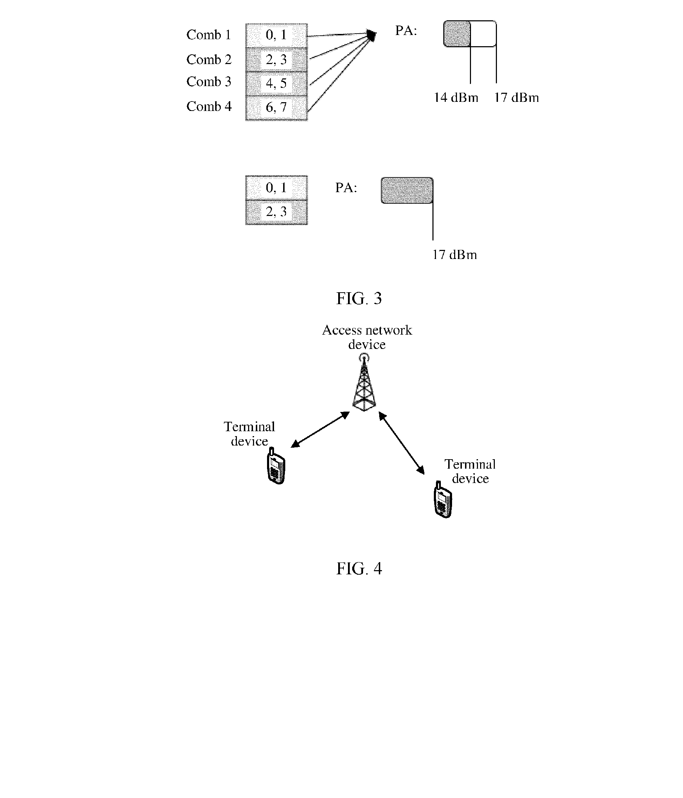

Currently, all ports in one SRS resource are mapped to a same OFDM symbol. In a scenario in which a power is limited, a total transmit power of an SRS on one OFDM symbol is limited. As a result, a transmit power of each SRS port may not meet a demodulation performance requirement. FIG. 3 is a diagram of comparison between transmit powers according to an embodiment of this application. As shown in FIG. 3, it is assumed that Pcmax=23 dBm (that is, a total transmit power is 23 dBm). For a 4-port SRS resource (with a port 0 to a port 4), a maximum transmit power corresponding to each SRS port (the ports 0, 1, 2, 3) is 17 dBm. However, for an 8-port SRS resource (with a port 0 to a port 8), a maximum transmit power corresponding to each SRS port is only 14 dBm, and each SRS port has a power loss of 3 dB. Therefore, a time-frequency mapping solution in which a transmit power of each port is high when an SRS resource includes a large quantity of ports (for example, eight ports) needs to be studied.

In some communication methods provided in this application, a new time-frequency resource mapping solution of an SRS resource is used, to enable strong orthogonality between ports and/or a high transmit power of each port.

The communication method provided in this application is applicable to both a homogeneous network scenario and a heterogeneous network scenario, and has no limitation on a transmission point, where coordinated multi-point transmission may be performed between macro base stations, between micro base stations, or between a macro base station and a micro base station; and is applicable to an FDD/TDD system. The communication method, the communication method, and the communication method provided in this application are applicable to a low-frequency scenario (sub 6G), a high-frequency scenario (above 6G), a single transmission reception point (transmission reception point, TRP) scenario or a multi-transmission reception point (multi-TRP) scenario, and any of their derivative scenarios. The communication method provided in this application is applied to a wireless communication system like a 5G communication system, a satellite communication system, and a short-range communication system.

It should be noted that the wireless communication system mentioned in embodiments of this application includes but is not limited to a 4th generation (4th generation, 4G) communication system like a narrow band-internet of things (narrow band-internet of things, NB-IoT) system, and a long term evolution (long term evolution, LTE) system, a non-terrestrial communication network (non-terrestrial network, NTN) system like a satellite communication system, a 5th generation (5th generation, 5G) communication system or a new radio (new radio, NR) system, a communication system evolved after 5G like 6G, a wireless fidelity (wireless fidelity, Wi-Fi) system, and a communication system that supports integrating a plurality of wireless technologies.

The following first describes examples of several communication systems to which the communication solutions provided in this application are applicable.

FIG. 4 shows an example of a wireless communication system according to an embodiment of this application. As shown in FIG. 4, the communication system includes one or more terminal devices, where in FIG. 4, only two terminal devices are used as an example; and one or more access network devices (for example, base stations) that can provide a communication service for the terminal devices, where in FIG. 4, only one access network device is used as an example. In some embodiments, the wireless communication system may include cells, each cell includes one or more access network devices, and the access network device provides a communication service for a plurality of terminals. The wireless communication system may also perform point-to-point communication, for example, a plurality of terminals communicate with each other.

The terminal is a device that has a wireless transceiver function. The terminal may communicate with one or more core network (core network, CN) devices (or referred to as core devices) via an access network device (or referred to as an access device) in a radio access network (radio access network, RAN). The terminal may be deployed on land, including an indoor device, an outdoor device, a handheld device, or a vehicle-mounted device; or may be deployed on water (for example, on a ship); or may be deployed in the air (for example, on a plane, a balloon, or a satellite). In embodiments of this application, the terminal may also be referred to as a terminal device or user equipment (user equipment, UE), and may be a mobile phone (mobile phone), a mobile station (mobile station, MS), a tablet computer (pad), a computer with a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in telemedicine (telemedicine), a wireless terminal device in a smart grid (smart grid), a wireless terminal in transportation safety (transportation safety), a wireless terminal device in a smart city (smart city), a wireless terminal in a smart home (smart home), a subscriber unit (subscriber unit), a cellular phone (cellular phone), a wireless data card, a personal digital assistant (personal digital assistant, PDA) computer, a tablet computer, a laptop computer (laptop computer), a machine type communication (machine type communication, MTC) terminal, or the like. The terminal may include various handheld devices, vehicle-mounted devices, wearable devices, or computing devices that have a wireless communication function, or other processing devices connected to a wireless modem. Optionally, the terminal may be a handheld device (handset) having a wireless communication function, a vehicle-mounted device, a wearable device, or a terminal in the internet of things or the internet of vehicles, a terminal in any form in 5G and an evolved communication system after 5G, or the like. This is not limited in this application.

The access network device may be any device that has a wireless transceiver function and can communicate with a terminal, for example, a radio access network (radio access network, RAN) node that enables the terminal to access a wireless network. Currently, some examples of the RAN node include a macro base station, a micro base station (also referred to as a small cell), a relay station, an access point, a gNB, a transmission reception point (transmission reception point, TRP), an evolved NodeB (evolved NodeB, eNB), a radio network controller (radio network controller, RNC), a home base station (for example, a home evolved NodeB, or a home NodeB, HNB), a base band unit (base band unit, BBU), a Wi-Fi access point (access point, AP), integrated access and backhaul (integrated access and backhaul, IAB), and the like.

The following first describes the communication methods provided in embodiments of this application with reference to the accompanying drawings.

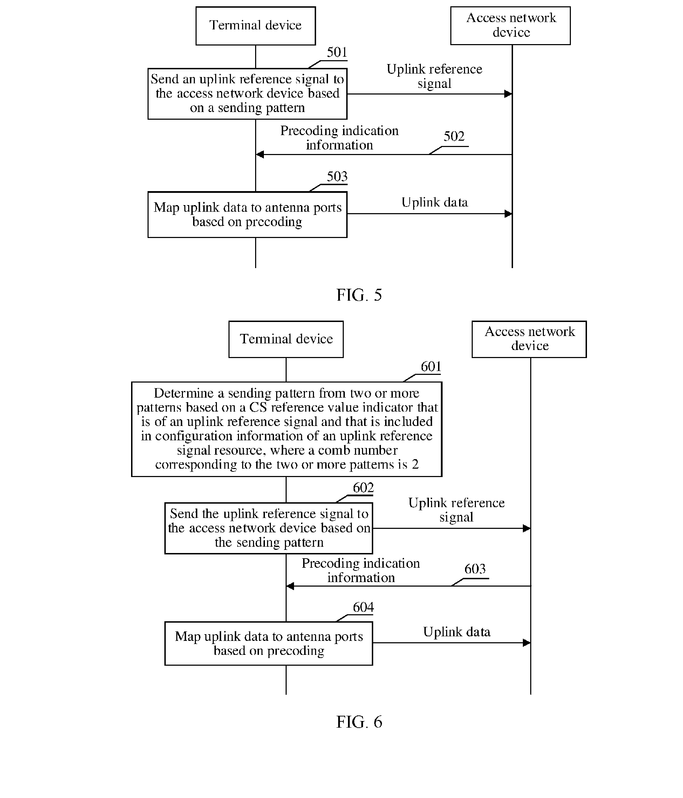

FIG. 5 is an interactive flowchart of a communication method according to an embodiment of this application. As shown in FIG. 5, the method includes the following steps.

501: A terminal device sends an uplink reference signal to an access network device based on a sending pattern.

Correspondingly, the access network device receives the uplink reference signal from the terminal device.

An uplink reference signal resource of the uplink reference signal includes N ports, there are at least two groups of ports in the N ports in the sending pattern, each group of ports corresponds to a same time-frequency resource, different groups of ports correspond to different time-frequency resources, and the N ports in the sending pattern are carried on two or more OFDM symbols. For example, N is 8, and eight ports in the sending pattern are carried on two OFDM symbols. Alternatively, the N ports in the sending pattern are carried on two or more frequency domain combs and one OFDM symbol, and N is an integer greater than 4. For example, N is 8.

In a possible implementation, step 501 is replaced as follows: A terminal device sends an uplink reference signal based on configuration information and a sending pattern, where the configuration information indicates the terminal device to send the uplink reference signal based on the sending pattern. In other words, a time-frequency resource mapping manner of the N ports included in the uplink signal resource is the same as a time-frequency resource mapping manner of the N ports in the sending pattern.

In a possible implementation, N is 8, and the N ports in the sending pattern (indicated) are carried on two frequency domain combs whose frequency domain comb numbers are 2 and two OFDM symbols, and two ports located on a same frequency domain comb and OFDM symbol correspond to two different CSs; the N ports in the sending pattern (indicated) are carried on one frequency domain comb whose frequency domain comb number is 2 and two OFDM symbols, and four ports located on a same frequency domain comb and OFDM symbol correspond to four different CS values; or the N ports in the sending pattern (indicated) are carried on two frequency domain combs whose frequency domain comb numbers are 2 and one OFDM symbol, and four ports located on a same frequency domain comb and OFDM symbol correspond to four different CS values.

In this implementation, the manners in which the N ports in the sending pattern are carried on the frequency domain combs and the OFDM symbols can enable strong orthogonality between the ports.

502: The terminal device receives precoding indication information from the access network device.

Correspondingly, the access network device sends the precoding indication information to the terminal device. Optionally, the precoding indication information is obtained by the access network device based on the uplink reference signal. Optionally, transmit antennas for transmitting uplink data correspond to ports in a plurality of uplink reference signals.

The precoding indication information indicates precoding for transmitting the uplink data, the precoding indication information is obtained by the access network device based on the uplink reference signal, and rows of a matrix corresponding to the precoding are in one-to-one correspondence with the N ports. For example, the precoding corresponds to a matrix with eight rows, and the rows of the matrix are in one-to-one correspondence with the N ports included in the uplink reference signal resource. For example, the precoding corresponds to two matrices with four rows, and rows of the two matrices are in one-to-one correspondence with eight ports included in the uplink reference signal resource. For example, the precoding corresponds to four matrices with two rows, and rows of the four matrices are in one-to-one correspondence with eight ports included in the uplink reference signal resource.

503: The terminal device maps the uplink data to antenna ports based on the precoding.

Correspondingly, the access network device receives the uplink data from the terminal device.

In a possible implementation, the uplink reference signal is an SRS, the uplink reference signal resource is an SRS resource, the uplink data is carried on a PUSCH or a PUCCH, N is 8, a quantity of the antenna ports is the same as a quantity of ports in the SRS resource, and the antenna ports are in one-to-one correspondence with the ports in the SRS resource. That the terminal device maps the uplink data to antenna ports based on the precoding may be as follows: The terminal device maps the uplink data to the antenna ports based on the precoding according to Formula (8). In Formula (8), W represents the matrix corresponding to the precoding, z represents data sent on each antenna port, and y is the uplink data.

In a possible implementation, a transmit power of the uplink reference signal is determined based on the sending pattern; and when the sending pattern indicates that the N ports are carried on $N_{symb}^{SRS}$ (for example, two) OFDM symbols, a maximum transmit power of each port does not exceed $P_{\mathrm{CMAX}} \times N_{symb}^{SRS}/N_{\mathrm{ap}}^{SRS}$, $P_{\mathrm{CMAX}}$ is a maximum transmit power configured for the terminal device, $N_{symb}^{SRS}$ is an integer greater than 1, and $N_{\mathrm{ap}}^{SRS}$ is equal to N. Optionally, a total SRS transmit power determined by using a power control strategy is evenly allocated to SRS ports corresponding to the OFDM symbols. In this way, an actual transmit power of the SRS corresponding to an 8-port SRS resource can be $N_{symb}^{SRS}$ times the total transmit power. In this implementation, the N ports are carried on the $N_{symb}^{SRS}$ OFDM symbols, so that the actual transmit power of the SRS corresponding to the SRS resource is $N_{symb}^{SRS}$ times the total transmit power. This can improve channel measurement precision.

In a possible implementation, an 8-port SRS is configured in an SRS resource set for transmitting an uplink codebook. The terminal device sends the 8-port SRS. The access network device determines channel information of each transmit antenna of the terminal device based on the 8-port SRS, and then indicates a TPMI based on the 8-port SRS. The TPMI is in a form of a matrix, a quantity of rows of the matrix is 8 (determined based on a quantity of corresponding SRS ports), and the rows correspond to the SRS ports. The transmit antenna that is of the terminal device and that corresponds to the SRS port is used to transmit the PUSCH, and a transmit phase of a transmit antenna corresponding to each SRS port is determined based on each row in a TPMI. In this implementation, the transmit phase of the transmit antenna corresponding to each SRS port of the 8-port SRS can be accurately determined.

In this embodiment of this application, the terminal device sends the uplink reference signal to the access network device based on the sending pattern, so that the N (greater than 4) ports included in the uplink reference signal resource of the uplink reference signal are carried on the two or more OFDM symbols. The N ports included in the same uplink reference signal resource are carried on the two or more OFDM symbols, and this can improve orthogonality between ports in the N ports. The terminal device sends the uplink reference signal to the access network device based on the sending pattern, so that the N (greater than 4) ports included in the uplink reference signal resource of the uplink reference signal are carried on the two or more frequency domain combs and one OFDM symbol. The precoding indication information indicates that the rows of the matrix corresponding to the precoding for transmitting the uplink data of the terminal device are in one-to-one correspondence with the N ports included in the uplink reference signal resource. This provides a solution of using the uplink reference signal resource including the N ports to carry the uplink reference signal, and supports SRS resource design in a scenario in which there is a large quantity of SRS ports.

The N ports included in the uplink reference signal resource may be carried on frequency domain combs with different comb numbers. When the frequency domain combs with different comb numbers are used to carry the N ports included in the uplink reference signal resource, the terminal device sends the uplink reference signal to the access network device based on a different sending pattern. In this application, a frequency domain comb number and a comb number may be replaced with each other. The following separately describes signal sending solutions when the terminal device uses frequency domain combs whose comb numbers are 2, 4, and 8 to carry the SRS ports.

FIG. 6 is an interactive flowchart of another communication method according to an embodiment of this application. FIG. 6 shows a signal sending solution when a terminal device uses a frequency domain comb whose comb number is 2 to carry SRS ports. A method procedure in FIG. 6 is a possible implementation of the method described in FIG. 5. In this implementation, the terminal device may select a sending pattern from two or more patterns, to obtain a sending pattern appropriate for sending an uplink reference signal. As shown in FIG. 6, the method includes the following steps.

601: The terminal device determines the sending pattern from the two or more patterns based on a CS reference value indicator that is of the uplink reference signal and that is included in configuration information of an uplink reference signal resource, where the comb number corresponding to the two or more patterns is 2.

The uplink reference signal resource is an SRS resource, and the uplink reference signal is an SRS. N ports in the sending pattern respectively correspond to different time-frequency resources. The N ports in the sending pattern are carried on two or more OFDM symbols. Alternatively, the N ports in the sending pattern are carried on two or more frequency domain combs and one OFDM symbol, and N is an integer greater than 4. For example, N is 8. Example 1: The N ports in the sending pattern are carried on two frequency domain combs whose frequency domain comb numbers are 2 and two OFDM symbols, and two ports located on a same frequency domain comb and OFDM symbol correspond to two different cyclic shift CS values. Example 2: The N ports in the sending pattern are carried on one frequency domain comb whose frequency domain comb number is 2 and two OFDM symbols, and four ports located on a same frequency domain comb and OFDM symbol correspond to four different CS values. Example 3: The N ports in the sending pattern are carried on two frequency domain combs whose frequency domain comb numbers are 2 and one OFDM symbol, and four ports located on a same frequency domain comb and OFDM symbol correspond to four different CS values. It should be understood that when the terminal device uses the frequency domain comb whose comb number is 2 to carry the SRS ports, a time-frequency resource mapping manner corresponding to the sending pattern may be any one of the following: a frequency division mapping mode (corresponding to Example 3), where two combs+four CSs are allocated to eight ports; a frequency division+time division mapping mode 1 (corresponding to Example 1), where two combs+two OFDM symbols+two CSs are allocated to eight ports; and a frequency division+time division mapping mode 2 (corresponding to Example 2), where one comb+two OFDM symbols+four CSs are allocated to eight ports.

In a possible implementation, the configuration information further includes a comb location indicator $\overline{k}_{TC}$ and the frequency domain comb number $K_{TC}$ (2) that are of the uplink reference signal, and the two or more patterns include at least two of a first pattern, a second pattern, and a third pattern.

In the first pattern (corresponding to Example 1), a comb corresponding to a first port set of the N ports is $(\overline{k}_{TC} + K_{TC}/2)_{\text{mod}} K_{TC}$, a comb corresponding to a second port set of the N ports is $\overline{k}_{TC}$, an index of an OFDM symbol corresponding to two ports in the first port set is $l$, an OFDM index corresponding to the other two ports in the first port set is $(l+n)$, an OFDM index corresponding to two ports in the second port set is $l$, an index of an OFDM symbol corresponding to the other two ports in the second port set is $(l+n)$, $n$ is an integer greater than or equal to 1, and $l$ is an integer greater than or equal to 0.

In the second pattern (corresponding to Example 2), a comb corresponding to a first port set and a second port set of the N ports is $\overline{k}_{TC}$, an index of an OFDM symbol corresponding to the first port set is $l$, and an index of an OFDM symbol corresponding to the second port set is $(l+n)$, $n$ is an integer greater than or equal to 1, and $l$ is an integer greater than or equal to 0.

In the third pattern (corresponding to Example 3), a comb corresponding to a first port set of the N ports is $(\overline{k}_{TC} + K_{TC}/2)_{\text{mod}} K_{TC}$, and a comb corresponding to a second port set of the N ports is $\overline{k}_{TC}$, an index of an OFDM symbol corresponding to the first port set and the second port set is $l$, and $l$ is an integer greater than or equal to 0.

Ports included in the first port set are different from ports included in the second port set.

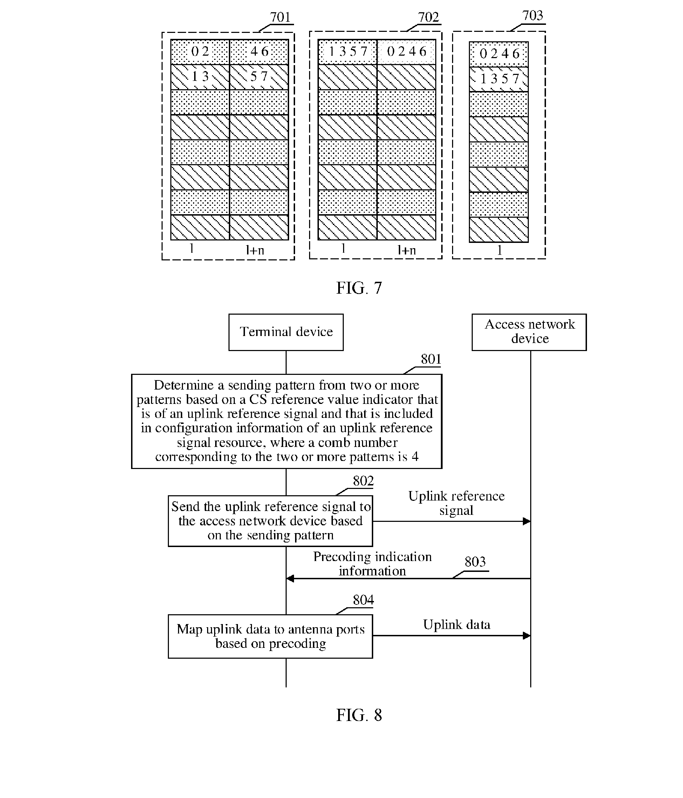

In a possible implementation, the first pattern, the second pattern, and the third pattern each include eight ports, the first port set is {1, 3, 5, 7}, and the second port set is {0, 2, 4, 6}. A port 0 to a port 7 indicate a port 1000 to a port 1007. That is, a port 0 indicates a port 1000, a port 1 indicates a port 1001, and so on. FIG. 7 shows examples of the first pattern, the second pattern, and the third pattern according to this embodiment of this application. As shown in FIG. 7, 701 represents the first pattern, 702 represents the second pattern, 703 represents the third pattern, and rectangular frames with different shadings belong to different combs. The comb corresponding to the first port set in the first pattern is 1 (namely, $(\overline{k}_{TC} + K_{TC}/2)_{\mod} K_{TC}$), the index of the OFDM symbol corresponding to the port 1 and a port 3 is *l*, and the index of the OFDM symbol corresponding to a port 5 and the port 7 is (*l+n*); and the comb corresponding to the second port set in the first pattern is 0 (namely, $\overline{k}_{TC}$), the index of the OFDM symbol corresponding to the port 0 and a port 2 is *l*, and the index of the OFDM symbol corresponding to a port 4 and a port 6 is (*l+n*). In the second pattern, the comb corresponding to the first port set and the second port set is 0 (namely, $\overline{k}_{TC}$), the index of the OFDM symbol corresponding to the first port set is *l*, and the index of the OFDM symbol corresponding to the second port set is (*l+n*). The comb corresponding to the first port set in the third pattern is 1 (namely $(\overline{k}_{TC} + K_{TC}/2)_{\mod} K_{TC}$), and the comb corresponding to the second port set in the third pattern is 0 (namely, $\overline{k}_{TC}$).

It should be understood that port numbers included in the port sets are merely examples, and different port sets may further include a combination of other port numbers.

A possible implementation of step 601 is as follows: When the CS reference value indicator (namely, $n^{cs}_{SRS}$) is included in a first set, the terminal device uses the third pattern in the second pattern and the third pattern as the sending pattern; or when the CS reference value indicator is included in a second set, the terminal device determines the second pattern in the second pattern and the third pattern as the sending pattern, where the first set is $\left\{0, ..., n^{cs,max}_{SRS}/2 - 1\right\}$, and the second set is $\left\{n^{cs,max}_{SRS}/2, ..., n^{cs,max}_{SRS} - 1\right\}$. In the second pattern, the comb corresponding to the first port set and the second port set of the N ports is $\overline{k}_{TC}$, the index of the OFDM symbol corresponding to the first port set is *l*, and the index of the OFDM symbol corresponding to the second port set is (*l+n*). In the third pattern, the comb corresponding to the first port set of the N ports is $(\overline{k}_{TC} + K_{TC}/2)_{\mod} K_{TC}$, the comb corresponding to the second port set of the N ports is $\overline{k}_{TC}$, and the index of the OFDM symbol corresponding to the first port set and the second port set is *l*. This can simplify configuration signaling design by switching the sending pattern based on redundant information in the CS reference value indicator.

Formulas corresponding to the possible implementation of step 601 are as follows:

If

$$n^{cs}_{SRS} \in \left\{0, ..., n^{cs,max}_{SRS}/2 - 1\right\},$$

$$k^{(p_i)}_{TC} = \begin{cases} (\overline{k}_{TC} + K_{TC}/2) \mod K_{TC} & if\, p_i \in \{1001, 1003, 1005, 1007\} \\ \overline{k}_{TC} & if\, p_i \in \{1000, 1002, 1004, 1006\} \end{cases} \quad (9),$$

and

$$\overline{l}_0 = l_0;$$

or
if

$$n^{cs}_{SRS} \in \left\{n^{cs,max}_{SRS}/2, ..., n^{cs,max}_{SRS} - 1\right\}, \quad k^{(p_i)}_{TC} = \overline{k}_{TC} \quad (10),$$

and

$$\overline{l}_0 = \begin{cases} l_0 & if\, p_i \in \{1001, 1003, 1005, 1007\} \\ l_0 + 1 & if\, p_i \in \{1000, 1002, 1004, 1006\} \end{cases} \quad (11).$$

Herein, $p_i$ represents an index of a port i, $\overline{l}_0$ represents an index of an OFDM symbol, and $l_0$ and $(l_0 + 1)$ represent indexes of two different OFDM symbols. Formula (9) represents the third pattern, and Formula (10) and Formula (11) represent the second pattern.

In an implementation, a correspondence between a value range of $n^{cs}_{SRS}$ and a pattern may not be limited to the foregoing example.

Another possible implementation of step 601 is as follows: When the CS reference value indicator (namely, $n^{cs}_{SRS}$) is included in a first set, the terminal device determines the third pattern in the first pattern and the third pattern as the sending pattern; or when the CS reference value indicator is included in a second set, the terminal device uses the first pattern in the first pattern and the third pattern as the sending pattern, where the first set is $\left\{0, ..., n^{cs,max}_{SRS}/2 - 1\right\}$, and the second set is $\left\{n^{cs,max}_{SRS}/2, ..., n^{cs,max}_{SRS} - 1\right\}$. In the first pattern, the comb corresponding to the first port set of the N ports is $(\bar{k}_{TC} + K_{TC}/2) \bmod K_{TC}$, the comb corresponding to the second port set of the N ports is $\bar{k}_{TC}$, the index of the OFDM symbol corresponding to the two ports in the first port set is $l$, the OFDM index corresponding to the other two ports in the first port set is ($l$+n), the OFDM index corresponding to the two ports in the second port set is $l$, and the index of the OFDM symbol corresponding to the other two ports in the second port set is ($l$+n), $n$ is an integer greater than or equal to 1, and $l$ is an integer greater than or equal to 0. Formulas corresponding to this implementation are as follows:

If

$$n^{cs}_{SRS} \in \left\{0, ..., n^{cs,max}_{SRS}/2 - 1\right\},$$

$$k^{(p_i)}_{TC} = \begin{cases} \left(\bar{k}_{TC} + K_{TC}/2\right) \bmod K_{TC} & \text{if } p_i \in \{1001, 1003, 1005, 1007\} \\ \bar{k}_{TC} & \text{if } p_i \in \{1000, 1002, 1004, 1006\} \end{cases} \quad (12);$$

or

if

$$n^{cs}_{SRS} \in \left\{n^{cs,max}_{SRS}/2, ..., n^{cs,max}_{SRS} - 1\right\},$$

$$k^{(p_i)}_{TC} = \begin{cases} \left(\bar{k}_{TC} + K_{TC}/2\right) \bmod K_{TC} & \text{if } p_i \in \{1001, 1003, 1005, 1007\} \\ \bar{k}_{TC} & \text{if } p_i \in \{1000, 1002, 1004, 1006\} \end{cases} \quad (13),$$

and

$$\bar{l}_0 = \begin{cases} l_0 & \text{if } p_i \in \{1000, 1001, 1002, 1003\} \\ l_0 + 1 & \text{if } p_i \in \{1004, 1005, 1006, 1007\} \end{cases} \quad (14).$$

Herein, $p_i$ represents an index of a port i, and $l_0$ represents an index of an OFDM symbol. Formula (12) represents the third pattern, and Formula (13) and Formula (14) represent the first pattern. In an implementation, a correspondence between a value range of $n^{cs}_{SRS}$ and a pattern may not be limited to the foregoing example.

Step 601 may be replaced with that the terminal device determines the sending pattern from three or more patterns based on a CS reference value indicator $n^{cs}_{SRS}$ and a quantity of symbols $N^{SRS}_{symb}$ that are of the uplink reference signal and that are included in configuration information of an uplink reference signal resource, where the comb number corresponding to the two or more patterns is 2. For example, when $n^{cs}_{SRS}$ is included in the first set and $N^{SRS}_{symb}$ is equal to 1, the third pattern in the first pattern, the second pattern, and the third pattern is used as the sending pattern; when $n^{cs}_{SRS}$ is included in the first set and $N^{SRS}_{symb}$ is greater than 1, the second pattern in the first pattern, the second pattern, and the third pattern is used as the sending pattern; or when $n^{cs}_{SRS}$ is included in the second set and $N^{SRS}_{symb}$ is greater than 1, the first pattern in the first pattern, the second pattern, and the third pattern is used as the sending pattern.

602: The terminal device sends the uplink reference signal to an access network device based on the sending pattern.

For step 602, refer to step 501.

603: The terminal device receives precoding indication information from the access network device.

For step 603, refer to step 502.

604: The terminal device maps uplink data to antenna ports based on precoding.

For step 604, refer to step 503.

In this embodiment of this application, the access network device can flexibly configure the sending pattern based on a channel status of the terminal device. Specifically, when an uplink transmit power of the terminal device is limited, a sending pattern that occupies a plurality of OFDM symbols may be configured. However, when a base station has a high requirement on phase precision of the terminal device, a sending pattern that occupies one OFDM symbol may be configured. In addition, this can simplify configuration signaling design by switching the sending pattern based on redundant information in the CS reference value indicator.

FIG. 8 is an interactive flowchart of another communication method according to an embodiment of this application. FIG. 8 shows a signal sending solution when a terminal device uses a frequency domain comb whose comb number is 4 (that is, $K_{TC}$ is 4) to carry SRS ports. A method procedure in FIG. 8 is a possible implementation of the method described in FIG. 5. In this implementation, the terminal device may select a sending pattern from two or more patterns, to obtain a sending pattern appropriate for sending an uplink reference signal. As shown in FIG. 8, the method includes the following steps.

801: The terminal device determines the sending pattern from the two or more patterns based on a CS reference value indicator that is of the uplink reference signal and that is included in configuration information of an uplink reference signal resource, where the comb number corresponding to the two or more patterns is 4.

For step 801, refer to step 501. Possible manner 1: N ports in the sending pattern are carried on two frequency domain combs whose frequency domain comb numbers are 4 and two OFDM symbols, and two ports located on a same frequency domain comb and OFDM symbol correspond to two different CS values. Possible manner 2: N ports in the sending pattern are carried on one frequency domain comb whose frequency domain comb number is 4 and two OFDM symbols, and four ports located on a same frequency domain comb and OFDM symbol correspond to four different CS values. Possible manner 3: N ports in the sending pattern are carried on two frequency domain combs whose frequency domain comb numbers are 4 and one OFDM symbol, and four ports located on a same frequency domain comb and OFDM symbol correspond to four different CS values. Possible manner 4: N ports in the sending pattern are carried on four frequency domain combs whose frequency domain comb numbers are 4 and one OFDM symbol, and two ports located on a same frequency domain comb and OFDM symbol correspond to two different CS values. A time-frequency resource mapping manner corresponding to the sending pattern may be any one of the following: a frequency division mapping mode 1: two combs+four CSs (Manner 3); a frequency division mapping mode 2: four combs+two CSs (Manner 4); a frequency division+time frequency mapping mode 1: two combs+two OFDM symbols+two CSs (Manner 1); and a frequency division+time frequency mapping mode 2: two OFDM symbols+four CSs (Manner 2).

In a possible implementation, the configuration information further includes a comb location indicator $\overline{k}_{TC}$ and a frequency domain comb number $K_{TC}$, and the two or more patterns include at least two of a first pattern, a second pattern, a third pattern, and a fourth pattern.

In the first pattern (corresponding to Manner 1), a comb corresponding to a first port set of the N ports is $(\overline{k}_{TC} + K_{TC}/2)_{\text{mod}} K_{TC}$, a comb corresponding to a second port set of the N ports is $\overline{k}_{TC}$, an index of an OFDM symbol corresponding to two ports in the first port set is $l$, an OFDM index corresponding to the other two ports in the first port set is $(l+n)$, an OFDM index corresponding to two ports in the second port set is $l$, an index of an OFDM symbol corresponding to the other two ports in the second port set is $(l+n)$, $n$ is an integer greater than or equal to 1, and $l$ is an integer greater than or equal to 0.

In the second pattern (corresponding to Manner 2), a comb corresponding to a first port set and a second port set of the N ports is $\overline{k}_{TC}$, an index of an OFDM symbol corresponding to the first port set is $l$, and an index of an OFDM symbol corresponding to the second port set is $(l+n)$, and $l$ and $n$ are integers greater than or equal to 1.

In the third pattern (corresponding to Manner 3), a comb corresponding to a first port set of the N ports is $(\overline{k}_{TC} + K_{TC}/2)_{\text{mod}} K_{TC}$, and a comb corresponding to a second port set of the N ports is $\overline{k}_{TC}$, an index of an OFDM symbol corresponding to the first port set and the second port set is $l$, and $l$ is an integer greater than or equal to 1.

In the fourth pattern (corresponding to Manner 4), combs respectively corresponding to four port sets of the N ports are $(\overline{k}_{TC} + K_{TC}/2)_{\text{mod}} K_{TC}$, $(\overline{k}_{TC} + K_{TC}/4)_{\text{mod}} K_{TC}$, $(\overline{k}_{TC} + 3*K_{TC}/4)_{\text{mod}} K_{TC}$, and $\overline{k}_{TC}$, an index of an OFDM symbol corresponding to the four port sets is $l$, and $l$ is an integer greater than or equal to 1.

Ports included in the first port set are different from ports included in the second port set.

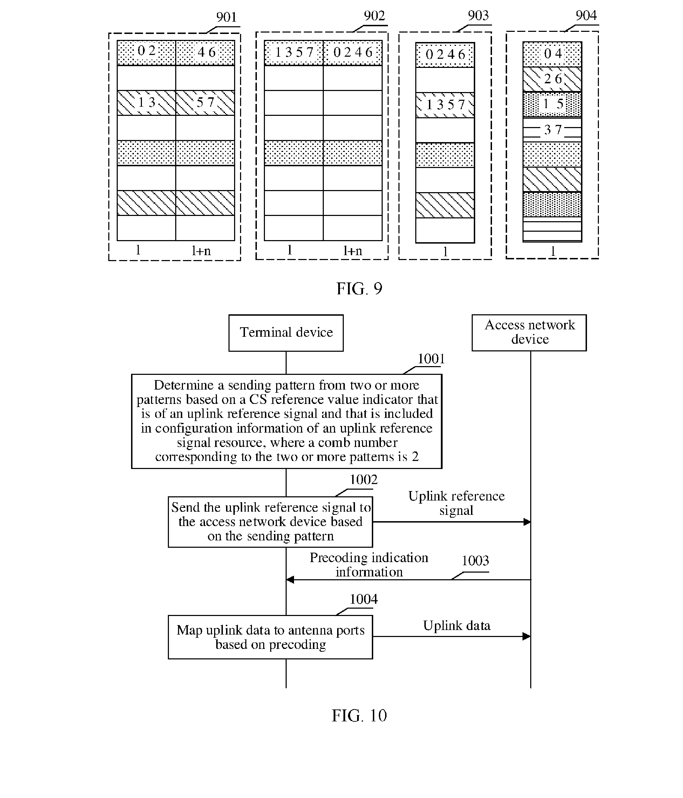

In a possible implementation, the first pattern, the second pattern, the third pattern, and the fourth pattern each include eight ports, the first port set is {1, 3, 5, 7}, the second port set is {0, 2, 4, 6}, and the four port sets included in the fourth pattern are {0, 4}, {2, 6}, {1, 5}, and {3, 7}. A port 0 to a port 7 indicate a port 1000 to a port 1007. That is, a port 0 indicates a port 1000, a port 1 indicates a port 1001, and so on. FIG. 9 shows examples of the first pattern, the second pattern, the third pattern, and the fourth pattern according to this embodiment of this application. As shown in FIG. 9, 901 represents the first pattern, 902 represents the second pattern, 903 represents the third pattern, 904 represents the fourth pattern, and rectangular frames with different shadings belong to different combs. The comb corresponding to the first port set in the first pattern is 2 (namely, $(\overline{k}_{TC} + K_{TC}/2)_{mod} K_{TC}$), the index of the OFDM symbol corresponding to the port 1 and a port 3 is $l$, and the index of the OFDM symbol corresponding to a port 5 and the port 7 is ($l+n$); and the comb corresponding to the second port set in the first pattern is 0 (namely, $\overline{k}_{TC}$), the index of the OFDM symbol corresponding to the port 0 and a port 2 is $l$, and the index of the OFDM symbol corresponding to a port 4 and a port 6 is ($l+n$). In the second pattern, the comb corresponding to the first port set and the second port set is 0 (namely, $\overline{k}_{TC}$), the index of the OFDM symbol corresponding to the first port set is $l$, and the index of the OFDM symbol corresponding to the second port set is ($l+n$). The comb corresponding to the first port set in the third pattern is 2 (namely, $(\overline{k}_{TC} + K_{TC}/2)_{mod} K_{TC}$), the comb corresponding to the second port set in the third pattern is 0 (namely, $\overline{k}_{TC}$), and the index of the OFDM symbol corresponding to the first port set and the second port set is $l$. The combs corresponding to the four port sets in the first pattern are 0 (namely, $\overline{k}_{TC}$), 1 (namely, $(\overline{k}_{TC} + K_{TC}/4)_{mod} K_{TC}$), 2 (namely, $(\overline{k}_{TC} + K_{TC}/2)_{mod} K_{TC}$) and 3 (namely, $(\overline{k}_{TC} + 3 * K_{TC}/4)_{mod} K_{TC}$), and the index of the OFDM symbol corresponding to the four port sets is $l$. It should be understood that port numbers included in the port sets are merely examples, and different port sets may further include a combination of other port numbers.

A possible implementation of step 801 is as follows: When the CS reference value indicator (namely, $n_{SRS}^{cs}$) is included in a first set, the terminal device uses the third pattern in the second pattern and the third pattern as the sending pattern; or when the CS reference value indicator is included in a second set, the terminal device uses the second pattern in the second pattern and the third pattern as the sending pattern, where the first set is $\left\{0, ..., n_{SRS}^{cs,max}/2 - 1\right\}$, and the second set is $\left\{n_{SRS}^{cs,max}/2, ..., n_{SRS}^{cs,max} - 1\right\}$. This can simplify configuration signaling design by switching the sending pattern based on redundant information in the CS reference value indicator.

Another possible implementation of step 801 is as follows: When the CS reference value indicator (namely, $n_{SRS}^{cs}$) is included in a first set, the terminal device uses the third pattern in the first pattern and the third pattern as the sending pattern; or when the CS reference value indicator is included in a second set, the terminal device uses the first pattern in the first pattern and the third pattern as the sending pattern, where the first set is $\left\{0, ..., n_{SRS}^{cs,max}/2 - 1\right\}$, and the second set is $\left\{n_{SRS}^{cs,max}/2, ..., n_{SRS}^{cs,max} - 1\right\}$. This can simplify configuration signaling design by switching the sending pattern based on redundant information in the CS reference value indicator.

Another possible implementation of step 801 is as follows: When the CS reference value indicator (namely, $n_{SRS}^{cs}$) is included in a first set, the terminal device uses the first pattern in the first pattern and the second pattern as the sending pattern; or when the CS reference value indicator is included in a second set, the terminal device uses the second pattern in the first pattern and the second pattern as the sending pattern, where the first set is $\left\{0, ..., n_{SRS}^{cs,max}/2 - 1\right\}$, and the second set is $\left\{n_{SRS}^{cs,max}/2, ..., n_{SRS}^{cs,max} - 1\right\}$. This can simplify configuration signaling design by switching the sending pattern based on redundant information in the CS reference value indicator.

Another possible implementation of step 801 is as follows: When the CS reference value indicator (namely, $n_{SRS}^{cs}$) is included in a first set, the terminal device uses the third pattern in the third pattern and the fourth pattern as the sending pattern; or when the CS reference value indicator is included in a second set, the terminal device uses the fourth pattern in the third pattern and the fourth pattern as the sending pattern, where the first set is $\left\{0, ..., n_{SRS}^{cs,max}/2 - 1\right\}$, and the second set is $\left\{n_{SRS}^{cs,max}/2, ..., n_{SRS}^{cs,max} - 1\right\}$. This can simplify configuration signaling design by switching the sending pattern based on redundant information in the CS reference value indicator.

Another possible implementation of step 801 is as follows: When the CS reference value indicator (namely, $n_{SRS}^{cs}$) is included in a first set, the terminal device uses the first pattern in the first pattern and the fourth pattern as the sending pattern; or when the CS reference value indicator is included in a second set, the terminal device uses the fourth pattern in the first pattern and the fourth pattern as the sending pattern, where the first set is $\left\{0,\ldots,n_{SRS}^{cs,max}/2-1\right\}$, and the second set is $\left\{n_{SRS}^{cs,max}/2,\ldots,n_{SRS}^{cs,max}-1\right\}$. This can simplify configuration signaling design by switching the sending pattern based on redundant information in the CS reference value indicator.

Another possible implementation of step 801 is as follows: When the CS reference value indicator (namely, $n_{SRS}^{cs}$) is included in a first set, the terminal device uses the second pattern in the second pattern and the fourth pattern as the sending pattern; or when the CS reference value indicator is included in a second set, the terminal device uses the fourth pattern in the second pattern and the fourth pattern as the sending pattern, where the first set is $\left\{0,\ldots,n_{SRS}^{cs,max}/2-1\right\}$, and the second set is $\left\{n_{SRS}^{cs,max}/2,\ldots,n_{SRS}^{cs,max}-1\right\}$. This can simplify configuration signaling design by switching the sending pattern based on redundant information in the CS reference value indicator.

Another possible implementation of step 801 is as follows: The terminal device determines the sending pattern from the two or more patterns based on a CS reference value indicator, a maximum CS indicator $N_{ap}^{SRS}$, and a quantity of symbols $N_{symb}^{SRS}$ that are included in configuration information of an uplink reference signal resource. The two or more patterns include at least two of a first pattern, a second pattern, a third pattern, and a fourth pattern, and the quantity of symbols indicates a quantity of OFDM symbols that carry the N ports. For example, the terminal device determines the sending pattern from the first pattern, the second pattern, the third pattern, and the fourth pattern based on the CS reference value indicator, the maximum CS indicator, and the quantity of symbols that are included in the configuration information of the uplink reference signal resource. Formulas corresponding to this implementation are as follows:

If $n_{SRS}^{cs}\in\left\{0,\ldots,n_{SRS}^{cs,max}/2-1\right\}$ and $N_{ap}^{SRS}=8$ and $N_{symb}^{SRS}=1$ (frequency division mode),

$$k_{TC}^{(p_i)}=\begin{cases}\left(\overline{k}_{TC}+K_{TC}/2\right)mod\,K_{TC} & if\,p_i\in\{1001,1003,1005,1007\}\\ \overline{k}_{TC} & if\,p_i\in\{1000,1002,1004,1006\}\end{cases}\quad(15);$$

if

$$n_{SRS}^{cs}\in\left\{n_{SRS}^{cs,max}/2,\ldots,n_{SRS}^{cs,max}-1\right\}\,and\,N_{ap}^{SRS}=8\,and\,N_{symb}^{SRS}=1,$$

$$k_{TC}^{(p_i)}=\begin{cases}\left(\overline{k}_{TC}+K_{TC}/2\right)mod\,K_{TC} & if\,p_i\in\{1001,1005\}\\ \left(\overline{k}_{TC}+K_{TC}/4\right)mod\,K_{TC} & if\,p_i\in\{1002,1006\}\\ \left(\overline{k}_{TC}+3*K_{TC}/4\right)mod\,K_{TC} & if\,p_i\in\{1003,1007\}\\ \overline{k}_{TC} & otherwise\end{cases}\quad(16);$$

if

$$n_{SRS}^{cs}\in\left\{n_{SRS}^{cs,max}/2,\ldots,n_{SRS}^{cs,max}-1\right\}\,and\,N_{ap}^{SRS}=8\,and\,N_{symb}^{SRS}>1,$$

$$k_{TC}^{(p_i)}=\begin{cases}\left(\overline{k}_{TC}+K_{TC}/2\right)mod\,K_{TC} & if\,p_i\in\{1001,1003,1005,1007\}\\ \overline{k}_{TC} & if\,p_i\in\{1000,1002,1004,1006\}\end{cases}\quad(17),$$

and

$$\bar{l}_0 = \begin{cases} l_0 & if\, p_i \in \{1000, 1001, 1002, 1003\} \\ l_0 + 1 & if\, p_i \in \{1004, 1005, 1006, 1007\} \end{cases} \quad (18);$$

or

if

$$n_{SRS}^{cs} \in \left\{0, \dots, n_{SRS}^{cs,max}/2 - 1\right\} \, and\, N_{ap}^{SRS} = 8 \, and\, N_{symb}^{SRS} > 1,$$

$$k_{TC}^{(p_i)} = \bar{k}_{TC} \quad (19),$$

and

$$\bar{l}_0 = \begin{cases} l_0 & if\, p_i \in \{1001, 1003, 1005, 1007\} \\ l_0 + 1 & if\, p_i \in \{1000, 1002, 1004, 1006\} \end{cases} \quad (20).$$

Herein, $p_i$ represents an index of a port i, and $\bar{l}_0$ represents an index of an OFDM symbol. Formula (15) represents the third pattern, Formula (16) represents the fourth pattern, Formula (17) and Formula (18) represent the first pattern, and Formula (19) and Formula (20) represent the second pattern. This can simplify configuration signaling design by switching the sending pattern based on redundant information in the CS reference value indicator. In an implementation, a correspondence between a value range of $n_{SRS}^{cs}$ and a pattern may not be limited to the foregoing example.

802: The terminal device sends the uplink reference signal to an access network device based on the sending pattern.

For step 802, refer to step 501.

803: The terminal device receives precoding indication information from the access network device.

For step 803, refer to step 502.

804: The terminal device maps uplink data to antenna ports based on precoding.

For step 804, refer to step 503.

In this embodiment of this application, the access network device can flexibly configure the sending pattern based on a channel status of the terminal device. Specifically, when an uplink transmit power of the terminal device is limited, a sending pattern that occupies a plurality of OFDM symbols may be configured. However, when a base station has a high requirement on phase precision of the terminal device, a sending pattern that occupies one OFDM symbol may be configured.

FIG. 10 is an interactive flowchart of another communication method according to an embodiment of this application. FIG. 10 shows a signal sending solution when a terminal device uses a frequency domain comb whose comb number is 8 (that is, $K_{TC}$ is 8) to carry SRS ports. A method procedure in FIG. 10 is a possible implementation of the method described in FIG. 5. In this implementation, the terminal device may select a sending pattern from two or more patterns, to obtain a sending pattern appropriate for sending an uplink reference signal. As shown in FIG. 10, the method includes the following steps.

1001: The terminal device determines the sending pattern from the two or more patterns based on a CS reference value indicator that is of the uplink reference signal and that is included in configuration information of an uplink reference signal resource, where the comb number corresponding to the two or more patterns is 8.

For step 1001, refer to step 501. Possible manner 5: N ports in the sending pattern are carried on two frequency domain combs whose frequency domain comb numbers are 8 and two OFDM symbols, and two ports located on a same frequency domain comb and OFDM symbol correspond to two different CS values. Possible manner 6: N ports in the sending pattern are carried on one frequency domain comb whose frequency domain comb number is 8 and two OFDM symbols, and four ports located on a same frequency domain comb and OFDM symbol correspond to four different CS values. Possible manner 7: N ports in the sending pattern are carried on two frequency domain combs whose frequency domain comb numbers are 8 and one OFDM symbol, and four ports located on a same frequency domain comb and OFDM symbol correspond to four different CS values. Possible manner 8: N ports in the sending pattern are carried on four frequency domain combs whose frequency domain comb numbers are 8 and one OFDM symbol, and two ports located on a same frequency domain comb and OFDM symbol correspond to two different CS values. A time-frequency resource mapping manner corresponding to the sending pattern may be any one of the following: a frequency division mapping mode 1: two combs+four CSs (Manner 7); a frequency division mapping mode 2: four combs+two CSs (Manner 8); a frequency division+time-frequency mapping mode 1: two combs+two OFDM symbols+two CSs (Manner 5); and a frequency division+time-frequency mapping mode 2: two OFDM symbols+four CSs (Manner 6).

In a possible implementation, the configuration information further includes a comb location indicator $\bar{k}_{TC}$ and a frequency domain comb number $K_{TC}$, and the two or more patterns include at least two of a first pattern, a second pattern, a third pattern, and a fourth pattern.

In the first pattern (corresponding to Manner 5), a comb corresponding to a first port set of the N ports is $(\bar{k}_{TC} + K_{TC}/2) \bmod K_{TC}$, a comb corresponding to a second port set of the N ports is $k_{TC}$, an index of an OFDM symbol corresponding to two ports in the first port set is $l$, an OFDM index corresponding to the other two ports in the first port set is $(l+n)$, an OFDM index corresponding to two ports in the second port set is l, an index of an OFDM symbol corresponding to the other two ports in the second port set is $(l+n)$, $n$ is an integer greater than or equal to 1, and $l$ is an integer greater than or equal to 0.

In the second pattern (corresponding to Manner 6), a comb corresponding to a first port set and a second port set of the N ports is $\bar{k}_{TC}$, an index of an OFDM symbol corresponding to the first port set is $l$, and an index of an OFDM symbol corresponding to the second port set is $(l+n)$, and $l$ and $n$ are integers greater than or equal to 1.

In the third pattern (corresponding to Manner 7), a comb corresponding to a first port set of the N ports is $(\bar{k}_{TC} + K_{TC}/2) \bmod K_{TC}$, a comb corresponding to a second port set of the N ports is $\bar{k}_{TC}$, an index of an OFDM symbol corresponding to the first port set and the second port set is l, and $l$ is an integer greater than or equal to 1.

In the fourth pattern (corresponding to Manner 8), combs respectively corresponding to four port sets of the N ports are $(\bar{k}_{TC} + K_{TC}/2) \bmod K_{TC}$, $(\bar{k}_{TC} + K_{TC}/4) \bmod K_{TC}$, $(\bar{k}_{TC} + 3 * K_{TC}/4) \bmod K_{TC}$, and $\bar{k}_{TC}$, an index of an OFDM symbol corresponding to the four port sets is $l$, and $l$ is an integer greater than or equal to 1.

Ports included in the first port set are different from ports included in the second port set.

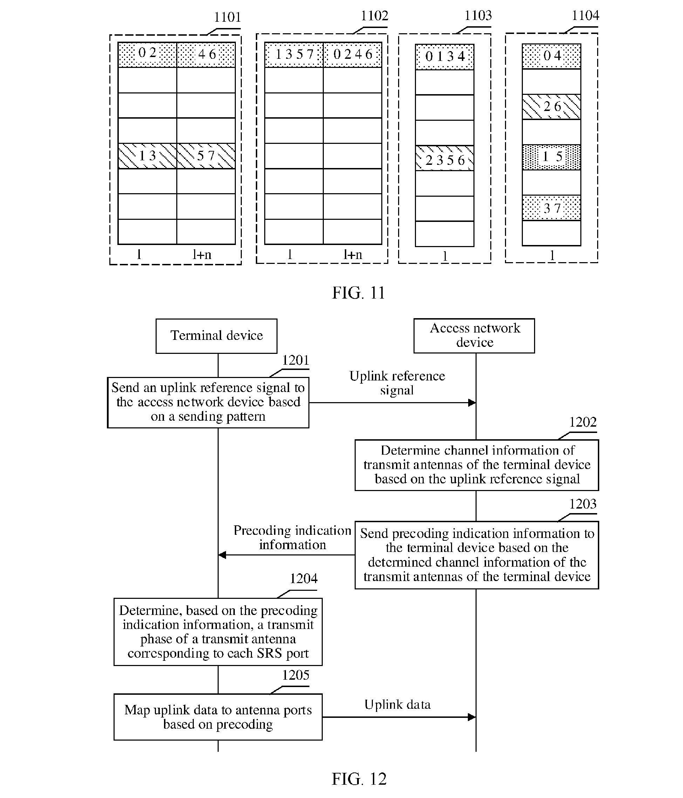

In a possible implementation, the first pattern, the second pattern, the third pattern, and the fourth pattern each include eight ports, the first port set is {1, 3, 5, 7}, the second port set is {0, 2, 4, 6}, a third port set is {0, 1, 3, 4}, a second port set is {2, 3, 5, 6}, and the four port sets included in the fourth pattern are {0, 4}, {2, 6}, {1, 5}, and {3, 7}. A port 0 to a port 7 indicate a port 1000 to a port 1007. That is, a port 0 indicates a port 1000, a port 1 indicates a port 1001, and so on. FIG. 11 shows examples of the first pattern, the second pattern, the third pattern, and the fourth pattern according to this embodiment of this application. As shown in FIG. 11, 1101 represents the first pattern, 1102 represents the second pattern, 1103 represents the third pattern, 1104 represents the fourth pattern, and rectangular frames with different shadings belong to different combs. The comb corresponding to the first port set in the first pattern is 4 (namely, $(\bar{k}_{TC} + K_{TC}/2) \bmod K_{TC}$), the index of the OFDM symbol corresponding to the port 1 and a port 3 is $l$, and the index of the OFDM symbol corresponding to a port 5 and the port 7 is $(l+n)$; and the comb corresponding to the second port set in the first pattern is 0 (namely, $\bar{k}_{TC}$), the index of the OFDM symbol corresponding to the port 0 and a port 2 is $l$, and the index of the OFDM symbol corresponding to a port 4 and a port 6 is $(l+n)$. In the second pattern, the comb corresponding to the first port set and the second port set is 0 (namely, $\bar{k}_{TC}$), the index of the OFDM symbol corresponding to the first port set is $l$, and the index of the OFDM symbol corresponding to the second port set is $(l+n)$. The comb corresponding to the fourth port set in the third pattern is 2 (namely, $(\bar{k}_{TC} + K_{TC}/2) \bmod K_{TC}$), the comb corresponding to the third port set in the third pattern is 0 (namely, $\bar{k}_{TC}$), and the index of the OFDM symbol corresponding to the third port set and the fourth port set is $l$. In the fourth pattern, the combs respectively corresponding to the four port sets are 0 (namely, $\bar{k}_{TC}$), 2 (namely, $(\bar{k}_{TC} + K_{TC}/4) \bmod K_{TC}$), 4 (namely, $(\bar{k}_{TC} + K_{TC}/2) \bmod K_{TC}$), and 6 (namely, $(\bar{k}_{TC} + 3 * K_{TC}/4) \bmod K_{TC}$), and the index of the OFDM symbol corresponding to the four port sets is $l$. It should be understood that port numbers included in the port sets are merely examples, and different port sets may further include a combination of other port numbers.

A possible implementation of step 1001 is as follows: When the CS reference value indicator (namely, $n_{SRS}^{cs}$) is included in a first set, the terminal device uses the fourth pattern in the first pattern and the fourth pattern as the sending pattern; or when the CS reference value indicator is included in a second set, the terminal device uses the first pattern in the first pattern and the fourth pattern as the sending pattern, where the first set is $\{0, ..., n_{SRS}^{cs,max}/2 - 1\}$, and the second set is $\{n_{SRS}^{cs,max}/2, ..., n_{SRS}^{cs,max} - 1\}$. This can simplify configuration signaling design by switching the sending pattern based on redundant information in the CS reference value indicator.

Another possible implementation of step 1001 is as follows: When the CS reference value indicator (namely, $n_{SRS}^{cs}$) is included in a first set, the terminal device uses the third pattern in the second pattern and the third pattern as the sending pattern; or when the CS reference value indicator is included in a second set, the terminal device uses the second pattern in the second pattern and the third pattern as the sending pattern, where the first set is $\{0, ..., n_{SRS}^{cs,max}/2 - 1\}$,

and the second set is $\{n_{SRS}^{cs,max}/2, ..., n_{SRS}^{cs,max} - 1\}$. This can simplify configuration signaling design by switching the sending pattern based on redundant information in the CS reference value indicator.

Another possible implementation of step 1001 is as follows: When the CS reference value indicator (namely, $n_{SRS}^{cs}$) is included in a first set, the terminal device uses the first pattern in the first pattern and the second pattern as the sending pattern; or when the CS reference value indicator is included in a second set, the terminal device uses the second pattern in the first pattern and the second pattern as the sending pattern, where the first set is $\{0, ..., n_{SRS}^{cs,max}/2 - 1\}$, and the second set is $\{n_{SRS}^{cs,max}/2, ..., n_{SRS}^{cs,max} - 1\}$. Formulas corresponding to the possible implementation are as follows:

If

$$n_{SRS}^{cs} \in \{0, ..., n_{SRS}^{cs,max}/2 - 1\},$$

$$k_{TC}^{(p_i)} = \begin{cases} (\bar{k}_{TC} + K_{TC} \times 2/4)_{mod} K_{TC} & if\, p_i \in \{1001, 1005\} \\ (\bar{k}_{TC} + K_{TC}/4)_{mod} K_{TC} & if\, p_i \in \{1002, 1006\} \\ (\bar{k}_{TC} + 3 * K_{TC}/4)_{mod} K_{TC} & if\, p_i \in \{1003, 1007\} \\ \bar{k}_{TC} & if\, p_i \in \{1000, 1002\} \end{cases} \quad (21);$$

or
if

$$n_{SRS}^{cs} \in \{n_{SRS}^{cs,max}/2, ..., n_{SRS}^{cs,max} - 1\},$$

$$k_{TC}^{(p_i)} = \begin{cases} (\bar{k}_{TC} + K_{TC}/2)\, mod\, K_{TC} & if\, p_i \in \{1001, 1003, 1005, 1007\} \\ \bar{k}_{TC} & if\, p_i \in \{1000, 1002, 1004, 1006\} \end{cases} \quad (22),$$

and

$$\bar{l}_0 = \begin{cases} l_0 & if\, p_i \in \{1000, 1001, 1002, 1003\} \\ l_0 + 1 & if\, p_i \in \{1004, 1005, 1006, 1007\} \end{cases} \quad (23).$$

Herein, $p_i$ represents an index of a port i, and $\bar{l}_0$ represents an index of an OFDM symbol. Formula (21) represents the fourth pattern, and Formula (22) and Formula (23) represent the first pattern. In an implementation, a correspondence between a value range of $n_{SRS}^{cs}$ and a pattern may not be limited to the foregoing example.

Another possible implementation of step 1001 is as follows: When the CS reference value indicator (namely, $n_{SRS}^{cs}$) is included in a first set, the terminal device uses the third pattern in the third pattern and the fourth pattern as the sending pattern; or when the CS reference value indicator is included in a second set, the terminal device uses the fourth pattern in the third pattern and the fourth pattern as the sending pattern, where the first set is $\{0, ..., n_{SRS}^{cs,max}/2 - 1\}$, and the second set is $\{n_{SRS}^{cs,max}/2, ..., n_{SRS}^{cs,max} - 1\}$. This can simplify configuration signaling design by switching the sending pattern based on redundant information in the CS reference value indicator.

Another possible implementation of step 1001 is as follows: When the CS reference value indicator (namely, $n_{SRS}^{cs}$) is included in a first set, the terminal device uses the first pattern in the first pattern and the third pattern as the sending pattern; or when the CS reference value indicator is included in a second set, the terminal device uses the third pattern in the first pattern and the third pattern as the sending pattern, where the first set is $\left\{0, ..., n_{SRS}^{cs,max}/2 - 1\right\}$ , and the second set is $\left\{n_{SRS}^{cs,max}/2, ..., n_{SRS}^{cs,max} - 1\right\}$ . This can simplify configuration signaling design by switching the sending pattern based on redundant information in the CS reference value indicator.

Another possible implementation of step 1001 is as follows: When the CS reference value indicator (namely, $n_{SRS}^{cs}$ ) is included in a first set, the terminal device uses the second pattern in the second pattern and the fourth pattern as the sending pattern; or when the CS reference value indicator is included in a second set, the terminal device uses the fourth pattern in the second pattern and the fourth pattern as the sending pattern, where the first set is $\left\{0, ..., n_{SRS}^{cs,max}/2 - 1\right\}$ , and the second set is $\left\{n_{SRS}^{cs,max}/2, ..., n_{SRS}^{cs,max} - 1\right\}$ . This can simplify configuration signaling design by switching the sending pattern based on redundant information in the CS reference value indicator.

Another possible implementation of step 1001 is as follows: The terminal device determines the sending pattern from the two or more patterns based on a CS reference value indicator, a maximum CS indicator $N_{ap}^{SRS}$ , and a quantity of symbols $N_{symb}^{SRS}$ that are included in configuration information of an uplink reference signal resource. The two or more patterns include at least two of a first pattern, a second pattern, a third pattern, and a fourth pattern, and the quantity of symbols indicates a quantity of OFDM symbols that carry the N ports. For example, the terminal device determines the sending pattern from the first pattern, the second pattern, the third pattern, and the fourth pattern based on the CS reference value indicator, the maximum CS indicator, and the quantity of symbols that are included in the configuration information of the uplink reference signal resource. Formulas corresponding to this implementation are as follows:

If $n_{SRS}^{cs} \in \left\{0, ..., n_{SRS}^{cs,max}/2 - 1\right\}$ and $N_{ap}^{SRS} = 8$ and $N_{symb}^{SRS} = 1$ (frequency division mode),

$$k_{TC}^{(p_i)} = \begin{cases} \left(\bar{k}_{TC} + K_{TC} \times 2/4\right) \bmod K_{TC} & if\, p_i \in \{1001, 1005\} \\ \left(\bar{k}_{TC} + K_{TC}/4\right) \bmod K_{TC} & if\, p_i \in \{1002, 1006\} \\ \left(\bar{k}_{TC} + 3 * K_{TC}/4\right) \bmod K_{TC} & if\, p_i \in \{1003, 1007\} \\ \bar{k}_{TC} & if\, p_i \in \{1000, 1002\} \end{cases} \quad (24);$$

if

$$n_{SRS}^{cs} \in \left\{n_{SRS}^{cs,max}/2, ..., n_{SRS}^{cs,max} - 1\right\} and\, N_{ap}^{SRS} = 8\, and\, N_{symb}^{SRS} = 1,$$

$$k_{TC}^{(p_i)} = \begin{cases} \left(\bar{k}_{TC} + K_{TC}/2\right) \bmod K_{TC} & if\, p_i \in \{1002, 1003, 1005, 1006\} \\ \bar{k}_{TC} & if\, p_i \in \{1000, 1001, 1003, 1004\} \end{cases} \quad (25);$$

if

$$n_{SRS}^{cs} \in \left\{n_{SRS}^{cs,max}/2, ..., n_{SRS}^{cs,max} - 1\right\} and\, N_{ap}^{SRS} = 8\, and\, N_{symb}^{SRS} > 1,$$

$$k_{TC}^{(p_i)} = \begin{cases} \left(\bar{k}_{TC} + K_{TC}/2\right) \bmod K_{TC} & if\, p_i \in \{1001, 1003, 1005, 1007\} \\ \bar{k}_{TC} & if\, p_i \in \{1000, 1002, 1004, 1006\} \end{cases} \quad (26),$$

and

$$\bar{l}_0 = \begin{cases} l_0 & \text{if } p_i \in \{1001, 1005\} \\ l_0 + 1 & \text{if } p_i \in \{1002, 1006\} \\ l_0 + 1 & \text{if } p_i \in \{1003, 1007\} \\ l_0 & \text{if } p_i \in \{1000, 1004\} \end{cases} \quad (27);$$

or
if

$$n_{SRS}^{cs} \in \left\{0, \dots, n_{SRS}^{cs,max}/2 - 1\right\} \text{ and } N_{ap}^{SRS} = 8 \text{ and } N_{symb}^{SRS} > 1,$$

$$k_{TC}^{(p_i)} = \bar{k}_{TC} \quad (28),$$

and

$$\bar{l}_0 = \begin{cases} l_0 & \text{if } p_i \in \{1001, 1003, 1005, 1007\} \\ l_0 + 1 & \text{if } p_i \in \{1000, 1002, 1004, 1006\} \end{cases} \quad (29).$$

Herein, $p_i$ represents an index of a port i, and $\bar{l}_0$ represents an index of an OFDM symbol. Formula (24) represents the fourth pattern, Formula (25) represents the third pattern, Formula (26) and Formula (27) represent the first pattern, and Formula (28) and Formula (29) represent the second pattern. This can simplify configuration signaling design by switching the sending pattern based on redundant information in the CS reference value indicator. In an implementation, a correspondence between a value range of $n_{SRS}^{cs}$ and a pattern may not be limited to the foregoing example. This application provides several first patterns, second patterns, third patterns, and fourth patterns corresponding to different comb numbers. The comb numbers corresponding to the first pattern, the second pattern, and the third pattern in the method procedure in FIG. 6 are 2. The comb numbers corresponding to the first pattern, the second pattern, the third pattern, and the fourth pattern in the method procedure in FIG. 8 are 4. The comb numbers corresponding to the first pattern, the second pattern, the third pattern, and the fourth pattern in the method procedure in FIG. 10 are 8.

1002: The terminal device sends the uplink reference signal to an access network device based on the sending pattern.

For step 1002, refer to step 501.

1003: The terminal device receives precoding indication information from the access network device.

For step 1003, refer to step 502.

1004: The terminal device maps uplink data to antenna ports based on precoding.

For step 1004, refer to step 503.

In this embodiment of this application, the access network device can flexibly configure the sending pattern based on a channel status of the terminal device. Specifically, when an uplink transmit power of the terminal device is limited, a sending pattern that occupies a plurality of OFDM symbols may be configured. However, when a base station has a high requirement on phase precision of the terminal device, a sending pattern that occupies one OFDM symbol may be configured.

FIG. 12 is an interactive flowchart of another communication method according to an embodiment of this application. A method procedure in FIG. 12 is a possible implementation of the method described in FIG. 5. In this implementation, an access network device determines channel information of transmit antennas of a terminal device based on an 8-port SRS, and then indicates a TPMI based on the 8-port SRS. As shown in FIG. 12, the method includes the following steps.

1201: The terminal device sends an uplink reference signal to the access network device based on a sending pattern.

Correspondingly, the access network device receives the uplink reference signal from the terminal device. For step 1201, refer to step 501. The uplink reference signal is the 8-port SRS. The 8-port SRS is configured in an SRS resource set for transmitting an uplink codebook. An uplink reference signal resource of the uplink reference signal includes eight ports.

1202: The access network device determines the channel information of the transmit antennas of the terminal device based on the uplink reference signal.

The transmit antennas of the terminal device correspond to the eight ports included in the uplink reference signal resource.

1203: The access network device sends precoding indication information to the terminal device based on the determined channel information of the transmit antennas of the terminal device.

The precoding indication information indicates precoding for transmitting uplink data, and rows of a matrix (which may be referred to as a precoding matrix) corresponding to the precoding are in one-to-one correspondence with SRS ports in the uplink reference signal. The transmit antenna that is of the terminal device and that corresponds to the SRS port is used to send a PUSCH, and a transmit phase of a transmit antenna corresponding to each SRS port is determined based on each row of the matrix. Alternatively, the precoding indication information includes the TPMI, the TPMI is in a form of a matrix, a quantity of rows of the matrix is 8 (determined based on the quantity of corresponding SRS ports), and rows of the TPMI are in one-to-one correspondence with the SRS ports. The transmit antenna that is of the terminal device and that corresponds to the SRS port is used to send a PUSCH, and a transmit phase of a transmit antenna corresponding to each SRS port is determined based on each row in a TPMI.

1204: The terminal device determines, based on the precoding indication information, the transmit phase of the transmit antenna corresponding to each SRS port.

1205: The terminal device maps the uplink data to antenna ports based on the precoding.

Correspondingly, the access network device receives the uplink data from the terminal device. In this application, the transmit antenna and the antenna port may be replaced with each other.

In this embodiment of this application, the access network device determines the channel information of the transmit antennas of the terminal device based on the uplink reference signal, may determine the channel information of the transmit antennas corresponding to the eight SRS ports, and send the corresponding precoding indication information. Therefore, signaling overheads are low.

The foregoing describes the communication solutions that are provided in this application and that can enable strong orthogonality between the ports and/or enable the high transmit power of each port. The following describes a communication solution that is provided in this application and that supports a time-frequency mapping solution of an 8-port SRS resource. In this solution, orthogonality between ports can reach orthogonal levels of the existing 2-port SRS resource and 4-port SRS resource.

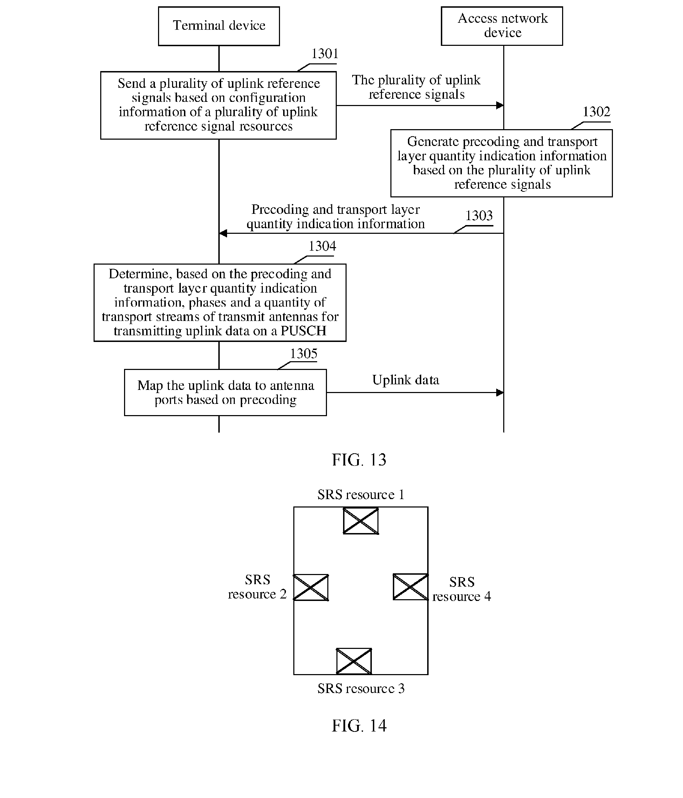

FIG. 13 is an interactive flowchart of another communication method according to an embodiment of this application. As shown in FIG. 13, the method includes the following steps.

1301: A terminal device sends a plurality of uplink reference signals based on configuration information of a plurality of uplink reference signal resources.

Correspondingly, an access network device receives the plurality of uplink reference signals from the terminal device.

1302: The access network device generates precoding and transport layer quantity indication information based on the plurality of uplink reference signals.

The precoding and transport layer quantity indication information indicates precoding and a quantity of transport layers for transmitting uplink data, the precoding and transport layer quantity indication information corresponds to the plurality of uplink reference signals, the quantity of transport layers is less than or equal to a sum of quantities of ports included in the plurality of uplink reference signals, a quantity of rows of a matrix corresponding to the precoding is the sum of quantities of ports included in the plurality of uplink reference signals, and the rows of the matrix are in one-to-one correspondence with the ports included in the plurality of uplink reference signals. The precoding and transport layer quantity indication information may be referred to as precoding indication information. The precoding and transport layer quantity indication information may include a TPMI, and the TPMI indicates a transmit phase of a transmit antenna corresponding to a PUSCH.

Optionally, the plurality of uplink reference signals are configured to be for codebook-based uplink transmission.

Optionally, the precoding and transport layer quantity indication information is obtained by the access network device based on the uplink reference signals.

Optionally, transmit antennas for transmitting the uplink data correspond to ports in the plurality of uplink reference signals.

Optionally, the precoding and transport layer quantity indication information includes a plurality of pieces of first indication information, and the plurality of pieces of first indication information are in one-to-one correspondence with the plurality of uplink reference signal resources.

Optionally, the quantity of transport layers for the uplink data is a sum of quantities of transport layers indicated in the plurality of pieces of first indication information.

In this embodiment of this application, the uplink reference signals corresponding to codebook-based uplink data transmission are carried on the plurality of uplink reference signal resources. This method can support a flexible resource configuration of the uplink reference signals, and a corresponding precoding indication and a corresponding transport layer quantity indication.

The time-frequency mapping solution of the 8-port SRS resource provided in this application is to support 8-port SRS sending in a manner of supporting aggregation of a plurality of SRS resources. Because a time-frequency resource location of each SRS resource can be independently configured, an 8-port SRS can be split and sent on a plurality of OFDM symbols. This supports an increase of an SRS transmit power, and improves channel measurement precision. In addition, in this manner, design of 2-port SRS and 4-port SRS resources supported by an existing protocol and design of reusing an existing TPMI codebook to a maximum extent can be used. In this application, simplified 8-port SRS design is as follows: An SRI may indicate a plurality of SRS resources, a quantity of rows of a TPMI is a sum of all quantities of ports included in the indicated plurality of SRS resources, F ports included in each SRS resource correspond to F consecutive rows of the TPMI, and indexes of the SRS resources in ascending order correspond to rows in ascending order of the TPMI. This manner can reuse existing 2-port and 4-port SRS resource design.

The following describes two possible configuration manners of the 8-port SRS resource.

Configuration manner 1: Four 2-port SRS resources are configured. FIG. 14 is a diagram of an antenna architecture according to an embodiment of this application. In FIG. 14, an SRS resource 1, an SRS resource 2, an SRS resource 3, and an SRS resource 4 each are a 2-port SRS resource.

In a possible implementation, each group of dual-polarized antennas of the terminal device corresponds to one 2-port SRS resource.

In a possible implementation, four groups of dual-polarized antennas of the terminal device may separately perform coherent transmission, but the four groups of antennas cannot perform coherent transmission with each other. The terminal device may determine, according to Formula (8), a mapping from a stream to a port of the SRS resource, where each SRS resource corresponds to an independent layer mapping.

In a possible implementation, the terminal device receives an SRI sent by a base station, where the SRI indicates to select some or all SRS resources from a plurality of SRS resources configured by the base station, and the four SRS resources are indicated by the SRI.

In a possible implementation, each 2-port SRS resource corresponds to one precoding indication, and DCI for scheduling uplink data transmission includes four precoding and transport layer quantity indication information fields. For precoding corresponding to a precoding indication in each field, refer to Table 2 and Table 3. Table 2 shows a precoding matrix corresponding to a 2-port SRS and 1-layer PUSCH transmission. Table 2 shows a precoding matrix corresponding to a 2-port SRS and 2-layer PUSCH transmission. The quantity of transport layers for transmitting the uplink data is a sum of quantities of transport layers indicated by the four fields.

**Table 2**

| TPMI index | Precoding matrix $W$ | | | | | | | |
|---|---|---|---|---|---|---|---|---|
| 0-5 | $\frac{1}{\sqrt{2}}\begin{bmatrix}1\\0\end{bmatrix}$ | $\frac{1}{\sqrt{2}}\begin{bmatrix}0\\1\end{bmatrix}$ | $\frac{1}{\sqrt{2}}\begin{bmatrix}1\\1\end{bmatrix}$ | $\frac{1}{\sqrt{2}}\begin{bmatrix}1\\-1\end{bmatrix}$ | $\frac{1}{\sqrt{2}}\begin{bmatrix}1\\j\end{bmatrix}$ | $\frac{1}{\sqrt{2}}\begin{bmatrix}1\\-j\end{bmatrix}$ | - | - |

**Table 3**

| TPMI index | Precoding matrix $W$ | | |
|---|---|---|---|
| 0-2 | $\frac{1}{\sqrt{2}}\begin{bmatrix}1&0\\0&1\end{bmatrix}$ | $\frac{1}{2}\begin{bmatrix}1&1\\1&-1\end{bmatrix}$ | $\frac{1}{2}\begin{bmatrix}1&1\\j&-j\end{bmatrix}$ |

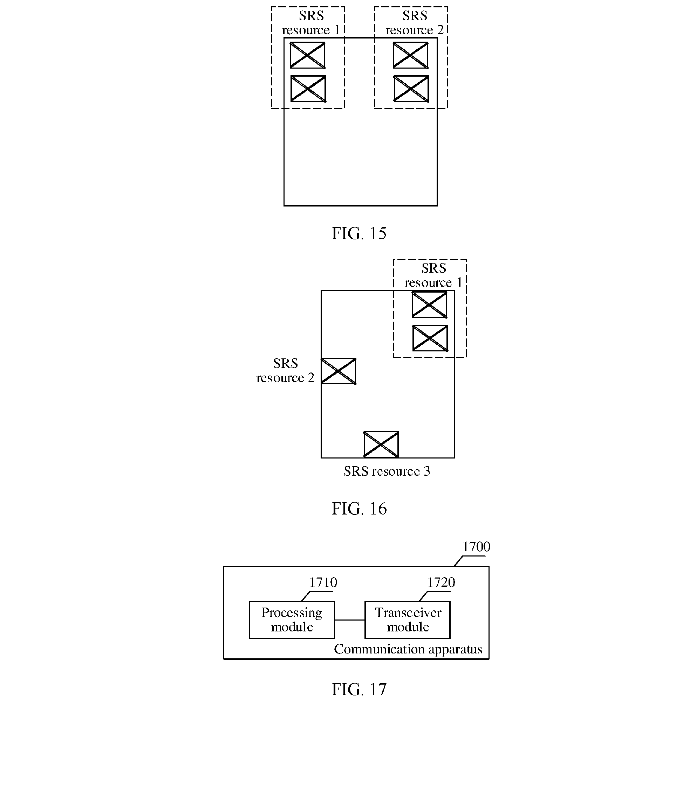

Configuration manner 2: One 4-port SRS resource and two 2-port SRS resources are configured. FIG. 15 is a diagram of an antenna architecture according to an embodiment of this application. In FIG. 15, an SRS resource 1 is a 4-port SRS resource, and an SRS resource 2 and an SRS resource 3 each are a 2-port SRS resource.

In a possible implementation, two groups of dual-polarized antennas corresponding to the 2-port SRS resources of the terminal device may separately perform coherent transmission, and two groups of dual-polarized antennas corresponding to the 4-port SRS resource may perform coherent transmission. The terminal device may determine, according to Formula (8), a mapping from a layer to a port of each SRS resource, where each SRS resource corresponds to an independent layer mapping.

In a possible implementation, the terminal device receives an SRI sent by a base station, where the SRI indicates to select some or all SRS resources from a plurality of SRS resources configured by the base station, and the three SRS resources are indicated by the SRI.

In a possible implementation, each SRS resource corresponds to one precoding indication, and DCI for scheduling uplink data transmission includes three precoding and transport layer quantity indication information fields.

For the 2-port SRS resource, for precoding corresponding to a precoding indication in each field, refer to Table 2 and Table 3. For the 4-port SRS resource, for precoding corresponding to a precoding indication in each field, refer to Table 4 to Table 8. The quantity of transport layers for transmitting the uplink data is a sum of quantities of transport layers indicated by the three fields. Table 4 shows a precoding matrix corresponding to a 4-port SRS and 1-layer PUSCH transmission. Table 5 shows a precoding matrix corresponding to a 4-port SRS and 1-layer PUSCH transmission. Table 6 shows a precoding matrix corresponding to a 4-port SRS and 2-layer PUSCH transmission. Table 7 shows a precoding matrix corresponding to a 4-port SRS and 3-layer PUSCH transmission. Table 8 shows a precoding matrix corresponding to a 4-port SRS and 4-layer PUSCH transmission.

**Table 4**

| TPMI index | Precoding matrix $W$ | | | | | | | |
|---|---|---|---|---|---|---|---|---|
| 0-7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8-15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16-23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ |
| 24-27 | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ | - | - | - | - |

**Table 5**

| TPMI index | Precoding matrix $W$ | | | | | | | |
|---|---|---|---|---|---|---|---|---|
| 0-7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8-15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\1\end{bmatrix}$ | $\frac{1}{2}\begin{bmatrix}1\\1\\j\\j\end{bmatrix}$ | $\frac{1}{2}\begin{bmatrix}1\\1\\-1\\-1\end{bmatrix}$ | $\frac{1}{2}\begin{bmatrix}1\\1\\-j\\-j\end{bmatrix}$ |

(continued)

| TPMI index | Precoding matrix $W$ |
|---|---|
| 16-23 | $\dfrac{1}{2}\begin{bmatrix}1\\j\\1\\j\end{bmatrix}$ $\dfrac{1}{2}\begin{bmatrix}1\\j\\j\\-1\end{bmatrix}$ $\dfrac{1}{2}\begin{bmatrix}1\\j\\-1\\-j\end{bmatrix}$ $\dfrac{1}{2}\begin{bmatrix}1\\j\\-j\\1\end{bmatrix}$ $\dfrac{1}{2}\begin{bmatrix}1\\-1\\1\\-1\end{bmatrix}$ $\dfrac{1}{2}\begin{bmatrix}1\\-1\\j\\-j\end{bmatrix}$ $\dfrac{1}{2}\begin{bmatrix}1\\-1\\-1\\1\end{bmatrix}$ $\dfrac{1}{2}\begin{bmatrix}1\\-1\\-j\\j\end{bmatrix}$ |
| 24-27 | $\dfrac{1}{2}\begin{bmatrix}1\\-j\\1\\-j\end{bmatrix}$ $\dfrac{1}{2}\begin{bmatrix}1\\-j\\j\\1\end{bmatrix}$ $\dfrac{1}{2}\begin{bmatrix}1\\-j\\-1\\j\end{bmatrix}$ $\dfrac{1}{2}\begin{bmatrix}1\\-j\\-j\\-1\end{bmatrix}$ - - - - |

**Table 6**

| TPMI index | Precoding matrix $W$ | | |
|---|---|---|---|
| 0-3 | $\dfrac{1}{2}\begin{bmatrix}1&0\\0&1\\0&0\\0&0\end{bmatrix}$ | $\dfrac{1}{2}\begin{bmatrix}1&0\\0&0\\0&1\\0&0\end{bmatrix}$ | $\dfrac{1}{2}\begin{bmatrix}1&0\\0&0\\0&0\\0&1\end{bmatrix}$    $\dfrac{1}{2}\begin{bmatrix}0&0\\1&0\\0&1\\0&0\end{bmatrix}$ |
| 4-7 | $\dfrac{1}{2}\begin{bmatrix}0&0\\1&0\\0&0\\0&1\end{bmatrix}$ | $\dfrac{1}{2}\begin{bmatrix}0&0\\0&0\\1&0\\0&1\end{bmatrix}$ | $\dfrac{1}{2}\begin{bmatrix}1&0\\0&1\\1&0\\0&-j\end{bmatrix}$    $\dfrac{1}{2}\begin{bmatrix}1&0\\0&1\\1&0\\0&j\end{bmatrix}$ |
| 8-11 | $\dfrac{1}{2}\begin{bmatrix}1&0\\0&1\\-j&0\\0&1\end{bmatrix}$ | $\dfrac{1}{2}\begin{bmatrix}1&0\\0&1\\-j&0\\0&-1\end{bmatrix}$ | $\dfrac{1}{2}\begin{bmatrix}1&0\\0&1\\-1&0\\0&-j\end{bmatrix}$    $\dfrac{1}{2}\begin{bmatrix}1&0\\0&1\\-1&0\\0&j\end{bmatrix}$ |
| 12-15 | $\dfrac{1}{2}\begin{bmatrix}1&0\\0&1\\j&0\\0&1\end{bmatrix}$ | $\dfrac{1}{2}\begin{bmatrix}1&0\\0&1\\j&0\\0&-1\end{bmatrix}$ | $\dfrac{1}{2\sqrt{2}}\begin{bmatrix}1&1\\1&1\\1&-1\\1&-1\end{bmatrix}$    $\dfrac{1}{2\sqrt{2}}\begin{bmatrix}1&1\\1&1\\j&-j\\j&-j\end{bmatrix}$ |
| 16-19 | $\dfrac{1}{2\sqrt{2}}\begin{bmatrix}1&1\\j&j\\1&-1\\j&-j\end{bmatrix}$ | $\dfrac{1}{2\sqrt{2}}\begin{bmatrix}1&1\\j&j\\j&-j\\-1&1\end{bmatrix}$ | $\dfrac{1}{2\sqrt{2}}\begin{bmatrix}1&1\\-1&-1\\1&-1\\-1&1\end{bmatrix}$    $\dfrac{1}{2\sqrt{2}}\begin{bmatrix}1&1\\-1&-1\\j&-j\\-j&j\end{bmatrix}$ |
| 20-21 | $\dfrac{1}{2\sqrt{2}}\begin{bmatrix}1&1\\-j&-j\\1&-1\\-j&j\end{bmatrix}$ | $\dfrac{1}{2\sqrt{2}}\begin{bmatrix}1&1\\-j&-j\\j&-j\\1&-1\end{bmatrix}$ | -    - |

**Table 7**

| TPMI index | Precoding matrix $W$ | | | |
| --- | --- | --- | --- | --- |
| 0-3 | $\frac{1}{2}\begin{bmatrix} 1 & 0 & 0 \\ 0 & 1 & 0 \\ 0 & 0 & 1 \\ 0 & 0 & 0 \end{bmatrix}$ | $\frac{1}{2}\begin{bmatrix} 1 & 0 & 0 \\ 0 & 1 & 0 \\ 1 & 0 & 0 \\ 0 & 0 & 1 \end{bmatrix}$ | $\frac{1}{2}\begin{bmatrix} 1 & 0 & 0 \\ 0 & 1 & 0 \\ -1 & 0 & 0 \\ 0 & 0 & 1 \end{bmatrix}$ | $\frac{1}{2\sqrt{3}}\begin{bmatrix} 1 & 1 & 1 \\ 1 & -1 & 1 \\ 1 & 1 & -1 \\ 1 & -1 & -1 \end{bmatrix}$ |
| 4-6 | $\frac{1}{2\sqrt{3}}\begin{bmatrix} 1 & 1 & 1 \\ 1 & -1 & 1 \\ j & j & -j \\ j & -j & -j \end{bmatrix}$ | $\frac{1}{2\sqrt{3}}\begin{bmatrix} 1 & 1 & 1 \\ -1 & 1 & -1 \\ 1 & 1 & -1 \\ -1 & 1 & 1 \end{bmatrix}$ | $\frac{1}{2\sqrt{3}}\begin{bmatrix} 1 & 1 & 1 \\ -1 & 1 & -1 \\ j & j & -j \\ -j & j & j \end{bmatrix}$ | - |

**Table 8**

| TPMI index | Precoding matrix $W$ | | | |
| --- | --- | --- | --- | --- |
| 0-3 | $\frac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}$ | $\frac{1}{2\sqrt{2}}\begin{bmatrix} 1 & 1 & 0 & 0 \\ 0 & 0 & 1 & 1 \\ 1 & -1 & 0 & 0 \\ 0 & 0 & 1 & -1 \end{bmatrix}$ | $\frac{1}{2\sqrt{2}}\begin{bmatrix} 1 & 1 & 0 & 0 \\ 0 & 0 & 1 & 1 \\ j & -j & 0 & 0 \\ 0 & 0 & j & -j \end{bmatrix}$ | $\frac{1}{4}\begin{bmatrix} 1 & 1 & 1 & 1 \\ 1 & -1 & 1 & -1 \\ 1 & 1 & -1 & -1 \\ 1 & -1 & -1 & 1 \end{bmatrix}$ |
| 4 | $\frac{1}{4}\begin{bmatrix} 1 & 1 & 1 & 1 \\ 1 & -1 & 1 & -1 \\ j & j & -j & -j \\ j & -j & -j & j \end{bmatrix}$ | - | - | - |

The transmit antenna of the terminal device may also have a single polarization characteristic.

Configuration manner 3: Two 4-port SRS resources are configured. FIG. 16 is a diagram of another antenna architecture according to an embodiment of this application. In FIG. 16, an SRS resource 1 and an SRS resource 2 each are a 4-port SRS resource.

In a possible implementation, every two groups of dual-polarized antennas of the terminal device correspond to one 4-port SRS resource, and the two groups of dual-polarized antennas of the terminal device and the other two groups of dual-polarized antennas cannot perform coherent transmission with each other. The terminal device may determine, according to Formula (8), a mapping from a stream to a port of the SRS resource, and each SRS resource corresponds to an independent stream and stream mapping.

In a possible implementation, the terminal device receives an SRI sent by a base station, where the SRI indicates to select some or all SRS resources from a plurality of SRS resources configured by the base station, and the two SRS resources are indicated by the SRI.

In a possible implementation, each SRS resource corresponds to one precoding indication, and DCI for scheduling uplink data transmission includes two precoding and transport layer quantity indication information fields. For precoding corresponding to a precoding indication in each field, refer to Table 3 to Table 6. The quantity of transport layers for transmitting the uplink data is a sum of quantities of transport layers indicated by the two fields.

In another possible implementation, each group of polarized antennas of the terminal device corresponds to one 4-port SRS resource. That is, different SRS resources correspond to different polarization directions. The eight transmit antennas of the terminal device have a coherent transmission capability. That is, the terminal device has a fully coherent sending capability.

In a possible implementation, the precoding is a full coherence codeword. The full coherence codeword means that for each layer (each column of the precoding matrix), matrix elements corresponding to eight ports are all non-zero. In a possible implementation, the plurality of uplink reference signals are a plurality of SRSs, the plurality of uplink reference signal resources are a plurality of SRS resources, the plurality of uplink reference signal resources include two first SRS resources, and the first SRS resource includes four ports. For example, the two first SRS resources include an SRS resource 1 and an SRS resource 2, an antenna port corresponding to a port of the SRS resource 1 is in a first polarization direction, and an antenna port corresponding to a port of the SRS resource 2 is in a second polarization direction; or for an $i^{th}$ stream of uplink data transmission, precoding corresponding to a port of the SRS resource 1 is $v_i$, precoding corresponding to a port of the SRS resource 2 is $\varphi_i \times v_i$, $\varphi_i = e^{j\pi n/2}$, and $n$ is an integer; and a quantity of elements in $v_i$ is 4, and i is an integer.

In a possible design, one column of the precoding matrix in Table 4 to Table 8 may be selected as $v_i$.

In a possible design, $v_i$ is a DFT vector whose quantity of elements is 4.

In the present invention, antennas in one polarization direction are mapped to a same SRS resource, so that it can be ensured that transmit beams in two polarization directions are consistent, and only phase rotation between polarization directions needs to be indicated. This can reduce precoding indication overheads.

In a possible implementation, the plurality of uplink reference signals are a plurality of SRSs, and the plurality of uplink reference signal resources are a plurality of SRS resources; the plurality of uplink reference signal resources include two second SRS resources and one first SRS resource, the first SRS resource includes four ports, and the second SRS resource includes two ports; or the plurality of uplink reference signal resources include four second SRS resources, and the second SRS resource includes two ports. For example, the precoding is a partial coherence codeword, the uplink reference signal resources are SRS resources, a $k^{th}$ SRS resource in the plurality of SRS resources corresponds to an $(i_1^k, \ldots, i_{m_k}^k)^{th}$ layer of the uplink data, and a row in which a non-zero element in an $(i_1^k, \ldots, i_{m_k}^k)^{th}$ column of the precoding is located is in one-to-one correspondence with a port of the $k^{th}$ SRS resource, $m_k$ is a positive integer less than or equal to a quantity of ports in the $k^{th}$ SRS resource, and k is an integer greater than 0; any two of the plurality of SRS resources correspond to different layers of the uplink data; and the uplink data corresponds to a PUSCH or a PUCCH. Partial coherence means that for each layer (each column of the precoding matrix), only some elements in matrix elements corresponding to the eight ports are non-zero. That is, each layer of the uplink data corresponds to only one SRS resource in the plurality of SRS resources.

In the present invention, antennas that can perform coherent transmission are mapped to a same SRS resource. This can ensure accuracy of measuring a channel of a coherent antenna by the base station.

In a possible implementation, the precoding and transport layer quantity indication information includes a plurality of transport indication fields, and the plurality of transport indication fields are in one-to-one correspondence with the plurality of uplink reference signal resources; rows of the matrix corresponding to the precoding in the plurality of transport indication fields are in one-to-one correspondence with the ports in the corresponding uplink reference signal resources; and a quantity of transport layers of the uplink data is a sum of quantities of transport layers indicated by the plurality of transport indication fields. In this implementation, the rows of the matrix corresponding to the precoding in the plurality of transport indication fields are in one-to-one correspondence with the ports in the corresponding uplink reference signal resources. The terminal device can obtain, based on the precoding and transport layer quantity indication information, related information of the plurality of SRS resources for transmitting the uplink data on a PUSCH or a PUCCH, and signaling overheads are low.

1303: The access network device sends the precoding and transport layer quantity indication information to the terminal device.

Correspondingly, the terminal device receives the precoding and transport layer quantity indication information.

1304: The terminal device determines, based on the precoding and transport layer quantity indication information, phases and a quantity of transport streams of the transmit antennas for transmitting the uplink data on the PUSCH.

1305: The terminal device maps the uplink data to the antenna ports based on the precoding.

Correspondingly, the access network device receives the uplink data from the terminal device.

In this embodiment of this application, the access network device sends the precoding and transport layer quantity indication information to the terminal device, where the precoding and transport layer quantity indication information corresponds to the plurality of uplink reference signals, and there is no need to send one piece of precoding and transport layer quantity indication information for each uplink reference signal. This can reduce signaling overheads. In addition, the 8-port SRS can be sent by aggregating the plurality of SRS resources. The 8-port SRS can be split and sent on the plurality of OFDM symbols. This can support an increase of an SRS transmit power, and improve channel measurement precision.

FIG. 17 is a diagram of a structure of a communication apparatus 1700. The communication apparatus 1700 may correspondingly implement functions or steps implemented by the terminal device in the foregoing method embodiments, or may implement functions or steps implemented by the access network device in the foregoing method embodiments. The communication apparatus may include a processing module 1710 and a transceiver module 1720. Optionally, a storage unit may be included. The storage unit may be configured to store instructions (code or a program) and/or data. The processing module 1710 and the transceiver module 1720 may be coupled to the storage unit. For example, the processing module 1710 may read the instructions (the code or the program) and/or the data in the storage unit, to implement a corresponding method. The foregoing units may be independently disposed, or some or all of the foregoing units may be integrated. For example, the transceiver module 1720 may include a sending module and a receiving module.

In some possible implementations, the communication apparatus 1700 can correspondingly implement operations and functions of the terminal device in the foregoing method embodiments. For example, the communication apparatus 1700 may be a terminal device, or may be a component (for example, a chip or a circuit) used in the terminal device. For example, the transceiver module 1720 may be configured to perform all receiving or sending operations performed by the terminal device in the embodiments in FIG. 5, FIG. 6, FIG. 8, FIG. 10, and FIG. 12, for example, step 501, step 502, and step 503 in the embodiment shown in FIG. 5, step 602, step 603, and step 604 in the embodiment shown in FIG. 6, step 802, step 803, and step 804 in the embodiment shown in FIG. 8, step 1002, step 1003, and step 1004 in the embodiment shown in FIG. 10, and step 1201, step 1203, and step 1205 in the embodiment shown in FIG. 12; and/or another process used to support the technology described in this specification. The processing module 1710 is configured to perform all operations other than the sending and receiving operations performed by the terminal device in the embodiments in FIG. 5, FIG. 6, FIG. 8, FIG. 10, and FIG. 12, for example, step 501 and step 503 in the embodiment shown in FIG. 5, step 601 in the embodiment shown in FIG. 6, step 801 in the embodiment shown in FIG. 8, step 1001 in the embodiment shown in FIG. 10, and step 1204 in the embodiment shown in FIG. 12.

In some possible implementations, the communication apparatus 1700 can correspondingly implement operations and functions of the access network device in the foregoing method embodiments. For example, the communication apparatus 1700 may be an access network device, or may be a component (for example, a chip or a circuit) used in the access network device. For example, the transceiver module 1720 may be configured to perform all receiving or sending operations performed by the terminal device in the embodiments in FIG. 5, FIG. 6, FIG. 8, FIG. 10, and FIG. 12, for example, step 501, step 502, and step 503 in the embodiment shown in FIG. 5, step 602, step 603, and step 604 in the embodiment shown in FIG. 6, step 802, step 803, and step 804 in the embodiment shown in FIG. 8, step 1002, step 1003, and step 1004 in the embodiment shown in FIG. 10, and step 1201, step 1203, and step 1205 in the embodiment shown in FIG. 12; and/or another process used to support the technology described in this specification. The processing module 1710 is configured to perform all operations other than the sending and receiving operations performed by the terminal device in the embodiments in FIG. 5, FIG. 6, FIG. 8, FIG. 10, and FIG. 12, for example, step 1202 in the embodiment shown in FIG. 12. The processing module 1710 may be configured to generate precoding indication information.

In some possible implementations, the communication apparatus 1700 can correspondingly implement operations and functions of the terminal device in the foregoing method embodiments. For example, the communication apparatus 1700 may be a terminal device, or may be a component (for example, a chip or a circuit) used in the terminal device. For example, the transceiver module 1720 may be configured to perform all receiving or sending operations performed by the terminal device in the embodiment shown in FIG. 13, for example, step 1301, step 1303, and step 1305 in the embodiment shown in FIG. 13; and/or another process used to support the technology described in this specification. The processing module 1710 is configured to perform all operations other than the sending and receiving operations performed by the terminal device in the embodiment in FIG. 13, for example, step 1304 in the embodiment shown in FIG. 13.

In some possible implementations, the communication apparatus 1700 can correspondingly implement operations and functions of the access network device in the foregoing method embodiments. For example, the communication apparatus 1700 may be an access network device, or may be a component (for example, a chip or a circuit) used in the access network device. For example, the transceiver module 1720 may be configured to perform all receiving or sending operations performed by the terminal device in the embodiment in FIG. 13, for example, step 1301, step 1303, and step 1305 in the embodiment in FIG. 13; and/or another process used to support the technology described in this specification. The processing module 1710 is configured to perform all operations other than the sending and receiving operations performed by the terminal device in the embodiment in FIG. 13, for example, step 1302 in the embodiment shown in FIG. 13.

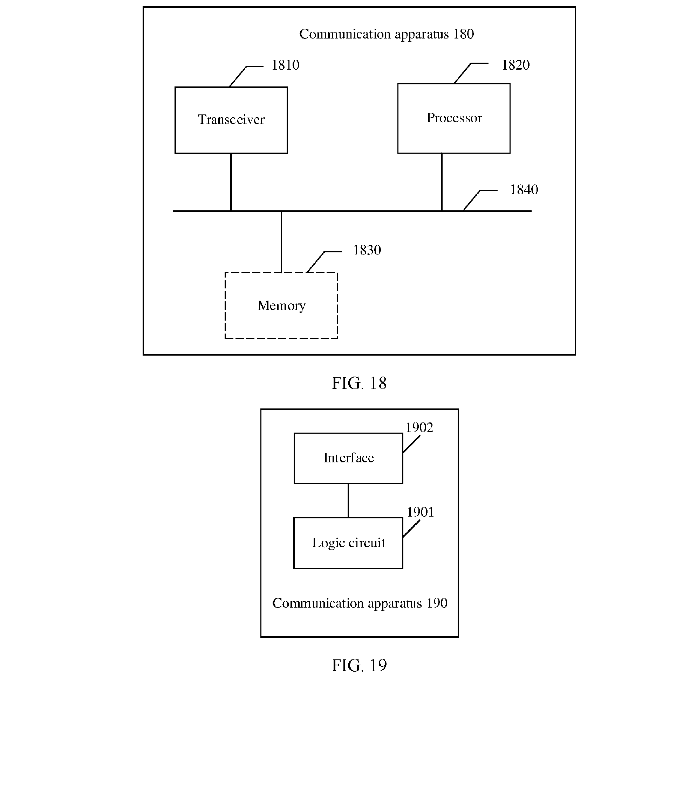

FIG. 18 is a diagram of a structure of another communication apparatus 180 according to an embodiment of this application. The communication apparatus in FIG. 18 may be the foregoing terminal device. The communication apparatus in FIG. 18 may be the foregoing access network device.

As shown in FIG. 18, the communication apparatus 180 includes at least one processor 1820 and a transceiver 1810.

In some other embodiments of this application, the processor 1820 and the transceiver 1810 may be configured to perform the functions, the operations, or the like performed by the terminal device. For example, the processor 1820 may perform one or more of the following operations: step 501 and step 503 in the embodiment shown in FIG. 5, step 601 in the embodiment shown in FIG. 6, step 801 in the embodiment shown in FIG. 8, step 1001 in the embodiment shown in FIG. 10, and step 1204 in the embodiment shown in FIG. 12. For example, the transceiver 1810 may perform one or more of the following operations: step 501, step 502, and step 503 in the embodiment shown in FIG. 5, step 602, step 603, and step 604 in the embodiment shown in FIG. 6, step 802, step 803, and step 804 in the embodiment shown in FIG. 8, step 1002, step 1003, and step 1004 in the embodiment shown in FIG. 10, and step 1201, step 1203, and step 1205 in the embodiment shown in FIG. 12.

In some embodiments of this application, the processor 1820 and the transceiver 1810 may be configured to perform the functions, the operations, or the like performed by the access network device. For example, the processor 1820 may perform one or more of the following operations: step 1202 in the embodiment shown in FIG. 12. For example, the transceiver 1810 may perform one or more of the following operations: step 501, step 502, and step 503 in the embodiment shown in FIG. 5, step 602, step 603, and step 604 in the embodiment shown in FIG. 6, step 802, step 803, and step 804 in the embodiment shown in FIG. 8, step 1002, step 1003, and step 1004 in the embodiment shown in FIG. 10, and step 1201, step 1203, and step 1205 in the embodiment shown in FIG. 12.

In some embodiments of this application, the processor 1820 and the transceiver 1810 may be configured to perform the functions, the operations, or the like performed by the terminal device. For example, the processor 1820 may perform one or more of the following operations: step 1304 in the embodiment shown in FIG. 13. The transceiver 1810 may perform one or more of the following operations: step 1301, step 1303, and step 1305 in the embodiment shown in FIG. 13.

In some embodiments of this application, the processor 1820 and the transceiver 1810 may be configured to perform the functions, the operations, or the like performed by the access network device. For example, the processor 1820 may perform one or more of the following operations: step 1302 in the embodiment shown in FIG. 13. The transceiver 1810 may perform one or more of the following operations: step 1301, step 1303, and step 1305 in the embodiment shown in FIG. 13.

The transceiver 1810 is configured to communicate with another device/apparatus through a transmission medium. The processor 1820 receives and sends data and/or signaling via the transceiver 1810, and is configured to implement the methods in the foregoing method embodiments. The processor 1820 may implement the function of the processing module 1710, and the transceiver 1810 may implement the function of the transceiver module 1720.

Optionally, the communication apparatus 180 may further include at least one memory 1830, configured to store program instructions and/or data. The memory 1830 is coupled to the processor 1820. The coupling in this embodiment of this application may be an indirect coupling or a communication connection between apparatuses, units, or modules in an electrical form, a mechanical form, or another form, and is used for information exchange between the apparatuses, the units, or the modules. The processor 1820 may cooperate with the memory 1830. The processor 1820 may execute the program instructions stored in the memory 1830. At least one of the at least one memory may be included in a processor.

A specific connection medium between the transceiver 1810, the processor 1820, and the memory 1830 is not limited in this embodiment of this application. In this embodiment of this application, the memory 1830, the processor 1820, and the transceiver 1810 are connected through a bus 1840 in FIG. 18. The bus is represented with a bold line in FIG. 18. A manner of connection between other components is merely an example for description, and is not limited thereto. The bus may be classified into an address bus, a data bus, a control bus, and the like. For ease of representation, only one bold line is used to represent the bus in FIG. 18, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logic block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

FIG. 19 is a diagram of a structure of another communication apparatus 190 according to an embodiment of this application. As shown in FIG. 19, the communication apparatus shown in FIG. 19 includes a logic circuit 1901 and an interface 1902. A processing module 1910 in FIG. 19 may be implemented by using the logic circuit 1901, and a transceiver module 1920 in FIG. 19 may be implemented by using the interface 1902. The logic circuit 1901 may be a chip, a processing circuit, an integrated circuit, a system on chip (system on chip, SoC), or the like, and the interface 1902 may be a communication interface, an input/output interface, or the like. In this embodiment of this application, the logic circuit and the interface may be coupled to each other. A specific manner of connection between the logic circuit and the interface is not limited in this embodiment of this application.

In some embodiments of this application, the logic circuit and the interface may be configured to perform the functions, the operations, or the like performed by the access network device.

In some other embodiments of this application, the logic circuit and the interface may be configured to perform the functions, the operations, or the like performed by the terminal device.

This application further provides a computer-readable storage medium. The computer-readable storage medium stores computer code. When the computer code is run on a computer, the computer is enabled to perform the methods in the foregoing embodiments.

This application further provides a computer program product. The computer program product includes computer code or a computer program. When the computer code or the computer program is run on a computer, the earlier synchronization method in the foregoing embodiment is performed.

This application further provides a communication system, including the foregoing terminal device and the foregoing access network device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   sending, by a terminal device, an uplink reference signal to an access network device based on a sending pattern, wherein an uplink reference signal resource of the uplink reference signal comprises N ports, there are at least two groups of ports in the N ports in the sending pattern, each group of ports corresponds to a same time-frequency resource, different groups of ports respectively correspond to different time-frequency resources, the N ports in the sending pattern are carried on two or more orthogonal frequency division multiplexing OFDM symbols, or the N ports in the sending pattern are carried on two or more frequency domain combs and one OFDM symbol, and N is an integer greater than 4; and
   receiving, by the terminal device, precoding indication information from the access network device, wherein the precoding indication information indicates precoding for transmitting uplink data, the precoding indication information is obtained by the access network device based on the uplink reference signal, and rows of a matrix corresponding to the precoding are in one-to-one correspondence with the N ports.

2. The method according to claim 1, wherein the uplink reference signal is a channel sounding reference signal SRS, the uplink reference signal resource is an SRS resource, the uplink data is carried on a physical uplink shared channel PUSCH or a physical uplink control channel PUCCH, and N is 8; and
   the terminal device maps the uplink data to antenna ports based on the precoding, wherein a quantity of the antenna ports is the same as a quantity of ports in the SRS resource, and the antenna ports are in one-to-one correspondence with the ports in the SRS resource.

3. The method according to claim 1 or 2, wherein N is 8, and the N ports in the sending pattern are carried on two frequency domain combs whose frequency domain comb numbers are 2 and two OFDM symbols, and two ports located on a same frequency domain comb and OFDM symbol correspond to two different cyclic shift CS values; the N ports in the sending pattern are carried on one frequency domain comb whose frequency domain comb number is 2 and two OFDM symbols, and four ports located on a same frequency domain comb and OFDM symbol correspond to four different CS values; or the N ports in the sending pattern are carried on two frequency domain combs whose frequency domain comb numbers are 2 and one OFDM symbol, and four ports located on a same frequency domain comb and OFDM symbol correspond to four different CS values.

4. The method according to claim 3, wherein the method further comprises:
   determining, by the terminal device, the sending pattern from two or more patterns based on a CS reference value indicator that is of the uplink reference signal and that is comprised in configuration information of the uplink reference signal resource.

5. The method according to claim 4, wherein the configuration information further comprises a comb location indicator $\overline{k}_{TC}$ and a frequency domain comb number $K_{TC}$ that are of the uplink reference signal, and the two or more patterns comprise at least two of a first pattern, a second pattern, and a third pattern;

   in the first pattern, a comb corresponding to a first port set of the N ports is $(\overline{k}_{TC} + K_{TC}/2) \bmod K_{TC}$, a comb corresponding to a second port set of the N ports is $\overline{k}_{TC}$, an index of an OFDM symbol corresponding to two ports in the first port set is l, an OFDM index corresponding to the other two ports in the first port set is (l+n), an OFDM index corresponding to two ports in the second port set is l, an index of an OFDM symbol corresponding to the other two ports in the second port set is (l+n), n is an integer greater than or equal to 1, and l is an integer greater than or equal to 0;
   in the second pattern, a comb corresponding to a first port set and a second port set of the N ports is $\overline{k}_{TC}$, an index of an OFDM symbol corresponding to the first port set is l, an index of an OFDM symbol corresponding to the second port set is (l+n), n is an integer greater than or equal to 1, and l is an integer greater than or equal to 0;
   in the third pattern, a comb corresponding to a first port set of the N ports is $(\overline{k}_{TC} + K_{TC}/2) \bmod K_{TC}$, a comb corresponding to a second port set of the N ports is $\overline{k}_{TC}$, an index of an OFDM symbol corresponding to the first port set and the second port set is l, and l is an integer greater than or equal to 0; and

ports comprised in the first port set are different from ports comprised in the second port set.

6. The method according to claim 1 or 2, wherein N is 8, and the N ports in the sending pattern are carried on two frequency domain combs whose frequency domain comb numbers are 4 and two OFDM symbols, and two ports located on a same frequency domain comb and OFDM symbol correspond to two different CS values; the N ports in the sending pattern are carried on one frequency domain comb whose frequency domain comb number is 4 and two OFDM symbols, and four ports located on a same frequency domain comb and OFDM symbol correspond to four different CS values; the N ports in the sending pattern are carried on two frequency domain combs whose frequency domain comb numbers are 4 and one OFDM symbol, and four ports located on a same frequency domain comb and OFDM symbol correspond to four different CS values; or the N ports in the sending pattern are carried on four frequency domain combs whose frequency domain comb numbers are 4 and one OFDM symbol, and two ports located on a same frequency domain comb and OFDM symbol correspond to two different CS values.

7. The method according to claim 6, wherein the method further comprises:
determining, by the terminal device, the sending pattern from two or more patterns based on a CS reference value indicator in configuration information.

8. The method according to claim 7, wherein the configuration information further comprises a comb location indicator $\overline{k}_{TC}$ and a frequency domain comb number $K_{TC}$, and the two or more patterns comprise at least two of a first pattern, a second pattern, a third pattern, and a fourth pattern;

in the first pattern, a comb corresponding to a first port set of the N ports is $(\overline{k}_{TC} + K_{TC}/2) \bmod K_{TC}$, a comb corresponding to a second port set of the N ports is $\overline{k}_{TC}$, an index of an OFDM symbol corresponding to two ports in the first port set is l, an OFDM index corresponding to the other two ports in the first port set is (l+n), an OFDM index corresponding to two ports in the second port set is l, an index of an OFDM symbol corresponding to the other two ports in the second port set is (l+n), n is an integer greater than or equal to 1, and l is an integer greater than or equal to 0;
in the second pattern, a comb corresponding to a first port set and a second port set of the N ports is $\overline{k}_{TC}$, an index of an OFDM symbol corresponding to the first port set is l, an index of an OFDM symbol corresponding to the second port set is (l+n), and l and n are integers greater than or equal to 1;
in the third pattern, a comb corresponding to a first port set of the N ports is $(\overline{k}_{TC} + K_{TC}/2) \bmod K_{TC}$, a comb corresponding to a second port set of the N ports is $\overline{k}_{TC}$, an index of an OFDM symbol corresponding to the first port set and the second port set is l, and l is an integer greater than or equal to 1;
in the fourth pattern, combs respectively corresponding to four port sets of the N ports are $(\overline{k}_{TC} + K_{TC}/2) \bmod K_{TC}$, $(\overline{k}_{TC} + K_{TC}/4) \bmod K_{TC}$, $(\overline{k}_{TC} + 3 * K_{TC}/4) \bmod K_{TC}$, and $\overline{k}_{TC}$, an index of an OFDM symbol corresponding to the four port sets is l, and l is an integer greater than or equal to 1; and
ports comprised in the first port set are different from ports comprised in the second port set.

9. The method according to claim 6, wherein the method further comprises:

determining, by the terminal device, the sending pattern from two or more patterns based on a CS reference value indicator, a maximum CS indicator, and a quantity of symbols that are comprised in configuration information of the uplink reference signal resource, wherein the two or more patterns comprise at least two of a first pattern, a second pattern, a third pattern, and a fourth pattern, and the quantity of symbols indicates a quantity of OFDM symbols that carry the N ports;
in the first pattern, a comb corresponding to a first port set of the N ports is $(\overline{k}_{TC} + K_{TC}/2) \bmod K_{TC}$, a comb corresponding to a second port set of the N ports is $\overline{k}_{TC}$, an index of an OFDM symbol corresponding to two ports in the first port set is l, an OFDM index corresponding to the other two ports in the first port set is (l+n), an OFDM index corresponding to two ports in the second port set is l, an index of an OFDM symbol corresponding to the other two ports in the second port set is (l+n), n is an integer greater than or equal to 1, and l is an integer greater than or equal to 0;
in the second pattern, a comb corresponding to a first port set and a second port set of the N ports is $\overline{k}_{TC}$, an index of an OFDM symbol corresponding to the first port set is l, an index of an OFDM symbol corresponding to the second port set is (l+n), and l and n are integers greater than or equal to 1;
in the third pattern, a comb corresponding to a first port set of the N ports is $(\overline{k}_{TC} + K_{TC}/2) \bmod K_{TC}$, a comb corresponding to a second port set of the N ports is $\overline{k}_{TC}$, an index of an OFDM symbol corresponding to the first port set and the second port set is l, and l is an integer greater than or equal to 1;

in the fourth pattern, combs respectively corresponding to four port sets of the N ports are $(\overline{k}_{TC} + K_{TC}/2)$ mod $K_{TC}$, $(\overline{k}_{TC} + K_{TC}/4)$ mod $K_{TC}$, $(\overline{k}_{TC} + 3 * K_{TC}/4)$ mod $K_{TC}$, and $\overline{k}_{TC}$, an index of an OFDM symbol corresponding to the four port sets is l, and l is an integer greater than or equal to 1; and

ports comprised in the first port set are different from ports comprised in the second port set.

10. The method according to claim 1 or 2, wherein N is 8, and the N ports in the sending pattern are carried on two frequency domain combs whose frequency domain comb numbers are 8 and two OFDM symbols, and two ports located on a same frequency domain comb and OFDM symbol correspond to two different CS values; the N ports in the sending pattern are carried on one frequency domain comb whose frequency domain comb number is 8 and two OFDM symbols, and four ports located on a same frequency domain comb and OFDM symbol correspond to four different CS values; the N ports in the sending pattern are carried on two frequency domain combs whose frequency domain comb numbers are 8 and one OFDM symbol, and four ports located on a same frequency domain comb and OFDM symbol correspond to four different CS values; or the N ports in the sending pattern are carried on four frequency domain combs whose frequency domain comb numbers are 8 and one OFDM symbol, and two ports located on a same frequency domain comb and OFDM symbol correspond to two different CS values.

11. The method according to claim 10, wherein the method further comprises:
determining, by the terminal device, the sending pattern from two or more patterns based on a CS reference value indicator and a maximum CS indicator that are of the uplink reference signal and that are comprised in configuration information of the uplink reference signal resource.

12. The method according to claim 11, wherein the configuration information further comprises a comb location indicator $\overline{k}_{TC}$ and a frequency domain comb number $K_{TC}$, and the two or more patterns comprise at least two of a first pattern, a second pattern, a third pattern, and a fourth pattern;

in the first pattern, a comb corresponding to a first port set of the N ports is $(\overline{k}_{TC} + K_{TC}/2)$ mod $K_{TC}$, a comb corresponding to a second port set of the N ports is $\overline{k}_{TC}$, an index of an OFDM symbol corresponding to two ports in the first port set is l, an OFDM index corresponding to the other two ports in the first port set is (l+n), an OFDM index corresponding to two ports in the second port set is l, an index of an OFDM symbol corresponding to the other two ports in the second port set is (l+n), n is an integer greater than or equal to 1, and l is an integer greater than or equal to 0;
in the second pattern, a comb corresponding to a first port set and a second port set of the N ports is $\overline{k}_{TC}$, an index of an OFDM symbol corresponding to the first port set is l, an index of an OFDM symbol corresponding to the second port set is (l+n), and l and n are integers greater than or equal to 1;
in the third pattern, a comb corresponding to a first port set of the N ports is $(\overline{k}_{TC} + K_{TC}/2)$ mod $K_{TC}$, a comb corresponding to a second port set of the N ports is $\overline{k}_{TC}$, an index of an OFDM symbol corresponding to the first port set and the second port set is l, and l is an integer greater than or equal to 1;
in the fourth pattern, combs respectively corresponding to four port sets of the N ports are $(\overline{k}_{TC} + K_{TC}/2)$ mod $K_{TC}$, $(\overline{k}_{TC} + K_{TC}/4)$ mod $K_{TC}$, $(\overline{k}_{TC} + 3 * K_{TC}/4)$ mod $K_{TC}$, and $\overline{k}_{TC}$, an index of an OFDM symbol corresponding to the four port sets is l, and l is an integer greater than or equal to 1; and
ports comprised in the first port set are different from ports comprised in the second port set.

13. The method according to claim 10, wherein the method further comprises:

determining, by the terminal device, the sending pattern from two or more patterns based on a CS reference value indicator, a maximum CS indicator, and a quantity of symbols that are comprised in configuration information of the uplink reference signal resource, wherein the two or more patterns comprise at least two of a first pattern, a second pattern, a third pattern, and a fourth pattern, and the quantity of symbols indicates a quantity of OFDM symbols that carry the N ports;
in the first pattern, a comb corresponding to a first port set of the N ports is $(\overline{k}_{TC} + K_{TC}/2)$ mod $K_{TC}$, a comb corresponding to a second port set of the N ports is $k_{TC}$, an index of an OFDM symbol corresponding to two ports in the first port set is l, an OFDM index corresponding to the other two ports in the first port set is (l+n), an OFDM index corresponding to two ports in the second port set is l, an index of an OFDM symbol corresponding to the other two ports in the second port set is (l+n), n is an integer greater than or equal to 1, and l is an integer greater than or equal to 0;
in the second pattern, a comb corresponding to a first port set and a second port set of the N ports is $\overline{k}_{TC}$, an index of an OFDM symbol corresponding to the first port set is l, an index of an OFDM symbol corresponding to the second port set is (l+n), and l and n are integers greater than or equal to 1;

in the third pattern, a comb corresponding to a first port set of the N ports is $(\overline{k}_{TC} + K_{TC}/2) \bmod K_{TC}$, a comb corresponding to a second port set of the N ports is $\overline{k}_{TC}$, an index of an OFDM symbol corresponding to the first port set and the second port set is l, and l is an integer greater than or equal to 1;

in the fourth pattern, combs respectively corresponding to four port sets of the N ports are $(\overline{k}_{TC} + K_{TC}/2) \bmod K_{TC}$, $(\overline{k}_{TC} + K_{TC}/4) \bmod K_{TC}$, $(\overline{k}_{TC} + 3 * K_{TC}/4) \bmod K_{TC}$, and $\overline{k}_{TC}$, an index of an OFDM symbol corresponding to the four port sets is l, and l is an integer greater than or equal to 1; and

ports comprised in the first port set are different from ports comprised in the second port set.

14. The method according to any one of claims 1 to 13, wherein

a transmit power of the uplink reference signal is determined based on the sending pattern; and when the sending pattern indicates that the N ports are carried on $N_{symb}^{SRS}$ OFDM symbols, a maximum transmit power of each port does not exceed $P_{CMAX} \times N_{symb}^{SRS}/N_{ap}^{SRS}$, $P_{CMAX}$ is a maximum transmit power configured for the terminal device, $N_{symb}^{SRS}$ is an integer greater than 1, and $N_{ap}^{SRS}$ is equal to N.

15. A communication method, comprising:

receiving, by an access network device, an uplink reference signal sent by a terminal device, wherein an uplink reference signal resource of the uplink reference signal comprises N ports, the N ports are carried on two or more orthogonal frequency division multiplexing OFDM symbols, or the N ports are carried on two or more frequency domain combs and one OFDM symbol, and N is an integer greater than 4; and

sending, by the access network device, precoding indication information to the terminal device, wherein the precoding indication information indicates precoding for transmitting uplink data of the terminal device, the precoding indication information is obtained by the access network device based on the uplink reference signal, and rows of a matrix corresponding to the precoding are in one-to-one correspondence with the N ports.

16. The method according to claim 15, wherein the uplink reference signal is an SRS, the uplink reference signal resource is an SRS resource, the uplink data is carried on a physical uplink shared channel PUSCH or a physical uplink control channel PUCCH, N is 8, the precoding is used by the terminal device to map the uplink data to antenna ports, a quantity of the antenna ports is the same as a quantity of ports in the SRS resource, and the antenna ports are in one-to-one correspondence with the ports in the SRS resource.

17. The method according to claim 15 or 16, wherein N is 8, and the N ports are carried on two frequency domain combs whose frequency domain comb numbers are 2 and two OFDM symbols, and two ports located on a same frequency domain comb and OFDM symbol correspond to two different CS values; the N ports are carried on one frequency domain comb whose frequency domain comb number is 2 and two OFDM symbols, and four ports located on a same frequency domain comb and OFDM symbol correspond to four different CS values; or the N ports are carried on two frequency domain combs whose frequency domain comb numbers are 2 and one OFDM symbol, and four ports located on a same frequency domain comb and OFDM symbol correspond to four different CS values.

18. The method according to claim 15 or 16, wherein N is 8, and the N ports are carried on two frequency domain combs whose frequency domain comb numbers are 4 and two OFDM symbols, and two ports located on a same frequency domain comb and OFDM symbol correspond to two different CS values; the N ports are carried on one frequency domain comb whose frequency domain comb number is 4 and two OFDM symbols, and four ports located on a same frequency domain comb and OFDM symbol correspond to four different CS values; the N ports are carried on two frequency domain combs whose frequency domain comb numbers are 4 and one OFDM symbol, and four ports located on a same frequency domain comb and OFDM symbol correspond to four different CS values; or the N ports are carried on four frequency domain combs whose frequency domain comb numbers are 4 and one OFDM symbol, and two ports located on a same frequency domain comb and OFDM symbol correspond to two different CS values.

19. The method according to claim 15 or 16, wherein N is 8, and the N ports in a sending pattern are carried on two frequency domain combs whose frequency domain comb numbers are 8 and two OFDM symbols, and two ports located on a same frequency domain comb and OFDM symbol correspond to two different CS values; the N ports in a sending pattern are carried on one frequency domain comb whose frequency domain comb number is 8 and two OFDM symbols, and four ports located on a same frequency domain comb and OFDM symbol correspond to four different CS values; the N ports in a sending pattern are carried on two frequency domain combs whose frequency domain comb numbers are 8 and one OFDM symbol, and four ports located on a same frequency domain comb and OFDM symbol correspond to four different CS values; or the N ports in a sending pattern are carried on four frequency domain combs whose frequency domain comb numbers are 8 and one OFDM symbol, and two ports located on a same frequency domain comb and OFDM symbol correspond to two different CS values.

20. The method according to any one of claims 15 to 19, wherein a transmit power of the uplink reference signal is determined by the terminal device based on the sending pattern, when the sending pattern indicates that the N ports are carried on $N_{symb}^{SRS}$ OFDM symbols, a maximum transmit power of each port does not exceed $P_{\text{CMAX}} \times N_{symb}^{SRS}/N_{\text{ap}}^{SRS}$, $P_{\text{CMAX}}$ is a maximum transmit power configured for the terminal device, $N_{symb}^{SRS}$ is an integer greater than 1, and $N_{\text{ap}}^{SRS}$ is equal to N.

21. A communication apparatus, comprising a module or a unit configured to implement the method according to any one of claims 1 to 14.

22. A communication apparatus, comprising a module or a unit configured to implement the method according to any one of claims 15 to 20.

23. A computer-readable storage medium, wherein the computer-readable storage medium stores a computer program, the computer program comprises program instructions, and when the program instructions are executed by a processor, the method according to any one of claims 1 to 14 is performed, or the method according to any one of claims 15 to 20 is performed.

24. A communication apparatus, comprising a processor, wherein the processor is coupled to a memory, the memory stores instructions, and the processor is configured to execute the instructions, so that the communication apparatus performs the method according to any one of claims 1 to 14, or the communication apparatus performs the method according to any one of claims 15 to 20.

FIG. 1

FIG. 2

| | |
|---|---|
| Comb 1 | 0, 1 |
| Comb 2 | 2, 3 |
| Comb 3 | 4, 5 |
| Comb 4 | 6, 7 |

PA:

14 dBm    17 dBm

| |
|---|
| 0, 1 |
| 2, 3 |

PA:

17 dBm

FIG. 3

Access network device

Terminal device

Terminal device

FIG. 4

Terminal device

Access network device

501

Send an uplink reference signal to the access network device based on a sending pattern

Uplink reference signal

Precoding indication information

502

503

Map uplink data to antenna ports based on precoding

Uplink data

FIG. 5

Terminal device

Access network device

601

Determine a sending pattern from two or more patterns based on a CS reference value indicator that is of an uplink reference signal and that is included in configuration information of an uplink reference signal resource, where a comb number corresponding to the two or more patterns is 2

602

Send the uplink reference signal to the access network device based on the sending pattern

Uplink reference signal

Precoding indication information

603

604

Map uplink data to antenna ports based on precoding

Uplink data

FIG. 6

701 702 703

FIG. 7

Terminal device

Access network device

801

Determine a sending pattern from two or more patterns based on a CS reference value indicator that is of an uplink reference signal and that is included in configuration information of an uplink reference signal resource, where a comb number corresponding to the two or more patterns is 4

802

Send the uplink reference signal to the access network device based on the sending pattern

Uplink reference signal

Precoding indication information

803

804

Map uplink data to antenna ports based on precoding

Uplink data

FIG. 8

901          902          903          904

| 0 2 | 4 6 |
| 1 3 | 5 7 |
| | |
| | |
| | |
| | |
| 1 | 1+n |

| 1 3 5 7 | 0 2 4 6 |
| | |
| | |
| | |
| | |
| | |
| 1 | 1+n |

| 0 2 4 6 |
| 1 3 5 7 |
| |
| |
| |
| 1 |

| 0 4 |
| 2 6 |
| 1 5 |
| 3 7 |
| |
| |
| 1 |

FIG. 9

Terminal device                    Access network device

1001

Determine a sending pattern from two or more patterns based on a CS reference value indicator that is of an uplink reference signal and that is included in configuration information of an uplink reference signal resource, where a comb number corresponding to the two or more patterns is 2

1002

Send the uplink reference signal to the access network device based on the sending pattern

Uplink reference signal

Precoding indication information          1003

1004

Map uplink data to antenna ports based on precoding

Uplink data

FIG. 10

FIG. 11

FIG. 12

Terminal device

Access network device

1301

Send a plurality of uplink reference signals based on configuration information of a plurality of uplink reference signal resources

The plurality of uplink reference signals

1302

Generate precoding and transport layer quantity indication information based on the plurality of uplink reference signals

Precoding and transport layer quantity indication information

1303

1304

Determine, based on the precoding and transport layer quantity indication information, phases and a quantity of transport streams of transmit antennas for transmitting uplink data on a PUSCH

1305

Map the uplink data to antenna ports based on precoding

Uplink data

FIG. 13

SRS resource 1

SRS resource 2

SRS resource 4

SRS resource 3

FIG. 14

FIG. 15

FIG. 16

FIG. 17

Communication apparatus 180

Transceiver 1810

Processor 1820

1840

Memory 1830

FIG. 18

Interface 1902

Logic circuit 1901

Communication apparatus 190

FIG. 19

# INTERNATIONAL SEARCH REPORT

| International application No. |
| --- |
| **PCT/CN2023/083109** |

| A. | CLASSIFICATION OF SUBJECT MATTER |
| --- | --- |

H04L 5/00(2006.01)i

According to International Patent Classification (IPC) or to both national classification and IPC

| B. | FIELDS SEARCHED |
| --- | --- |

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNTXT, ENTXT, WPABS, VEN, 3GPP, CNKI: 上行, 参考信号, 端口, 组, 时域, 频域, 时频, 资源, 梳齿, 预编码, 指示, OFDM, uplink, SRS, port, group, time, frequency, resource, comb, precode, notification

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 109391395 A (SONY CORPORATION) 26 February 2019 (2019-02-26) description, paragraphs [0094]-[0106] | 1, 2, 14-16, 20-24 |
| A | CN 109391395 A (SONY CORPORATION) 26 February 2019 (2019-02-26) entire document | 3-13, 17-19 |
| A | CN 107294686 A (ZTE CORP.) 24 October 2017 (2017-10-24) entire document | 1-24 |
| A | CN 109327290 A (RESEARCH INSTITUTE OF CHINA MOBILE COMMUNICATIONS CORPORATION et al.) 12 February 2019 (2019-02-12) entire document | 1-24 |
| A | US 2020178281 A1 (PANASONIC INTELLECTUAL PROPERTY CORPORATION OF AMERICA) 04 June 2020 (2020-06-04) entire document | 1-24 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 August 2023** | **08 August 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
**Information on patent family members**

International application No.

**PCT/CN2023/083109**

| Patent document cited in search report | | | Publication date (day/month/year) | Patent family member(s) | | | Publication date (day/month/year) |
|---|---|---|---|---|---|---|---|
| CN | 109391395 | A | 26 February 2019 | JP | 2023029933 | A | 07 March 2023 |
| | | | | EP | 3667985 | A1 | 17 June 2020 |
| | | | | EP | 3667985 | A4 | 12 August 2020 |
| | | | | KR | 20200035916 | A | 06 April 2020 |
| | | | | US | 2021297217 | A1 | 23 September 2021 |
| | | | | US | 11632212 | B2 | 18 April 2023 |
| | | | | US | 2020220676 | A1 | 09 July 2020 |
| | | | | US | 11050537 | B2 | 29 June 2021 |
| | | | | JP | 2020529775 | A | 08 October 2020 |
| | | | | WO | 2019029428 | A1 | 14 February 2019 |
| | | | | AU | 2018314798 | A1 | 26 March 2020 |
| CN | 107294686 | A | 24 October 2017 | US | 2019215110 | A1 | 11 July 2019 |
| | | | | US | 10819486 | B2 | 27 October 2020 |
| | | | | WO | 2017167304 | A1 | 05 October 2017 |
| CN | 109327290 | A | 12 February 2019 | | None | | |
| US | 2020178281 | A1 | 04 June 2020 | JP | 2020533832 | A | 19 November 2020 |
| | | | | JP | 7197562 | B2 | 27 December 2022 |
| | | | | US | 11330614 | B2 | 10 May 2022 |
| | | | | EP | 3665797 | A1 | 17 June 2020 |
| | | | | EP | 3665797 | A4 | 24 March 2021 |
| | | | | WO | 2019028827 | A1 | 14 February 2019 |
| | | | | US | 2022240285 | A1 | 28 July 2022 |

Form PCT/ISA/210 (patent family annex) (July 2022)

**REFERENCES CITED IN THE DESCRIPTION**

**Patent documents cited in the description**

- CN 202210336427